Europäisches Patentamt

European Patent Office

Office européen des brevets

(19)

(11) **EP 1 084 536 B1**

(12) ## EUROPEAN PATENT SPECIFICATION

(45) Date of publication and mention
of the grant of the patent:
**22.01.2003 Bulletin 2003/04**

(51) Int Cl.⁷: **H04B 7/08**, H04L 25/03,
H04L 1/06

(21) Application number: **99927914.4**

(22) Date of filing: **03.06.1999**

(86) International application number:
**PCT/EP99/03945**

(87) International publication number:
**WO 99/065160 (16.12.1999 Gazette 1999/50)**

(54) **SPATIO-TEMPORAL EQUALISATION USING CHOLESKY FACTORISATION AND SYSTOLIC ARRAYS**

ZEITLICHE UND RÄUMLICHE ENTZERRUNG MITTELS CHOLESKISCHER FAKTORISIERUNG UND SYSTOLISCHEN MATRIZEN

EGALISATION SPATIO-TEMPORELLE PAR FACTORISATION DE CHOLESKY ET RESEAUX SYSTOLIQUES

(84) Designated Contracting States:
**DE FI FR IT SE**

(30) Priority: **05.06.1998 IT MI981280**

(43) Date of publication of application:
**21.03.2001 Bulletin 2001/12**

(73) Proprietor: **Siemens Mobile Communications
S.p.A.
20126 Milano (IT)**

(72) Inventors:
 • **PICCIRIELLO, Agostino
   I-20131 Milano (IT)**
 • **FANFONI, Sabina
   I-20136 Milano (IT)**
 • **SPAGNOLINI, Umberto
   I-20126 Milano (IT)**
 • **PAROLARI, Sergio
   I-20133 Milano (IT)**

(74) Representative: **Giustini, Delio
   Siemens Information and
   Communication Networks S.p.A.
   Palazzo Gorky
   Via Monfalcone, 1
   20092 Cinisello Balsamo (IT)**

(56) References cited:
   EP-A- 0 793 359          WO-A-98/24192
   GB-A- 2 219 106

 • WANG, POOR: "Adaptive joint multiuser
   detection and channel estimation in multipath
   fading CDMA channels" WIRELESS
   NETWORKS, vol. 4, no. 6, October 1998
   (1998-10), page 453-470 XP000791610 NL ISSN:
   1022-0038
 • MARTONE: "Complex scaled tangent rotations
   (CSTAR) for fast space-time adaptive
   equalization of wireless TDMA" IEEE
   TRANSACTIONS ON COMMUNICATIONS, vol.
   46, no. 12, December 1998 (1998-12), pages
   1587-1591, XP002122250 nEW YORK, US ISSN:
   0090-6778
 • TIDESTAV, LINDSKOG: "Bootstrap
   equalization" IEEE 1998 INTERNATIONAL
   CONFERENCE ON UNIVERSAL PERSONAL
   COMMUNICATIONS , 5 - 9 October 1998, pages
   1221-1225 vol.2, XP002122251 New York, USA
   ISBN: 0-7803-5106-1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**FIELD OF THE INVENTION**

The present invention relates to the field of the cellular telephone systems and in particular it relates to a space and time, quick convergence equalization method, for the cancellation of stationary and non stationary isofrequential interferers, in signals received from array antennas of base transceiver stations of a cellular mobile radio. base system, and relevant systolic array equalizer. In particular, the invention refers to mobile systems employing a brief training sequence in transmission bursts.

In telephone mobile systems, the main limitation to the traffic capacity offered to the public service is represented by the scarce band available. Therefore, all technological solutions enabling to increase the above mentioned capacity, or spectral efficiency, maintaining a given quality of the service in a wide area are particularly appreciated. To this purpose, appropriate cellular coverage strategies have been developed, together with multiplexing techniques in FDMA frequency (Frequency Division Multiple Access), and/or in time TDMA (Time Division Multiple Access), and more recently in space SDMA (Space Division Multiple Access) thanks to the use of the so-called intelligent array antenna combined to the receivers.

The cellular coverage technique consists in dividing the service area in zones, called cells, each one served by its own base station BS (Base Station). Each cell avails of its own group of radio channels that can be reused in other duly spaced cells, in fact, the attenuation of radio signals is proportional to the distance with an exponent, or propagation coefficient, in general higher than 3. The whole of the cells employing the radio channels available to the system, without any reuse of the same, is called cluster of cells. Being the spectral efficiency inversely proportional to the cell area, microcellular systems are the most common approach to increase the spectral efficiency in high traffic density urban or suburban areas. As the cell area decreases, the problems associated to continuous handovers become more and more critical, consequently, mixed structures (microcells overlapped to umbrella macrocells) are generally preferred to simultaneously control quick mobile stations MS (Mobile Station) in scarcely populated areas, and slow mobile stations in high density areas.

In order to increase the spectral efficiency, a first approach as an alternative to the reduction of the cell dimension, consists in the reduction of the number of C cells per cluster, where C is also called cluster size, which is equivalent to increase the fraction of the total spectrum controlled by the single BS. This strategy is known as RCS (Reduced Cluster Size), whose theoretical limit is to render available the whole spectrum to all the cells, performing clusters of one cell only.

A second approach consists in allocating a higher number of users in the spectrum already available to the cell, allocating more mobiles on the same channel, characterized by the same carrier and same time slot and therefore, without any intervention of the cluster size. This second strategy is known as SCFR (Same Cell Frequency Reuse) and is based on the space division multiplexing SDMA within the cell. In practice, it is implemented in two different ways, the first one consisting in the division of the cell in smaller sectors through an arrangement of antennas with fixed radiation diagram (in general with 120° aperture), and a second and more advanced one, consisting in fitting the BS of relevant multibeam antennas, or synthetic aperture ones, that is capable to transmit and receive in the direction of mobile terminals with comparatively narrow directive beams; this implies that said beams must follow a generic mobile user moving in the azimuth plarie.

The formal difference between the use of an SCFR technique and the division of the cell itself in smaller sectors, resides in the capability to allocate the users in the relevant channels. Through sectorialization it is possible to manage more users on the same channel only if their position on the territory falls under different fixed sectors of radio coverage. In a scenario characterized by users in movement, this involves the need of continuous handovers. On the contrary, an SCFR structure is able to allocate more co-channel users in the same cell, without the need of partitioning the cell and have recourse to frequent handovers. Of course, even in this last case, the BS must be able to distinguish the co-channel users one from the other, in order to form appropriate radiation diagrams in receipt, each one capable to trace the relevant useful signal and reject the isofrequential interferers, corresponding to the remaining co-channel users simultaneously active within the same BS, and of course served by a same number of beamformers of the same BTS (Base Transceiver Station). As we shall see below, the discrimination between useful and co-channel interferers in GSM/DCS systems takes place availing of a training sequence made of 26 known symbols forming the midamble of the transmission. bursts, assuming to have assigned different training sequences scarcely correlated among them to different co-channel users. The above mentioned sequence is purposely foreseen for the extraction of the symbol synchronism for the estimate of the channel impulse response. In the case of co-channel users of the same cell, they are also synchronized among them, and therefore it is possible to locate the same through analysis of the training sequence only.

When adopting the RCS and SCFR strategies, it is absolutely necessary to avoid that co-channel interferers can worsen the quality of the demodulated signal, thus making vain the advantage of the higher capacity of enabled traffic. We want also underline that, in the systems employing an approach of the RCS type, the interference is due to the co-channel users of adjacent cells, while in systems employing the SCRF approach the interference is generated both by the co-channel users of the same cell, and by the co-channel users of adjacent cells.

The mobile radio channel has been studied for a long time, and different models have been proposed, consistently with the more frequent transmission environments, rural, urban, etc. From these studies it resulted that, due to the space and time dispersive nature of the radio channel, in addition to the interferers generated by co-channel users on the direct path, there are also those corresponding to the multiple paths.

Particular attention shall be paid to possible delayed echoes of the useful signal, since in some examples of the known art they are confined to the role of co-channel interferers, while in the embodiment according to the present invention the same are actually recognized as integral part of the useful signal.

Our attention shall be concentrated below, on base stations employing antenna arrays to implement the RCS or SCFR techniques, the latter also according to the more advanced SDMA technique, with dynamic assignment of the channels, or concurrently with the use of traditional techniques of fixed sharing of frequencies.

We shall also start from the assumption that the synchronization problem has already been solved, that is the acquisition method of the carrier synchronism is known as well as the position of the training sequence inside the burst.

## BACKGROUND ART

The nature of the mobile channel is such to cause a spatial dispersion (more arrival directions of echoes) and time dispersion (delay of echoes) of the power of the signal reaching each antenna. In a context characterized by propagation along multiple paths, it can be reasonably expected that the different paths of the signal reach an antenna array with different DOA. This characteristic of the mobile channel can be used to perform an equalization in the spatial dimension, it is possible for instance to filter only the maximum power path, or appropriately combine the signals impinging from different paths among them to cancel co-channel interferers. The equalization of time dispersion shall be considered hereafter.

In order to be able to effectively discriminate the useful from the different kinds of interfering signals, the array must be able to dynamically modify its own directivity function and insert some zeroes in its own radiation diagram in the directions of the interfering signals. We shall give below the description of some interfering implemented according to the known art, highlighting time by time the relevant drawbacks. The straightforward description, which however nothing detracts to the general character of the same, is limited to a linear and uniform array of antennas, called also ULA (Uniform Linear Array).

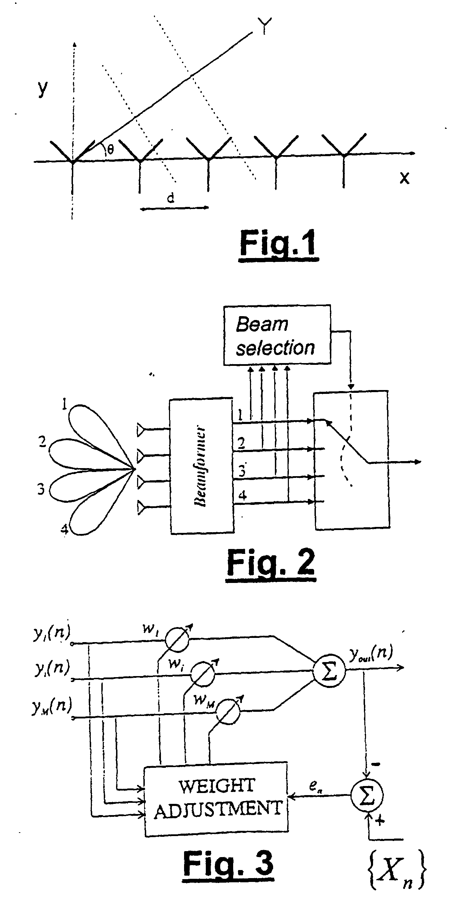

Making reference to fig. 1, the array consists of M equal aligned and equispaced elements. The separation between adjacent elements is d. For narrow band signals with frequency of the carrier fc, the corresponding wavelength can be defined as:

$$\lambda = \frac{c}{f_c} \tag{1}$$

where c is the propagation speed (c = 3.108 m/s in vacuum). The spacing d between the elements can be conveniently expressed according to the wavelength $\lambda$ as:

$$d = \Delta \times \lambda \tag{2}$$

$\Delta$ is thus the separation between the elements in terms of wavelength.

Assume later on, that a sole punctiform source is present, sufficiently distant to render the wave impinging on the array similar to a plane one. The direction indicated in fig. 1 by angle θ is the direction of arrival of the plane wave, hereinafter called DOA (Direction Of Arrival). Therefore we obtain that the relative delay τ between the signals received by two adjacent elements of the array is:

$$\tau = \frac{d\cos(\theta)}{c} \tag{3}$$

the real signal received on the k-th element of the array is then:

$$r_k(t) = s(t - \tau_k) = s(t - k\tau) \qquad (4)$$

It is assumed that the delays relevant to the different receivers along the array are small compared to the reciprocal of the signal band, so that the same can be approximated with opportune phase variations of the complex envelope $\tilde{r}_k(t)$.

Therefore it results:

$$\tilde{r}_k(t) \approx \tilde{s}(t) e^{-j2\pi f_c k\tau} \qquad (5)$$

the phase factor $2\pi f_c \tau$ can be written in different ways:

$$2\pi f_c \tau = 2\pi f_c \frac{d\cos(\theta)}{c} = 2\pi \frac{d}{\lambda}\cos(\theta) = 2\pi\Delta\cos(\theta) \qquad (6)$$

Finally, if $\tilde{s}(t)$ is the equivalent in base band of the signal received on the first element of the array, and defined a vector $\mathbf{a}(\theta)$ as:

$$\mathbf{a}(\theta) = \begin{bmatrix} 1 \\ e^{-j2\pi\Delta\cos(\theta)} \\ \cdots \\ e^{-j2\pi(M-1)\Delta\cos(\theta)} \end{bmatrix} \qquad (7)$$

we can group the signals received on the different elements of the array in a vector $\tilde{\mathbf{r}}(t)$ :

$$\tilde{\mathbf{r}}(t) \approx \mathbf{a}(\theta)\tilde{s}(t) \qquad (8)$$

Vector $\mathbf{a}(\theta)$ is the so-called steering vector, or array response vector, at an impinging plane wave with DOA equal to $\theta$.

In the background art, one of the first approaches to the problem of spatially selective reception and transmission is that of the so-called Switched Beams systems, that is those employing antenna arrays to form a fixed number of beams oriented in fixed directions. Beams so obtained, are selected, both in transmission and in reception, in order to employ the better oriented beam in the direction of the mobile terminal. Though easy to implement, these systems have the great disadvantage not to be able to effectively discriminate the interfering signals.

Making reference to fig.2, we notice a Switched Beams receiver including a four-element array, connected to the inputs of a Beamformer block, whose four outputs are connected, to the inputs of a beam selection block and to those of a selector, respectively. The output of the beam selection block is connected to a control input of the selector.

During the operation, the beamformer of fig. 2 is used to form a radiation diagram consisting of a fixed number B of beams in pre-set directions $\phi_b$ on the azimuth plane. The inputs of the beamformer are represented by the vector $\tilde{\mathbf{r}}(t)$ (hereinafter denoted with $\mathbf{y}(t)$), neglecting for convenience, the tilde sign of the complex envelope.

The beamformer consists of a matrix of coefficients

$$\left[ w_{m,b} \right]$$

defined as follows:

$$w_{m,b} = e^{-j2\pi(m-1)\Delta\cos(\phi_b)} \qquad (9)$$

with m = 1, 2,..., M and b = 1, 2, ..., B. The signal on the b-th output of the beamformer shall therefore be equal to:

$$y_{out_b}(t) = \sum_{m=1}^{M} s(t) e^{-j2\pi(m-1)\Delta\left(\cos(\phi_b)-\cos(\theta)\right)} \qquad (10)$$

If $\theta = \phi_b$ the output results the maximum one. In case more signals are present, impinging from several directions, considering the arrival direction $\theta = \phi_b$, the contributions of the different elements of the array are summed up in phase. The b-th output of the beamformer shall therefore be characterized by a radiation diagram with maximum in the direction $\phi_b$.

The selection of the best beam takes place according to a criterion tending to minimize the error probability, that is applying a MLSE estimate method (Maximum Likelihood Sequence Estimation) of the sequence transmitted at maximum likelihood . The above mentioned estimate is profitably made applying the well known Viterbi algorithm to a trellis sequential diagram, or trellis, whose branches represent all possible status transitions of the receiver. The algorithm calculates, for all the possible sequences

$$\{x_n\},$$

the distance between the corresponding signal transmitted:

$$y\left(t\middle|\{x_n\}\right) = \sum_n x_n h(t - nT) \qquad (11)$$

and the received signal $y(t)$, and then selects the sequence

$$\{x_n\}$$

corresponding to the minimum one among said distances. From the above we can understand that the higher are the distances among the possible signals

$$y\left(t\middle|\{x_n\}\right),$$

the lesser is the probability to select the wrong sequence during the demodulation. Therefore, defining $d_{min}$ the minimum value of the distance among all possible

$$y\left(t\middle|\{x_n\}\right),$$

this parameter results being a reliable index of the error probability.

Due to the calculation complexity of this approach, in some known examples another method is also proposed for the beam selection, simply based on the quality of the demodulation of the training sequence. Among all the possible beams, it is selected in fact the one determining the smallest number of errors in the midamble demodulation. At equal number of errors made, it is used the beam that, at the end of the Viterbi algorithm applied to the midamble, originates the minimum distance.

An approach giving the antenna a higher intelligence level versus Switched Beams methods, essentially consists in the execution of a spatial filtering on the' signals received by the antennas, by a beamformer resuming in the output signal the directivity characteristics of an opportune radiation diagram capable to reduce the co-channel interference. This approach, in the major part of the known application examples, required the prior knowledge of the DOAs of the useful and co-channel interferers. Different types of algorithms studied to solve the problem of the DOA estimate are found in literature, availing of an array of receiving antennas. The most representative algorithm is that known as MUSIC (Multiple Signal Classification), proposed by R. O. Schmidt in the paper under the title "Multiple Emitter Location and Signal Parameter Estimation", published in IEEE Trans. Antennas and Propagation, vol. AP-34, No. 3, March 1986, reference to which shall be made for a more complete description. The algorithm requires the restrictive assumption that the covariance matrix of the signal is not singular; in this case the signals on antennas are not correlated among them and the steering vectors result linearly independent.

When arrival directions are known

$$\left(\hat{\theta}_i, \ i = 1, \ldots, p\right)$$

an appropriate radiation diagram shall be constructed. A possibility is to define as many diagrams as are the estimated DOAs (p), on the basis of the MVDR technique (Minimum Variance Distortionless Response), described for instance by S. Haykin in the volume "Adaptive Filter Theory", published by Prentice-Hall, Inc., Englewood Cliffs, N.J., 1991.

Said approach enables to estimate the beamformer coefficients in order that the radiation diagram has unitary response coinciding with the selected direction, minimizing at the same time the interference effect and of the noise coming from all the other directions.

Therefore, up to this stage the arrival directions of the different signals have been estimated, making for each one of them an appropriate radiation diagram. However, according to the described technique it is not possible to know which is the arrival direction associated to the signal considered as useful and consequently, which is the radiation diagram more convenient to be used to perform the demodulation. One can think to select the beam according to the methods previously described, in order to select the one that enables a better demodulation of the training sequence.

In the case of DOA estimate, the above arguments are strictly valid for the case of p signals uncorrelated with p<M, where M is the number of elements of the array, or for scenarios characterized by a low number of multiple paths, as the mobile communication systems in rural area.

In the case of propagation in environments characterized by number of multiple paths, such as for instance in metropolitan areas, the extraction of the DOAs can result ineffective, since the number of arrival directions of the different signals is often higher than the array size, and also the hypothesis of uncorrelation among the different signals on the antennas is scarcely verified. However, at least in the case where multipaths relevant to a same signal belong all to an angular sector, not too wide, the performances of the algorithm often remain satisfactory, arid in any case higher than those guaranteed by the Switched Beams approach.

To render the direction estimate more efficient in case of correlated signals, one can think to use other DOA research algorithms, like the WSF (Weighted Subspace Fitting) proposed by B. Ottersen and M. Viberg in the article "Analysis of subspace fitting based methods for sensor array processing", following the Proc. ICASSP 89, pp. 2807-2810, Glasgow, Scotland, May 1989. This algorithm, at the cost of a higher computation complexity, is able to process also coherent sources. The advantages are however highly limited as already said both by the large number of arrival directions and by the fact that, even succeeding in estimating more than one direction for each signal, it should be necessary to use an algorithm for the beam composition capable to completely exploit the knowledge of said directions. Availing of an effective demodulation diagram, capable to control the multipaths, as the one based on an MLSE algorithm, it can result useful to point the beam toward more replicas of the same signal, in order to maximize the signal-noise ratio, thing which is not possible with the already mentioned MVDR technique which, as already said, considers one sole direction as useful.

The algorithms described above, foreseeing the DOA estimate prove also to be ineffective in case of non-stationarity during transmission. Let's consider in fact the case of an interferer disturbing the transmission only in a semiburst (and not during the midamble). The arrival direction of an interferer, estimated using a beam selection algorithm based on the quality of the midamble demodulation, could not consider the effect of said interferer. In this case, it would be necessary to have recourse to more complex algorithms for the selection, or composition, of the beam based on the demodulation not only of the midamble but of the whole burst.

In the cellular mobile system, the number of interferer signals may sometimes result higher than the number of the antennas forming the array, in this case the hypothesis p < M is no more verified and the array can also not be able to insert zeroes in the radiation diagram in the direction of each interferer. This means that the methods based only on the DOA estimate additionally loose their effectiveness. However, also in this context, the adaptive array could be able to combine the signals presents at the antennas to improve the ratio between the signal and the sum of interferers with the noise, ratio known in literature under the acronym SINR, (Signal to Noise and Interferers Ratio). In the following articles by J. H. Winters:

- "Optimum Combining in Digital Mobile Radio with Cochannel Interference", published in IEEE J. Select. Areas Commun., vol. SAC-2, No. 4, July 1984;
- "Optimum Combining for Indoor Radio Systems with Multiple Users", published in IEEE Trans. Commun., vol. COM-35, No. 11, November 1987, is developed the concept of optimum combiner.

This is an alternative technique to the DOA estimate, which bases on the "prior" knowledge by the receiver of a sequence of known symbols

$$\{x_n\}$$

(training sequence), present in the single transmission bursts for synchronization purposes. The sequence

$$\{x_n\}$$

is additionally exploited in the spatial filtering process, through which the signals received from the antenna array are appropriately combined to maximize the SINR.

This approach enables to avail of the spatial difference of the signal, besides reducing the relative power of the co-channel interferers, also to face the Rayleigh fading of the useful signal.

Fig. 3 is the block diagram of an M elements optimum combiner. As it can be noticed, the combiner has M inputs for a same number of base band signals $y_1(n),...,y_i(n),...,y_M(n)$, received by corresponding M elements of an array (not shown in the figure). The above mentioned signals are multiplied by the relevant weights $w_1,...,w_i,...,w_M$, in general complex. Weighted signals reach the inputs of a first adder, at the output of which a $y_{out}(n)$ signal is present, coming out from the combiner and reaches also, with negated sign, an input of a second adder, at the other input of which a $x_n$ signal is present. At the output of the second one, an error signal $e_n$ is present, reaching a WEIGHT ADJUSTMENT block having other inputs for signals $y_1(n),...,y_i(n),...,y_M(n)$. At the outputs of said block, weights $w_1,...,w_i,..., w_M$ are present.

In the operation, the signal $y_{out}(n)$ can be expressed as:

$$y_{out}(n) = \sum_{i=1}^{M} y_i(n) w_i \qquad (12)$$

Denoting with

$$\mathbf{w} = \left[ w_1, w_2, ....., w_M \right]^T$$

the vector of the weights and with

$$\mathbf{y}(n) = \left[ y_1(n), y_2(n), ....., y_M(n) \right]^T$$

the vector of the signals received and adopting a matrix notation, we can define the weighted sum of the signals coming from the antennas as:

$$y_{out}(n) = \mathbf{w}^T \mathbf{y}(n) \qquad (13)$$

The difference between the desired signal $x_n$, corresponding to the samples of the training sequence, and the signal $y_{out}(n)$ at the output of the combiner defines the error signal:

$$e_n = x_n - w^T y(n) \qquad (14)$$

This signal is used as control signal in the adaptation process of the combiner weights.

The scope of the adaptation process is to find a vector of weights w, such to give at output, at any instant, a signal equal to the desired one $x_n$. When the input signals can be seen as stationary stochastic variables, the WEIGHT ADJUSTMENT block searches the vector of the weights minimizing a cost function corresponding to the mean quadratic error MSE (Mean Square Error), defined as follows:

$$\overline{e}^2(\mathbf{w}) \stackrel{def}{=} E\left[\left|e_n\right|^2\right] \qquad (15)$$

where $E[\cdots]$ indicates the average value of the subject in brackets.

By replacing the (14) in the. (15) we can obtain the whole of the weights minimizing the MSE:

$$\begin{aligned}
\overline{e}^2(\mathbf{w}) &= E\left[\left|x_n\right|^2 + \mathbf{w}^* \mathbf{y}(n)\mathbf{y}^*(n)\mathbf{w} - 2\mathbf{w}^* x_n \mathbf{y}(n)\right] \\
&= E\left[\left|x_n\right|^2\right] + \mathbf{w}^* \overline{\mathbf{R}}_{yy}\mathbf{w} - 2\mathbf{w}^* \overline{\mathbf{R}}_{yx}
\end{aligned} \qquad (16)$$

where the spatial covariance matrix $\overline{\mathbf{R}}_{yy}$ of signals at the antenna input can be expressed as follows:

$$\overline{\mathbf{R}}_{yy} \stackrel{def}{=} E\left[\mathbf{y}(n)\mathbf{y}^*(n)\right] \qquad (17)$$

and the cross-covariance matrix $\overline{\mathbf{R}}_{yx}$ among the M signals at input of the antennas and the desired signal, can be expressed as:

$$\overline{\mathbf{R}}_{yx} \stackrel{def}{=} E\left[\mathbf{y}(n)x_n^*\right] \qquad (18)$$

The mean square error defined in the (16) is a quadratic function of weights w. The components of the gradient of function MSE, are the partial derivatives of the MSE versus the value of weights. Deriving the (16) versus w, we obtain the gradient as linear function of weights:

$$\nabla E\left[\left|e_n\right|^2\right] = 2\overline{\mathbf{R}}_{yy}\mathbf{w} - 2\overline{\mathbf{R}}_{yx} \qquad (19)$$

When the selection of weights has been optimized, the gradient results null, then:

$$\overline{R}_{yy}w_{opt} = \overline{R}_{yx}$$

$$w_{opt} = \overline{R}_{yy}^{-1}\overline{R}_{yx} \qquad (20)$$

The weight vector $\mathbf{w}_{opt}$ is therefore the one giving the minimum mean quadratic error. The equation (20) is called Wiener-Hopf equation. For a more detailed analysis of the research methods of the optimum weight vector, reference shall be made to the article "Adaptive Antenna Systems ", by: B. Widrow, P. E. Mantey, L. J. Griffiths and BB. B. Goode, published in IEEE Proceedings, vol. 55, No. 12, December 1967.

Considering now the time equalization, it is opportune to introduce the following considerations: let

$$\{x_n\}$$

a sequence of N symbols transmitted on a channel with dispersion length L, that is whose impulse response is significant within a time LT, being T the symbol time. Let's consider an array of antennas consisting of M elements. The vector of signals received on the array of antennas

$$\mathbf{y}(t) = \left[ y_1(t), y_2(t), \ldots, y_M(t) \right]^T.$$

is represented by the convolution of a vector $\mathbf{h}(t)$ with the transmitted sequence

$$\{x_n\}:$$

:

$$\mathbf{y}(t) = \sum_{n=-\infty}^{+\infty} x_n \mathbf{h}(t - nT) + \mathbf{n}(t) \tag{21}$$

where the vector elements $\mathbf{h}(t - nT)$ are the samples of the impulse response of the channel on the different antennas. The vector $\mathbf{h}(t)$ can be written as follows:

$$\mathbf{h}(t) = \sum_{i=1}^{N} A_i e^{-j2\pi f_c \tau_i} h_0(t - \tau_i) \mathbf{a}(\theta_i) \tag{22}$$

being:

- N the number of multiple paths,
- $A_i$ the path loss of the i-th path,
- $\theta_i$ the arrival direction,
- $h_0$ the convolution of the modulation impulse and impulse response of the reception filter,
- $a(\theta_i)$ is the steering vector, or vector of the array response in direction $\theta_i$, defined in the (7).

The vector $\mathbf{n}(t)$ represents the additional noise, we shall time and spatially consider white and that satisfies the following conditions:

$$E\left[\mathbf{n}(t)\mathbf{n}^*(t)\right] = \sigma^2 \mathbf{I}$$
$$E\left[n_k^*(t)n_k(t + \tau)\right] = \sigma^2 \delta(\tau) \tag{23}$$

In the major part of the known realization examples of an optimum equalizer for the compensation of distortions introduced by the channel on time characteristics of the sequence transmitted, the equalizer is made up of a filter adapted to the channel impulse response, followed by a maximum likelihood detector (MLSE) based on the Viterbi algorithm. Both for the realization of the adapted filter, and for the MLSE detector one, it is absolutely necessary to known the channel impulse response, generally unknown. Availing of the knowledge of the midamble, the equalizer estimates the channel impulse response, to calculate then the coefficients of the filter matched to the channel impulse response and be able to estimate the sequence transmitted, profitably using the Viterbi algorithm. The possibility to perform an estimate of the vector $\mathbf{h}(t)$ makes therefore useless the explicit calculation of the same according to the (22), which presupposes the estimate of the arrival directions.

Algorithms mentioned up to now, face the problem of the estimate of the sequence transmitted in two different equalization phases, namely:

- spatial equalization for the cancellation of interferers;
- time equalization of the spatially filtered signal.

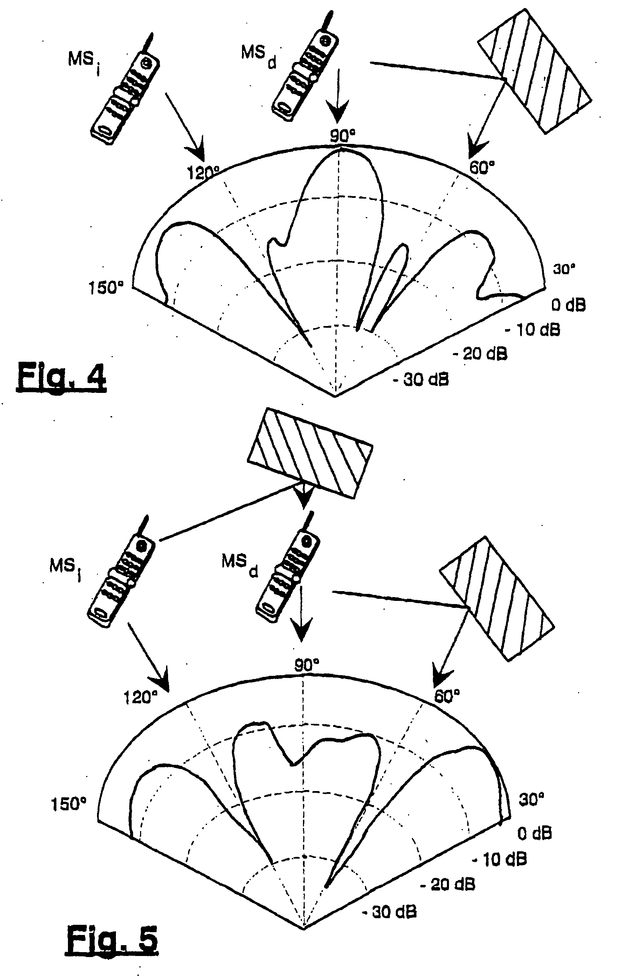

A separate equalization enables to spatially combine only the echoes of the signal resulting not significantly delayed. The delayed echoes of the signal are in fact considered as co-channel interferers. However, this approach can result in a reduction of the ratio between signal and noise at the time equalizer input, as it shall be noticed through comparison of figures 4 and 7, and in a lower robustness of the beamforming algorithm versus particular azimuth distributions of echoes, as it could be noticed comparing figures 5 and 8.

In the light of what just said, let's consider the cost function (15) of the Wiener-Hopf combiner, previously dealt with:

$$\overline{e}^2\left(w_1, w_2, \ldots, w_M\right) = E\left[\left|e_n\right|^2\right] = E\left[\left|\sum_{i=1}^{M} w_i y_i(n) - x_n\right|^2\right] \qquad (15)$$

where $w_i$ is the coefficient according to which the signal received at the i-th antenna is weighed. This algorithm maximizes the ratio between the signal and the noise, where signal means all those echoes resulting correlated with the training sequence

$$\left\{x_n\right\}.$$

If the channel introduces delays higher than the symbol time, $T \cong 3,7\mu s$ for GSM, echoes so delayed result decorrelated with the training sequence and are treated by the combiner as co-channel interferers.

Fig. 4 is the radiation diagram on the azimuth plane of an antenna array, where the beamforming coefficients are calculated with the Wiener-Hopf algorithm applied to the functional (15), in presence of an useful signal generated by a mobile MSd, with relevant echo delayed by 5 $\mu s$, and of a co-channel interferer generated by a mobile MSi. As it can be noticed, the radiation diagram shows a maximum in the useful direction (90°), a first zero in the co-channel interferer direction (120°), and a second zero in the useful signal echo direction (60°). Due to the second zero, the possibility to avail also of the power of the useful signal in the estimate process of the transmitted sequence is lost.

Fig. 5 is the radiation diagram on the azimuth plane of the antenna array used in a scenario differing from the previous one only for the presence of a replica of the co-channel interferer placed in the same arrival direction (90°) of the main signal. As it can be noticed, the radiation diagram still shows the two zeros in the previous directions, of the interferer (120°) and of the echo of the useful signal (60°), respectively, but in this new scenario, the maximum in the useful direction (90°) is no more present. This behaviour can be explained, considering a traditional synchronization system, by the fact that the combiner sees a unique useful signal, different from the interferer, in the common direction (90°), however attempting to reduce the effect of the interferer in that direction reducing the gain. This involves an additional reduction of the power of the useful signal present in the estimate process of the transmitted sequence. Therefore the combiner looses the opportunity to transfer the maximum gain lobe in the sole echo direction of the useful signal (60°), thus succeeding to nullify the echo effect of the interferer having the same direction of the useful signal.

In mobile radio environment more recent algorithms than those described up to now are known, that try to overcome the drawbacks highlighted in the description of figures 4 and 5. The above mentioned algorithms still avail of the concept of minimization of the mean square error expressed by an appropriate functional, like it occurred for the optimum combiner, but, contrarily to this one, the information on the channel included in the expression of the above mentioned functional is now given by a so-called spatial-time filter due to the fact to adapt to the total response of the channel.

A first example of the above is represented by the international patent application W0 97 08849 A, published on 6/3/97 under the name of THOMSON CSF, under the title: "METHOD AND DEVICE FOR THE SPATIAL MULTIPLEXING-DEMULTIPLEXING OF RADIOELECTRICAL SIGNALS FOR SDMA MOBILE SYSTEMS", with French priority of 22-8-95.

In the above mentioned application it is described a base station employing in an "intelligent" manner an array of antennas to which a multiway transceiver is coupled, equipped with beamforming means particularly suitable to enable the assignment of a same frequency-time channel to more mobiles in the same cell, provided that the relevant signals have sufficiently decorrelated arrival directions. The invention, which essentially claims an application of the SDMA technique in mobile radio environment, shows two embodiments distinguished by different typology of the beamforming means used in reception. More in particular, the first embodiment is referred to means requiring a functional block for the estimate of the steering vectors, which are then passed to a true beamforming spatial filter. The beamforming means of the first embodiment can be compared to those already mentioned for the DOA estimate and result far less adequate to the present invention compared to the beamforming means foreseen in the second embodiment, therefore the first embodiment shall not be examined. However, it is useful to remember that the techniques used in the first embodiment are called "transparent" because they do not require any prior knowledge of the sequence of symbols received.

Beamforming means foreseen in the second embodiment of THOMSON paper use, on the contrary, the prior knowledge of the training sequence, as it occurs in the invention described below. These second means include a space-time filter. The optimization of the total response of the channel is made through two algorithms alternative between them, called FAST-BBT-DFE and FAST-DFE, respectively, where:

- FAST is an acronym of Space-Time Matched Filter,
- BBT is an acronym of Bruit Blanc Temporellement, with French terms, and
- DFE of Decision Feedback Equalizer, with English terms.

We quote below what is said on the advantages of these algorithms:

- "The FAST-BBT-DFE enables to rephase the power of all the paths of the useful signal and to reject in sub-optimal way the signals interfering from multiple paths. This procedure involves a gain in terms of signal to noise ratio on the current symbol compared to an only-spatial filtering algorithm (FAST-DFE), in fact the algorithm shows the same rejection capabilities of interferer signals with the difference that the echoes of the useful different from the main path are no more assimilated to interferer signals, so that a same number of freedom degrees are cleared to consider other interferers.
- The FAST-DFE enables to process a signal with interferers coming from an array in an almost optimal way, since it performs not only the phasing of the echoes of the useful signal, but also that of interferers before their rejection. This procedure enables to eliminate an interferer source using one sole spatial freedom degree whichever is the number of echoes according to which this source is received by the array".

The main restrictive hypothesis of FAST-BBT-DFE algorithm consists in considering the matrix $\mathbf{R}_b$ as having impulse nature, which involves interferers completely uncorrelated between them, and therefore comparable to a white noise in the band of the useful signal. In other words, the interferers are considered free of echoes, or better, each echo is considered itself an autonomous interferer. Under these assumptions, the convergence of the algorithm appears rather quick.

It is well clear that the application of such an algorithm is not recommended in mobile radio environment where, particularly in urban small size cells, the typical scenario is on the contrary characterized by co-channel interferers fit with a range of relevant echoes from multiple paths. The fact not to consider this reality involves the disadvantage not to be able to optimize in an actually credible way the total signal-noise ratio, or, whenever the SCFR technique (in SDMA mode) is used in order not to be able to separate the different co-channel mobile users in an optimum way on the azimuth plane.

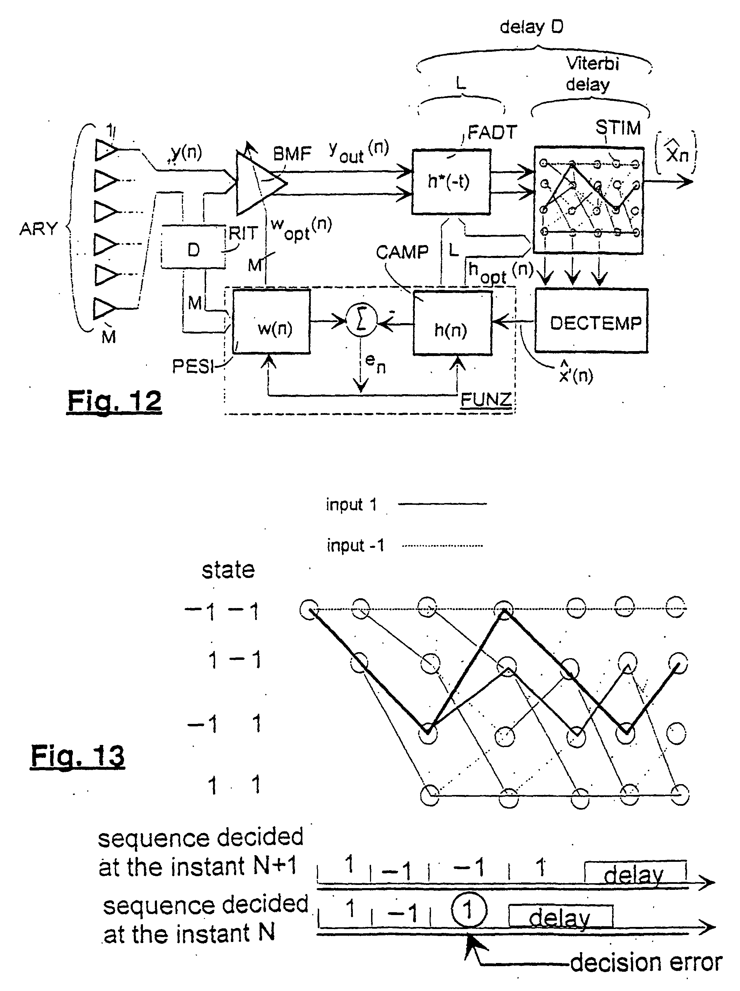

The FAST-DFE algorithm, shown making reference to fig. 12 of the quotation, does not place any limit on the noise nature, including the co-channel interferers, thus treating the channel in an almost optimal manner. Also in this case the structure consists of a space-time filter associated to a decision organ of the DFE type, even if the use of the Viterbi is considered possible, without describing methods for said use. The space-time filter consists of $N$ time filters $W_k$, $N_{HR}$ long, one for each $n$-th way branching from the $N$ antennas. An additional time filter HR is also present, it too $N_{HR}$ long, placed on the feedback path of the DFE equalizer. As it is known from the theory of equalizers, a DFE, before submitting the symbols received to a threshold decider, tries to remove the ISI from the sequence of the relevant samples, providing to this purpose a deleter filter, acting in feedback on postcursor samples of the impulse response, and of a preliminary equalizer acting forward on precursor samples. In the diagram of fig. 12 the HR filter represents the deleter, while the whole of the $W_k$ filters whose filtered signals are summed up to form a unique sum signal, can be compared to the preliminary equalizer. The signal cleaned by ISI, denoted in the text with $\widetilde{z}(n)$, is obtained from the difference between said sum signal and the signal filtered by HR. The $\widetilde{z}(n)$ signal crosses the threshold decider that gives an estimate $\hat{z}(n)$ of the data sequence transmitted. The high number of coefficients to update involves a given slowness in the convergence of the estimate and therefore the need of long training sequences, this fact being autonomously highlighted in a table of the advantages and drawbacks of the FAST-DFE algorithm.

If one wants to employ the above mentioned space-time equalizer in GSM environment, where the training sequences foreseen by the standard strictly have a lengths of 26 symbols, and can therefore be considered short, the problem arises about the convergence of the estimate within the time slot of such a sequence. In this case, in fact, the estimate of error $\xi$ would undergo an additional slackening due to lack of accuracy in the evaluation of the error itself, the DFE having to this purpose use the $z(n)$ estimates in place of the no more available samples of the training sequence. Therefore, there is the actual possibility that a great part of symbols of the whole transmission burst is wrongly estimated, causing by this a degradation of the quality of the demodulated signal. Also, in case of transmission systems adopting short bursts, which could also include the GSM itself, with a burst of 148 symbols only, there is also the risk of a missed convergence within the whole duration of the same burst.

The inconvenience highlighted is in itself sufficient to discourage the use of such an algorithm in GSM environment, but additional considerations shall be made to point out the consequent technical problems of non negligible importance.

A second problem that can originate from the slowness in convergence of the estimate is that of the poor capability of the equalizer to face the channel non stationariness, mainly due to interferers that enable outside the time slot of the training sequence, and/or to the case in which the channel can no more be considered time-invariant, as it occurs for instance when the Doppler effect is significant, due to the high speed of the mobiles. The above mentioned inconveniences become even more important in presence of sudden and high intensity interferers ($C/I < $ -10 $dB$). This is a condition that can frequently occur in urban mobile radio environment, for instance, when due to a so-called "corner attenuation" the power of the interferers suddenly surpasses that of the useful signal. Particularly in this last context, more powerful solutions are required than that indicated in the (26), consisting in weighting each iteration of the estimate with the forgetting factor $\lambda \le 1$.

A last drawback, originated by the same causes of the previous ones, consists in the difficulty to physically realize a receiver able to perform in one sole symbol time all the arithmetic operations necessary to the adaptation of a so great number of coefficients of the space-time filtering structure.

A second example in which the space and time term "jointly" enter the LMS algorithm is disclosed in the German patent application DE-A-19639414, inventor: RADEMACHER L.. The claim 1 of the citation recites textually:

Method for the parametrization of a receiving station (BS) comprising adaptive antenna devices (AE) for receiving received signals (es) via time-variant channels, in which method

- the received signals (es) from at least two adaptive antenna devices (AE) are weighted with antenna coefficients (a) and are combined to form received data (z),
- error magnitudes (e) are determined in a device for determining error magnitudes (e) from the comparison of received data (z) and reference data (y) modelling these received data (z),
- channel coefficients (RW) being provided for modelling the reference data (y),
- these error magnitudes (e) are supplied to a channel estimator (ACE),
- the channel estimator (ACE) jointly determines channel coefficients (RW) and antenna coefficients (a) minimizing the error magnitudes (e), and
- the channel coefficients (RW) are provided for a detection of the received data (z) to be evaluated.

The detector is a Viterbi estimator whose short-time decisions are used outside the training sequence of a GSM cellular system data block. Each channel coefficient RW is the product of the effective channel coefficient W by a phase rotator term R, common to a number of channel coefficients W, foreseen to equalise a time-variant channel by compensating the Doppler shift due to the velocity of the mobile. The optimization LMS algorithm has recourse to three separate gradients in vectorial form: a first gradient is for updating the weights $a_t$, a second gradient is for updating the channel coefficient $W_t$, and a third gradient is for updating the phase rotator term $R_t$. In each gradient the updating term at the instant t-1 is multiplied by an its own scalar leakage factor L. The three leakage factors $L_a$, $L_W$, $L_R$ include a respective product $\alpha\mu_a$, $\beta\mu_W$, $\rho\mu_R$, where $\alpha$, $\beta$, $\rho$ are constants established according to the principle of the steepest rise of the gradient, and $\mu_a$, $\mu_W$, $\mu_R$ are adjustable adaptation step lengths. The effect of various combinations of $\mu_a$, $\mu_W$, $\mu_R$ is described in the text. It can be appreciate that all the entities, except error e, are separate groups of three.

In the above method for parametrization of a receiving station, no solution in closed form is provided, but only the recursive strategy to move toward the optimum value of the parameters. The optimization is carried out with respect to each gradient of the objective function, one independently from the others, by using the same error (probably this originates the term "joint"); consequently inter-relationships between spatial and temporal terms are neglected and the opportunity to exploit these inter-relationships to improve the equalization definitively lost. No proof of convergence is given, in any case the gradient method for solving LMS problems is universally known to have a slow convergence.

In fact to track rapid variation the phase rotator R is provided. Besides a right calibration of the adjustable adaptation step lengths $\mu_a$, $\mu$, $\mu_R$ is necessary. A reasonably hypothesis is that the phase rotator R be not in grade to fight a strong non-stationary interferents, that because the effect of such interferents is not comparable to the continuous phase rotation of the Doppler shift, in case of the strong interferent the convergence wouldn't be reached in a short/medium time.

## PURPOSES OF THE INVENTION

Main scope of the present invention is to overcome the above mentioned drawbacks having as main scope that to indicate a spatial-time equalization procedure particularly quick in converging towards optimum performances, even outside the midamble, and that can be profitably employed in base stations of a cellular mobile system, for instance GSM, fit with so-called smart antennas. The main scope of the invention cover a non-stationary channel, particularly if it is affected by sudden and high intensity interferers, assuring the shortest possible duration of the transient within which a loss in quality of the demodulated signal occurs and the limitation of such a loss to limited values.

A second scope is to indicate an optimization algorithm whose solutions are obtained in closed form by Direct Matrix Inversion.

A third scope is to indicate an iterative digital method for the updating of an estimate of the optimum equalization parameters, accurate and of quick execution at the same time.

Fourth scope of the invention is to indicate the realization methods through systolic arrays of an equalizer based on the just mentioned iterative digital method.

## SUMMARY OF THE INVENTION

a) To attain these aims, subject of the present invention is an equalization method to cancel the isofrequential interferers in signals received by array antennas of base stations of a mobile radio system, as described in the first claim.

Profitably the decider component is a Viterbi processor exploiting said optimized samples of the impulse response of the channel to calculate, in the known way, branch metrics of a trellis, used to estimate at maximum likelihood the sequence of symbols transmitted.

In the method of the invention the combined estimate of the best equalization parameters exhausts at the last sample of the training sequence, generally included in a midamble of the transmission burst. The 26 samples of the GSM midamble (out of the 148 available) are sufficient to assure the convergence of the estimate even in presence of medium quality signals received. The best equalization parameters should remain then available for the demodulation of the remaining part of the stored burst, and the demodulated signal does not loose quality, provided that channels are time-invariant and the interferers have stationary characteristics, but these ideal condition are not met in practical cases.

The method according to the invention solves in the adaptive way the problem of a correct equalization in presence of channels with time-variant characteristics and/or non-stationary interferers, updating the above mentioned estimate of the best equalization parameters at each new symbol received. From the operational point of view, it is necessary to this purpose to avail both of a vector of antenna input signals, and of a vector of data transmitted. While the first vector is always available, the second vector is completely known only during the midamble, where it corresponds to the training sequence stored in the receiver. We see therefore the need, once the midamble is exhausted, to replace the training sequence by the symbols of the estimated sequence, considering that the symbols already decided at an instant $n$, are but those associated to a path selected in the trellis up to instant $n$-th. Simultaneously, an updated sequence of optimum samples of the impulse response of the channel is sent to the Viterbi processor, for the updating of the values of the branch metrics. This way of proceeding inevitably introduces an excessive delay in the estimate of the optimum equalization parameters, due to the reaction time of the Viterbi algorithm which adds to the delay due to the time matched filter, thus preventing to follow quick variations of the channel characteristics.

The inconvenience is avoided forcing the Viterbi algorithm to decide just after few steps (typically 4, or 5) which is the most possible sequence of data, that is taken at the time of the present symbol climbing in the trellis the maximum likelihood path, while final decisions for the MLSE detector are taken at the end of the burst, in order that the same are as much reliable as possible.

Since short term decisions can result wrong, an error propagation phenomenon can be generated, which can last until wrong data are reused for the estimate of the best equalization parameters, that is for a number of symbol times equal to the intrinsic delay the short term decisions are made available.

The equalization method of the invention, eliminates also this second drawback copying as a whole, at any symbol time, the $L$ symbols necessary to the updating of the equalization parameters. It is well evident that the updating of the best equalization parameters is a new combined estimate of the same.

Profitably, it is possible to proceed to the above mentioned updating, and to the consequent adaptive equalization, starting from the ends of the midamble and proceeding in parallel in the two directions towards the ends of the burst previously stored and synchronized. This involves the advantage to avail of the double of the time for calculations. It is also possible to proceed with a first pass on the right semiburst and on the left one, only afterwards, using the decided data of the right semiburst to have a longer group of data on the left one. This procedure improves the accuracy but not the speed of the estimate.

With the actions made up to now, and considering that the combined estimate of the optimum equalization parameters is extended to the whole burst, it is useful to increase the effectiveness of the more recent data versus older ones, in order to render the method more reactive in respect with the variations of the channel characteristics. To the purpose, it is introduced a forgetting factor lower than one unit, as indicated on the other hand also in the known art, which appropriately weighs the elements of some matrices storing the historical data used in the estimate, before any updating iteration of the same.

The equalization degree obtained with the method described is generally sufficient to enable a correct demodulation in almost all the real transmission situations. However, in presence of high-intensity non-stationary interferers ($C/I < - 10 \ dB$), wrong decisions taken during the starting phase of the adaptation, immediately after the arrival of the noise, are so numerous to overcome the threshold enabling the estimate of the best equalization parameters to converge towards BER acceptable values in the demodulated signal, in a reasonably short time versus the semiburst length. The high increase of the error probability is unavoidable due to the intrinsic delay of short term decisions, which slackens the instant of interferer view, and that of the implementation of the countermeasures to neutralize the same.

Characteristic part of the claim 1 discloses the way to face high intensity non-stationary interferers. Supporting matter in the text describes an embodiment including a phase of continuous monitoring of the power received on the antennas, and of non-coherent detection of possible peaks higher than a given threshold. This phase is profitably performed in parallel to the normal operation. The detection of a peak at an instant $\bar{n}$ is used to automatically select the operation according to the embodiment. After that, for the whole $\Delta T$ duration (typically twenty samples) of a convergence transient of the matrices of historical data used in the estimate, only the coefficients of the spatial filter are updated and not the estimated samples of the channel impulse response, which maintain the values they had at instant $\bar{n}$. This strategy is aimed at anticipating at instant $\bar{n}$ the future knowledge on the interferer to cancel, present in the samples of the stored burst. In this way the interferer is "seen" in advance in the calculations and the adaptive error minimization algorithm can start updating the beamformer coefficients to try to eliminate the noise. Of course such an advance is not possible for the samples of the impulse response, whose adaptive estimate mandatorily requires short term decided data.

The estimate as in the characteristic embodiment results therefore "vitiated", because to obtain the advantages it aims at, it introduces a synchronization loss between the samples of the signals coming from the antennas and the relevant decided data. The choice to maintain the estimated samples of the channel impulse response constant, reveals therefore as a caution measure destined to avoid error propagation, otherwise due to the sudden updating of the sole spatial component of the structured matrices of statistical nature.

The original operation is automatically re-selected when the transient of $\Delta T$ duration elapses.

The advantage obtained by the characteristic embodiment is to render the convergence of the equalization parameters estimate more effective, also in presence of sudden and strong interferers enabling out of the midamble, reaching at the end of the brief transient a more robust cancellation of the echoes of the interferer.

To make the point on the sequence of equalization phases implemented by the subject method of the invention for the demodulation of the whole burst, the following sequence is obtained: equalization starts in presence of the training sequence, once the midamble is exhausted it proceeds using low delay estimated data, in the meanwhile the power on the antennas is continuously checked, if before the end of the burst the power is over threshold enters the characteristic embodiment of the invention for rejecting the strong asynchronous interferent, the embodiment quickly exhausts its operation within the time $\Delta T$, at the end of which the previous operation is automatically reselected, all within the time interval of the 0,577 ms burst.

The method of the invention performs the total filtering in two subsequent phases, a first only spatial phase, and a second only temporal, but to optimize at the same time the coefficients of both the filters (as for the coefficients of the time matched filter, the same are indirectly optimized through optimization of the samples of the impulse response). Thus a reciprocal iteration determines between the two types of filtering tending to the optimum, due to the effect of the constraint imposed by the MMSE criterion (Minimun-MSE) simultaneously on the two filters. The result of such an interaction is to aid the crossing through the cascade of the two filters of the maximum possible power coming from the useful signal, therefore including its echoes and to reject the major possible number of co-channel interferers, to which the relevant echoes must be related. What is actually made, is an automatic resynchronization of echoes, valid both for the useful and for the interferers, which operates in synergy with the discrimination of the direction of the different signals on the azimuth plane.

The term "joint estimate" or "joint optimization" in the present application assumes an effective meaning that it shall be appreciate when disclosing the mathematical algorithm of optimization, either in closed or in iterative form. Concerning the closed form, the method obtains a system of algebraic equation whose solution furnishes a vector of the optimum weights and a vector of the optimum samples of the channel impulse response. The method consists of the systematic application of other methods (Lagrange multipliers, calculation of the Schur complement of a matrix $R$, estimate of an eigenvector associated to the minimum module eigenvalue of the Schur complement) each known per sé, but the fact shouldn't prevent the originality of the Applicant's combination in the particular applicative context. The disclosed solution really minimizes the objective function, maximizing in the meanwhile the Signal to Noise+Interference Ratio (SINR) by mixing in the matrix **R**, spatial, temporal, and spatial/temporal covariance matrices. Consequently the concept of "joint" extends up to the finding of solutions. In the disclosed approach the space weights and time samples are searched simultaneously by setting up a system of equations, each equation is the gradient of the objective function, this system gives the "joint optimization". The solution of the system is far from being linear as .the space and time solutions are inter-related. However, the system of equations belongs to the class of separable system that has a closed form solution. The inter-relationship between the two spatial and temporal terms gives the optimum solution as the eigenvector associated to the minimum module eigenvalue of the Schur complement. Updating is carried out by first updating the spatial covariance matrix $\mathbf{R_{yy}}$ and then by inverting this matrix (it is a Direct Matrix Inversion (DMI) method where the updating follows the matrix $\mathbf{\bar{R}_{yy}}$ estimation). The inter-relationships generate synergies that improve equalization resolution and speed-up convergence, this fact is widely proved in the various scenarios depicted in the relevant Figures.

The alternative approach implemented in the Applicant's invention, namely the updating method in iterative form, follows the displacement theory of Cholesky algorithm, adapted for space-time processing according to the proposed objective function. Matrix **R**, being positive defined, assures the existence of a unique Cholesky factor $\mathbf{\bar{L}}$, consequently the inter-relationship between the spatial and temporal terms of the matrix **R** gives the optimum solution even in the Cholesky context.

In the RADEMACHER's method the optimization involves three disjoint gradients, one independently from the others (and not simultaneously in a system as in the method of the present invention) by using the same error (probably this originates the term "joint"); inter-relationships are neglected and consequent synergies that improve equalization resolution and speed-up convergence are lost.

The equalizer based on the subject method does not simply repropose a device described in a functional way retracing the steps of the method, but it exploits the capabilities of systolic arrays implemented through digital integrated circuits of the ASIC type (Application Specific Integrated Circuit) purposely configured.

Consequently, additional object of the present invention is an equalizer operating according to the equalization method of the invention, including systolic arrays for the combined estimate of the optimum equalization parameters, as better described in the relevant dependent claims.

Just for the seek of completeness in rebut the prior art, an ultimate document is analysed, namely the European patent application EP-A-0793359, inventors MORELAND et all, titled: "Method and apparatus for block decision feedback equalisation using a Cholesky algorithm". An independent method claim 1 recites textually: "A block decision feedback equalizer comprising:

- an input for a received data signal, the received data signal having a known probe sequence and a block of data symbols;
- a channel impulse response estimator coupled to the input and having a channel history generator responsive to the known probe sequence;
- a block detector coupled to the input and the channel impulse estimator for detecting each data symbol of the block; and
- a probe data sequence generator coupled to the channel impulse response estimator and the block detector.

MORELAND's invention discloses an improved block decision feedback equalizer using the Cholesky algorithm in different embodiments listed at page 3 of the cited document. Among those embodiments the unique in such a way comparable with the equalizer of the present invention is the one in which the block detector includes a diversity combiner and a time varying channel estimator. The equalizer of the citation is designed exclusively for a DFE structure that is know be quite different from an equalizer based on a Viterbi estimator. The main difference between a DFE equalizer and an equalizer based on a Viterbi estimator (named for sake of brevity Viterbi equalizer) is that the first makes a hard decision symbol-per-symbol, while the second a soft decision based on the choice of a sequence reproducing a survivor path in a trellis, after the corresponding latency. Outside the midamble a hypothetical model of time-variant channel must be introduced, due to the impossibility to have a trellis and a store of the relevant paths for short-time decisions. Concerning the use of cited equalizer in presence of time-variant channels due to echo Doppler and/or multipath propagation, the best proposed solution disclosed in the document is a block detector including a space diversity combiner and a time-variant channel estimator. As universally known a space diversity combiner, in the most practical cases, includes two opportunely spaced antennas respectively connected to a main and a diversity receiver. The main and diversity received signals are summed up after the reciprocal phase offset and, in case, individual gain adjustment in order to increase the quality of the combined signal. Even combining more than two received signals, the diversity combiner acts in a totally different way from a beamformer. In fact the reciprocal phase offset introduced in diversity combining is generally random, on the contrary of a combination subject to a beamforming algorithm in which, starting from a condition of fixed phase offset between all adjacent antennas, each subsequent reciprocal phase offset is algorithmically controlled in order to change the initial radiation pattern in a way to advantage utiles and reject interferents. The absence of a calculated phase offset makes a diversity combiner unsuitable for beamforming and consequently for the employment in space-time equalizers. In conclusion, a multiplicity of diversity antennas is not a directive array, this fact has a counterpart in a different structure of the spatial covariance matrix and the data covariance matrix. In addition, the absence of spatial and temporal interrelation in the solution of the minimization algorithm, deprives the DFE equalizer of the cross-covariance matrix between data and inputs to the antennas. For these grounds the Cholesky structure of the matrices depicted in matrix equation 45 of the citation is different from that used by the Applicant to introduce a global Cholesky factor, as cleared up later.

The outlined differences between the equalizer of the citation and the adaptive equalizer of the present invention, both in the architecture and operation, are so relevant that this citation, although disclosing a possible use of the Cholesky algorithm in an equalizer, discloses an use unfeasible in a space-time equalizer like the Applicant's one.

BRIEF DESCRIPTION OF DRAWINGS

The many advantages and scopes of the present invention will be appreciated from the following detailed description of a preferred embodiment of the same with reference to the attached drawings, in which:

- Fig. 1 shows an array of antennas (array) used in the present invention;
- Figures 2 and 3 show the block diagrams of a same number of beamformers made according to the prior art;
- Figures 4 and 5 are the radiation diagrams on the azimuth-plane, obtained applying the beamformer of fig. 3 to an array similar to that of fig. 1, concerning two different transmission scenarios in mobile radio environment;
- Fig. 6 is a general block diagram of a receiver particularly emphasizing an equalizer operating according to the equalization method of the present invention;
- Figures 7 and 8 are two radiation diagrams on the azimuth plane, obtained applying to the array of fig. 1 a beamformer included in the equalizer of fig. 6, relating to two transmission scenarios identical to those that originated the radiation diagrams of figures 4 and 5;
- Fig. 9 shows two time successions of images placed side by side, ordered from top to bottom for growing values of the discrete instant $n$, out of which, the left succession indicates the radiation diagrams on the azimuth plane obtained applying the beamformer of fig. 6 to the array of fig. 1, and the right one shows the estimated channel impulse response;
- figures 10 and 11 show the BER curves at the output of the receiver of fig. 6, according to the possible length of the training sequence of the transmission burst, for two different values of $C/I$;
- Fig. 12 shows a general block diagram of a receiver particularly highlighting an equalizer operating according to the equalization method of the present invention;
- Fig. 13 shows a trellis relevant to a STIM block included in equalizers of figures 6 and 12;
- Fig. 14 shows two trends of BER along the burst, evaluated at the outputs of receivers in figure 6 and 12, respectively;
- Figures 15, 16, and 17 show the radiation diagrams on the azimuth plane relevant to the curve shown with solid line in fig. 14;
- Fig. 18 shows three trends of BER along the burst, evaluated at the output of receiver of fig. 12, for three different values of the C/I ratio of the input signal;
- Fig. 19 shows to comparison purposes two trends of BER along the burst, evaluated at the output of receiver of fig. 12;
- Fig. 20 is a block diagram of an estimate block FUNZ included an equalizers of figures 6 and 12 of the invention;
- Fig. 21 is a block representation of a first systolic array included in the FUNZ block of fig. 20;
- fig. 22 is a block representation of a second systolic array included in the FUNZ block of fig. 20;
- fig. 23 shows a class of additional blocks included in the second systolic array of fig. 22; and
- fig. 24 shows the signals involving the generic blocks of the systolic array of figures 21 and 22.

DETAILED DESCRIPTION

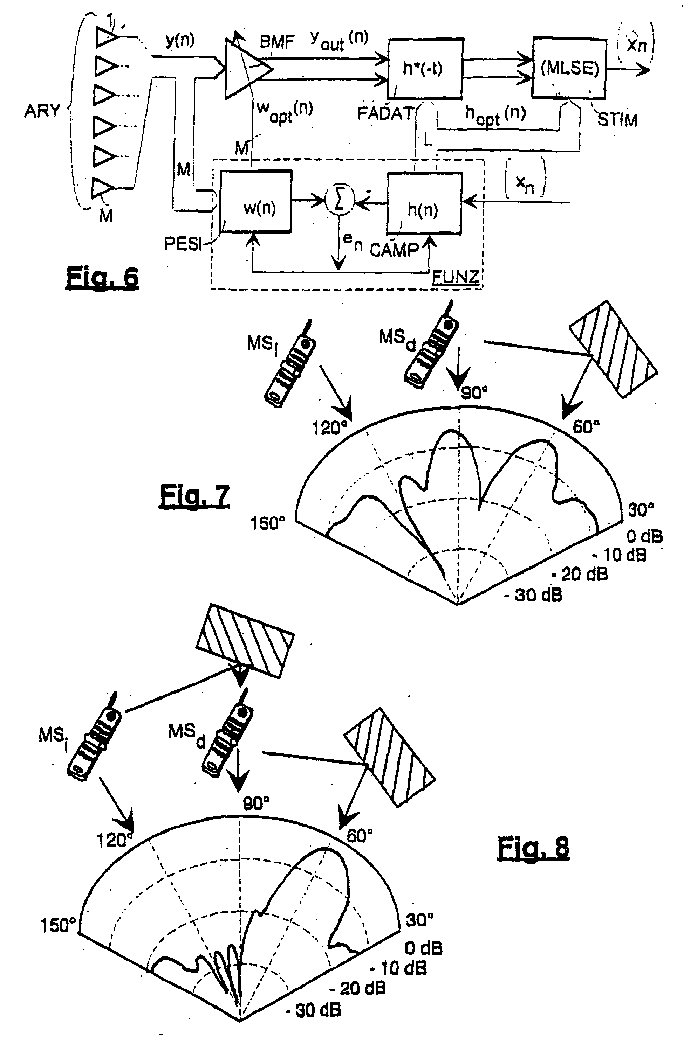

Making reference to fig. 6, we notice the general block diagram of a receiver adopting an equalizer operating according to the method of the invention. The receiver is connected to an array ARY of M antennas giving signals, represented as a whole with an algebraic vector $\mathbf{y}(n)$. The vector $\mathbf{y}(n)$ reaches respectively the inputs of a block BMF and the first inputs of a block FUNZ. The BMF block is a spatial filter, or beamformer, reached by a vector of the optimized weights $\mathbf{w}_{opt}(n)$, coming from first outputs of the FUNZ block. At the output of the BMF block there are the real and imaginary (I,Q) components of a signal $y_{out}(n)$ which is filtered by a FADAT filter matched to the impulse response of the transmission channel. The components of the base band signal filtered by FADAT reach the first inputs of an estimator STIM, at the output of which an estimated sequence

$$\left\{\hat{x}_n\right\}$$

is present. The second input of the FUNZ block is reached by a training sequence

$$\left\{x_n^{\cdot}\right\}$$

stored in the receiver, previously synchronized to a copy of the same present in the midamble of the transmission burst, availing to the purpose, known methods based on the oversampling of the signal received and the correlation of the sequences generated by the oversampling with the sequence stored in the receiver. A vector of L optimized samples $\mathbf{h}_{opt}(n)$ of the channel impulse response comes out from second outputs of the FUNZ block, directed towards additional inputs of the FADAT filter and towards second inputs of the STIM block.

The FUNZ block includes in its turn a PESI block that calculates a vector of M weights $\mathbf{w}(n)$ of the beamformer BMF, and a CAMP block that calculates a vector $\mathbf{h}(n)$ of L elements, corresponding to a same number of significant samples of the impulse response of the transmission channel. It includes also a two-input adder $\Sigma$ reached by two digital signals obtained from appropriate processing of PESI and CAMP blocks, from which the signal coming from CAMP is taken with sign minus. At the output of the adder an error signal $e_n$ is present that returns to the above mentioned blocks. The first and second inputs of the FUNZ block correspond therefore to the inputs of PESI and CAMP filters, respectively, the outputs of the same filters are also the first and second outputs of the above mentioned block.

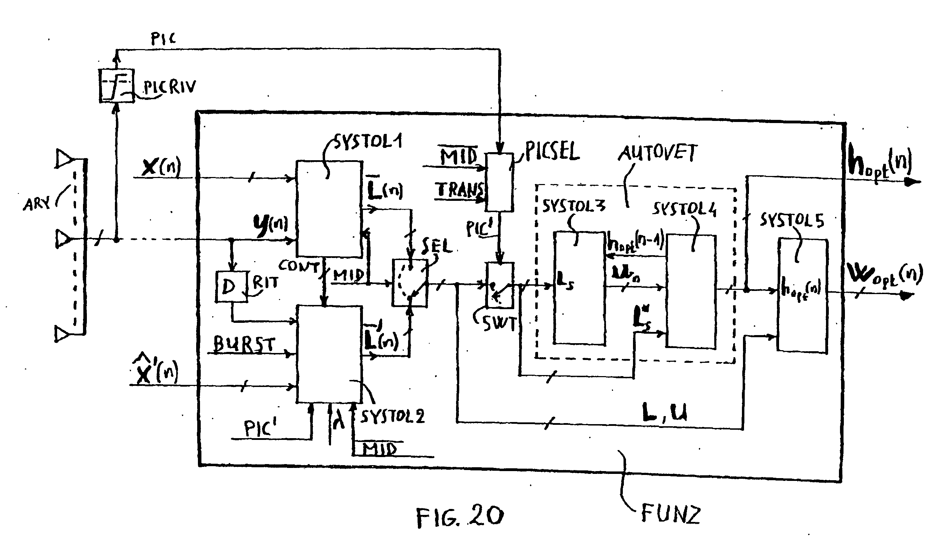

The representation of the FUNZ block highlights only the main aspects of the calculation of $\mathbf{w}_{opt}(n)$ and $\mathbf{h}_{opt}(n)$, a more detailed description of the internal architecture of this block shall be made describing fig. 20.

For ease of discussion, the diagram of fig. 6 does not include some blocks referred to known operations made by the receiver and necessary to the operation of the equalizer, such as for instance those relevant to the carrier synchronization, the conversion/demodulation in base band of the $M$ bursts received from a same number of antenna, the sampling and analog/digital conversion of the same, the storing of the $M$ bursts of digitized symbols, the acknowledgement of the training sequence and the synchronization of stored bursts, etc. Furthermore, all the elements of vectors are intended referred to complex envelopes in base band. In particular, the $\mathbf{y}(n)$ signal coming from the antenna is that defined in the (21).

In the operation, the spatial filter BMF is a MTAPS transversal filter obtaining the signal $y_{out}(n)$ at its output making the weighed sum of the $\mathbf{y}(n)$ signals coming from the antennas and present in the bursts stored:

$$y_{out}(n)=\mathbf{w}^T\mathbf{y}(n) \tag{13}$$

The adapted filter FADAT and the estimator STIM require, for their correct operation, to know the vector $\mathbf{h}_{opt}(n)$, after that their realization is known to the technician of the sector. In particular, the FADAT filter is a LTAPS transversal filter, in general with frequency response of root raised cosine type, where $L$ is the channel length. On the contrary, the STIM block is a processor performing an MLSE estimate of the transmitted sequence on the basis of the well known Viterbi algorithm, applied to a trellis with branch metrics whose expression is the known one of the family of receivers operating with pilot symbols (training sequence) and differential coding.

In the equalization method governing the operation of the equalizer of fig. 6, the estimate of vectors $\mathbf{w}_{opt}(n)$ and $\mathbf{h}_{opt}(n)$ is made jointly, considering the following cost function:

$$\bar{e}^2\left(w_1,\dots,w_M,h_0,\dots,h_{L-1}\right) = E\left[|e_n|^2\right] = E\left[\left|\sum_{i=1}^{M} w_i y_i(n) - \sum_{i=0}^{L-1} h_i x_{n-i}\right|^2\right] \quad (27)$$

from which it results that the mean square error $\bar{e}^2$, differently from the Wiener-Hopf optimum combiner, results a function both of coefficients $w_i$ of the beamformer and of the samples of the channel impulse response $h_i$. In this case the time dimension is directly introduced in the error functional to minimize.

It is now proposed a matrix notation, to the purpose to render the processing of the problem of the minimum of the (27) more compact. Denote with **Y** the matrix corresponding to $N$ time samples at the $M$ antennas:

$$\mathbf{Y} = \begin{bmatrix} \mathbf{y}^T(n) \\ \mathbf{y}^T(n-1) \\ \vdots \\ \mathbf{y}^T(n-N+1) \end{bmatrix} \quad (28)$$

obtained from vector

$$\mathbf{y}(n) = \left[y_1(n), y_2(n),\dots,y_M(n)\right]^T$$

whose $M$ elements are the samples of signals received on the antennas; therefore:

$$\mathbf{Y} = \begin{bmatrix} y_n & y_{n+1} & \cdots & y_{n+M-1} \\ y_{n-1} & y_n & \cdots & y_{n+M-2} \\ \vdots & \ddots & \ddots & \vdots \\ y_{n-N+1} & y_{n-N+2} & \cdots & y_{n-N+M} \end{bmatrix} \quad (29)$$

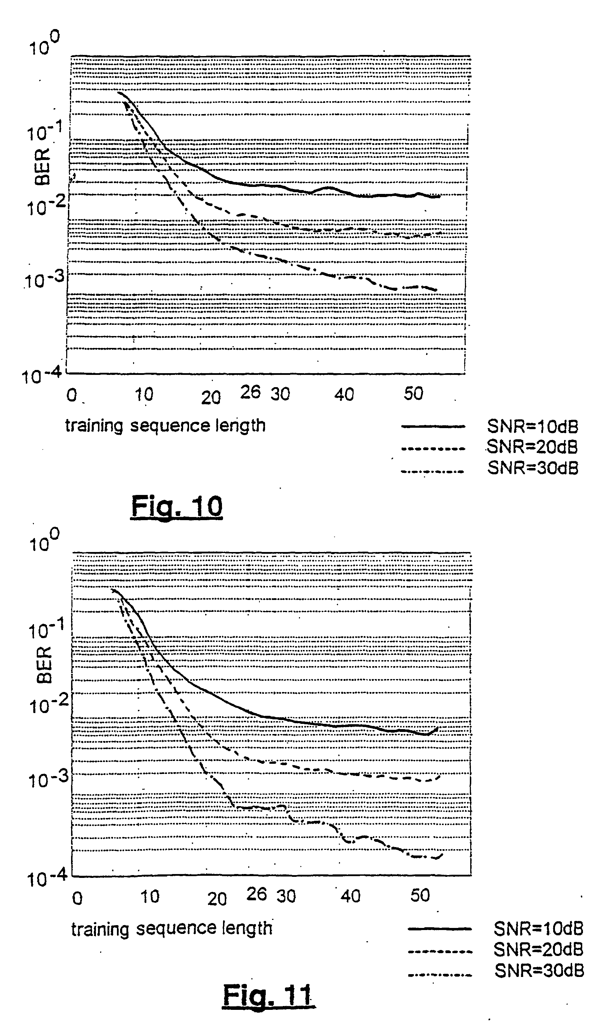

Concerning the number $N$, we shall see in the description of figures 10 and 11 that a value included between 20 and 30 ($N = 26$ for the GSM midamble) is sufficient to furnish a good statistical basis for the estimate of the best equalization parameters.

Denote with **X** the matrix of data transmitted (limited just for now to the training sequence), each one having duration $L$:

$$\mathbf{X} = \begin{bmatrix} \mathbf{x}^T(n) \\ \mathbf{x}^T(n-1) \\ \vdots \\ \mathbf{x}^T(n-N+1) \end{bmatrix} \quad (30)$$

obtained from the vector

$$\mathbf{x}(n) = \left[x_n(n), x_{n+1}(n),\dots,x_{n+L-1}(n)\right]^T$$

whose $L$ elements are data transmitted coinciding with the training sequence

$$\{x_n\},$$

and duly stored, assuming a channel length equal to *L*; so that:

$$\mathbf{X} = \begin{bmatrix} x_n & x_{n+1} & \cdots & x_{n+L-1} \\ x_{n-1} & x_n & \cdots & x_{n+L-2} \\ \vdots & \ddots & \ddots & \vdots \\ x_{n-N+1} & x_{n-N+2} & \cdots & x_{n-N+L} \end{bmatrix} \qquad (31)$$

and with:

$$\mathbf{w} = \begin{bmatrix} w_1, w_2, \ldots, w_M \end{bmatrix}^T \qquad (32)$$

$$\mathbf{h} = \begin{bmatrix} h_1, h_2, \ldots, h_L \end{bmatrix}^T \qquad (33)$$

the vectors of the coefficients of the BMF spatial filter and of the channel impulse response are respectively indicated.

The problem proposed in the equation (27) can therefore be rewritten in the matrix form, as follows:

$$\left( \mathbf{w}_{opt}, \mathbf{h}_{opt} \right) = \arg \min_{\mathbf{w}, \mathbf{h}} \overline{e}^2(\mathbf{w}, \mathbf{h}) = \arg \min_{\mathbf{w}, \mathbf{h}} \| \mathbf{Y}\mathbf{w} - \mathbf{X}\mathbf{h} \|^2 \qquad (34)$$

$$\| h \|^2 = 1 \qquad (35)$$

where in the (35) is introduced the constraint on the power of the impulse response to avoid the banal solution

$$\left( \mathbf{w}_{.opt} = 0, \mathbf{h}_{opt} = 0 \right).$$

The constraint (35) is a consequence of the fact that the bits of the sequence transmitted are assumed as time uncorrelate, being valid other hypothesis the (35) should be modified in a consistent way.

The problem of the minimum constrained can be faced applying the Lagrange method. To the purpose, denoted with $\gamma$ a real parameter (Lagrange multiplier), let's consider the following functional:

$$J(\mathbf{w}, \mathbf{h}, \lambda) = \| \mathbf{Y}\mathbf{w} - \mathbf{X}\mathbf{h} \|^2 + \gamma \left( \| \mathbf{h} \|^2 - 1 \right) \qquad (36)$$

The research of the minimum constrained in the (34) reduces then to the research of a *"solution"* (**w**, **h**) of the problem of free minimum of the functional $J(\mathbf{w}, \mathbf{h}, \gamma)$. The above mentioned solution can be searched considering the system:

$$\frac{\partial J}{\partial w} = J_w(w, h, \gamma) = 2Y^*(Yw - Xh) = 0 \qquad (37)$$

$$\frac{\partial J}{\partial h} = J_h(w, h, \gamma) = -2X^*(Yw - Xh) + 2\gamma h = 0 \qquad (38)$$

$$\frac{\partial J}{\partial \lambda} = J_\lambda(w,h,\gamma) = h*h\text{-}1 = 0 \tag{39}$$

The equation (37) can be construed as the introduction of the error orthogonality principle, in fact it is possible to express the equation (37) as:

$$E\left[e_n \mathbf{y}^*(n)\right] = 0 \tag{40}$$

Resuming, for convenience, some expressions partly already introduced, denote with $\bar{\mathbf{R}}_{yy}$ the spatial covariance matrix expressed by:

$$\bar{\mathbf{R}}_{yy} \stackrel{def}{=} E\left[\mathbf{y}(t)\mathbf{y}^*(t)\right] \tag{41}$$

and likewise with $\bar{\mathbf{R}}_{xx}$ and $\bar{\mathbf{R}}_{xy}$, respectively, the covariance matrices on the data and of cross-covariance between data and inputs to the antennas expressed as:

$$\bar{\mathbf{R}}_{xx} \stackrel{def}{=} E\left[\mathbf{x}(t)\mathbf{x}^*(t)\right] \tag{42}$$

$$\bar{\mathbf{R}}_{xy} \stackrel{def}{=} E\left[\mathbf{x}(t)\mathbf{y}^*(t)\right] \tag{43}$$

We shall use below the sampling co-variance matrices defined as follows:

$$\mathbf{R}_{yy} = \frac{1}{N}\sum_{n-1}^{N} \mathbf{y}(n)\mathbf{y}^*(n) \tag{17}$$

$$\mathbf{R}_{xx} = \frac{1}{N}\sum_{n-1}^{N} \mathbf{x}(n)\mathbf{x}^*(n) \tag{44}$$

$$\mathbf{R}_{xy} = \frac{1}{N}\sum_{n-1}^{N} \mathbf{x}(n)\mathbf{y}^*(n) \tag{45}$$

We can therefore define a matrix **R** structured as follows:

$$\mathbf{R} = \begin{bmatrix} \mathbf{R}_{yy} & \mathbf{R}^*_{xy} \\ \mathbf{R}_{xy} & \mathbf{R}_{xx} \end{bmatrix} \tag{46}$$

which shall enable a more simple representation of the problem. Equations (37) and (38) can be re-written respectively as:

$$R_{yy}w = R^*_{xy}h \tag{47}$$

$$R_{xy}w - R_{xx}h = \gamma h \tag{48}$$

From the equation (47) it is possible to obtain **w** as function of **h** and replace it in the (27) to obtain the mean square error. While replacing the **w** value in the (48) the following equality can be demonstrated:

$$\overline{e}^2(w,h)=h^*R_s^{\perp}h=-\gamma \tag{49}$$

where:

$$R_s^{\perp} = R_{xx} - R_{xy}R_{yy}^{-1}R_{xy}^* \tag{50}$$

is called Schur complement of $\mathbf{R}_{yy}$ in $\mathbf{R}$. The estimate of vector $\mathbf{h}(n)$ that minimizes the mean square error, corresponds therefore to the estimate of the eigenirector $\mathbf{h}_{opt}(n)$ of matrix $\mathbf{R}_s^{\perp}$ associated to the minimum module eigenvalue $\gamma$.

Therefore it is possible to estimate also the $\mathbf{w}_{opt}(n)$ coefficients of the beamformer replacing vector $\mathbf{h}_{opt}(n)$ in (47):

$$R_{yy}w_{opt} = R_{xy}^*h_{opt} \tag{51}$$

Summarizing, the choice of the optimum weights minimizing the cost function, can be synthesised in the following main points:

1. calculation of $\mathbf{R}_{yy}$, $\mathbf{R}_{xy}$ matrices and of the Schur complement $\mathbf{R}_s^{\perp}$ ;
2. estimate of the eigenvector $\mathbf{h}_{opt}(n)$ of matrix $\mathbf{R}_s^{\perp}$ associated to the minimum module eigenvalue $\gamma$ ;
3. estimate of $\mathbf{w}_{opt}(n)$ coefficients of the beamformer.

Assuming to implement the equalization method summarized under points 1., 2., 3., with a program controlling a finite precision processor, the calculation of the Schur complement $\mathbf{R}_s^{\perp}$ can result a very critical operation, mainly if the word length of the processor is very limited.

The above mentioned criticality is considerably reduced thanks to the use of the methods developed in a theory on partial triangular factorization of the matrices, known in literature as "Displacement Theory", or even "Displacement Structure", included in the bibliography given below, reference to which shall be made. The key element of this theory is an entity called "Cholesky factor" of a matrix, in the case considered matrix **R**, whose calculation is made through the simple updating of a previous value, intervening with appropriate transformations (Givens rotations) directly on the new data. As we shall see, the updating of the "Cholesky factor" gives a matrix, structurally different from the **R** but having the same information content, whose elements highly facilitate the $\mathbf{w}_{opt}$ and $\mathbf{h}_{opt}$ calculation. If is thus excluded the explicit calculation of sampling covariance matrices and the recourse to critical operations, such as that of the direct matrix inversion, since the above mentioned rotations do not involve any calculation of the determinant. This procedure involves a better conditioning of the calculation problem, and a consequent reduction of the minimum word length of the processor.

Such an approach gives the additional advantage to extend the calculation to the whole burst; the solution described is in fact intrinsically recursive (iterative) . On the other hand, a non recursive method, that is involving the explicit calculation of the sampling covariance matrices, is characterized by a high complexity in the calculation of the Schur complement $\mathbf{R}_s^{\perp}$ through the (50), which makes the extension of such a method to the whole burst difficult.

It must be underlined that the application examples of the "Displacement Theory" known up to now, concern only the optimization of the performances of time-only equalizers, or time equalizers used in space-diversity combiners as in the cited MORELAND's invention. A new element has been that to connect the mathematical formulation of the solution of the problem of minimum of the error functional used in the present invention, to the formulation given by such a theory for the solution of the problem of minimum in MMSE-DFE time-only equalizers. Due to the similarity highlighted between the two formulations it has been therefore possible to avail of all the knowledge developed for time equalizers adjusting it to the space and time equalizer of the invention.

This stated, let's consider the matrix **R** described in the (46) which, being positive defined, assures the existence of a unique Cholesky factor $\bar{L}$ such that:

$$R = \bar{L}\bar{L}^* \tag{52}$$

One of the fundamental methods for the triangular factorization, is the Schur reduction process described:

- in the article by J. Chun and T. Kailath, under the title "Generalized Displacement Structure for Block-Toeplitz, Toeplitz-Block, and Toeplitz-derived Matrices", published in NATO ASI Series, vol. F 70;
- in the volume "Numerical Linear Algebra Digital Signal Processing and Parallel Algorithms", authors G. H. Golub and P Van Dooren, edited by Springer-Verlag, 1991.

The process enables, after M factorization steps, the reduction of matrix **R** as follows:

$$\mathbf{R} = \begin{bmatrix} \mathbf{L} \\ \mathbf{U} \end{bmatrix} \begin{bmatrix} \mathbf{L}^* & \mathbf{U}^* \end{bmatrix} + \begin{bmatrix} 0 & 0 \\ 0 & \mathbf{R}_s^\perp \end{bmatrix} \tag{53}$$

where $\mathbf{R}^\perp$ can be then considered as the residue of the partial displacement in triangular form. This approach enables to calculate the matrix $\mathbf{R}^\perp$ without having to invert the spatial covariance matrix $\mathbf{R}_{yy}$. Starting from the Schur complement, obtained from the factorization process, it is possible to estimate $\mathbf{h}_{opt}$ according to classical estimation methods of the eigenvector associated to the minimum module eigenvalue, for instance, the method of inverse powers.

The partial factorization highlights also the possibility to have matrices $\mathbf{R}_{yy}$ and $\mathbf{R}_{xy}$ factorized in their triangular form:

$$R_{yy} = LL^* \tag{54}$$

$$R_{xy} = UL^* \tag{55}$$

enabling the reduction of the equation (51) in the form:

$$L^*w_{opt} = U^*h_{opt} \tag{56}$$

The lower triangular form of matrix **L**, as we shall see below, enables the solution of the equation (56) with a simple process called "back-substitution" process.

Let's now analyse the different sequential steps of the equalization method employing the Cholesky factor in the calculations, giving for each of then the relevant complexity:

- **step 1**: application of the known Schur algorithm for the quick reduction of the matrix R for the Cholesky factorization;
- **step 2**: application of an algorithm known in the literature as "Method of inverse powers" for the estimate of the eigenvector

$$\left( \mathbf{h}_{opt} \right)$$

of $\mathbf{R}_s^\perp$ associated to the minimum module eigenvalue;
- **step 3**: solution of the equation (56) for the estimate of optimum coefficients of the beamformer ($\mathbf{w}_{opt}$), according to a method known in literature as "back-substitution" method.

**Step 1**

From the Toeplitz theory of matrices it is known that a generic matrix $\mathbf{R}(n)$ has a displacement structure Toeplitz-type if the displacement matrix $\nabla \mathbf{R}(n)$ defined as:

$$\nabla R(n) = R(n) - F(n)R(n - 1)F^*(n) \tag{57}$$

has low rank (rank($\nabla \mathbf{R}$)"rank($\mathbf{R}$)). The matrix $\mathbf{R}$ expressed in the equation (46) falls within this category and, in accordance with the above mentioned theory, it can be calculated in an iterative way, arbitrarily assuming $\mathbf{R}(0)=\mathbf{0}$, and extending to the whole midamble the updating defined as follows:

$$R(n) = R(n - 1) + g_n g_n^* \tag{58}$$

where the updating vector $\mathbf{g}_n$, denoted as:

$$g_n = \begin{bmatrix} y(n) \\ x(n) \end{bmatrix} \tag{59}$$

is called generator of the difference matrix, since imposing $\mathbf{F}(n) = \mathbf{I}$ we can write $\nabla \mathbf{R}(n) = \mathbf{g}_n \mathbf{g}^*$.
Likewise, it is possible to update the Cholesky factor of matrix $\mathbf{R}(n)$, thanks to the special time-varying nature of the same. Therefore, denoted with $\bar{\mathbf{L}}(n)$ the Cholesky factor of matrix $\mathbf{R}(n)$, such that $\mathbf{R}(n) = \bar{\mathbf{L}}(n)\bar{\mathbf{L}}^*(n)$, it is possible to verify that:

$$\bar{\mathbf{L}}(n)\bar{\mathbf{L}}^*(n) = \begin{bmatrix} \bar{\mathbf{L}}(n-1) & \mathbf{g}_n \end{bmatrix} \begin{bmatrix} \bar{\mathbf{L}}^*(n-1) \\ \mathbf{g}_n^* \end{bmatrix} \tag{60}$$

This suggests an effective method for the updating of the Cholesky factor through the use of unitary transformations, so that, starting from the factor calculated at instant $n$-1 and generator at instant $n$, it is possible to determine the new factor at instant n without having to calculate the matrix $\mathbf{R}(n)$.
In fact, it is possible, arbitrarily assumed $\bar{\mathbf{L}}(0) = \mathbf{0}$, to express the updated factor as:

$$\begin{bmatrix} \bar{\mathbf{L}}(n) & \mathbf{0} \end{bmatrix} = \begin{bmatrix} \bar{\mathbf{L}}(n-1) & \mathbf{g}_n \end{bmatrix} \mathbf{Q}(n) \tag{61}$$

where $\mathbf{Q}(n)$ is a unitary rotation, in general made as a sequence of elementary transformations, $\mathbf{Q}_0, \mathbf{Q}_1, \cdots$, which, applied to

$$\begin{bmatrix} \bar{\mathbf{L}}(n-1) & \mathbf{g}_n \end{bmatrix}$$

produces the nulling of the column of the generator $\mathbf{g}_n$ introducing a zero for each elementary transformation.
An example of recursive updating, let $l_0(n)$ and $l_0(n-1)$ the first elements in position (0,0) of matrices $\bar{\mathbf{L}}(n)$ and $\bar{\mathbf{L}}(n - 1)$, respectively and $g_{n,0}$ the first element of the generator vector. It derives that the first line of matrix $\bar{\mathbf{L}}(n)$ can be written as:

$$\begin{bmatrix} l_0(n) & \mathbf{0} & \mathbf{0} \end{bmatrix} = \begin{bmatrix} l_0(n-1) & \mathbf{0} & g_{n,0} \end{bmatrix} \mathbf{Q}_0 \tag{62}$$

Applying the same transformation to the whole matrix we obtain:

$$\left[\overline{L}(n-1) \quad g_n\right]Q_0 = \left[l_0(n) \quad \begin{matrix} 0 & 0 \\ L_1(n-1) & g_{n,1} \end{matrix}\right] \tag{63}$$

where $L_1(n\text{-}1)$ and $g_{n,1}$ are the matrices obtained after elimination of the first element of the generator column.

If we recursively proceed in the updating of the whole factor $\overline{L}(n)$, we can see it factorized in the following triangular form:

$$\overline{L}(n) = \left[\begin{matrix} L(n) & 0 \\ U(n) & L_s(n) \end{matrix}\right] \tag{64}$$

where $L$ and $U$ are the matrices defined in the (53), and $L_s$ is the Cholesky factor of $R_s^\perp$, such for which: $L_s L_s^* = R_s^\perp$. As it can be noticed from the (64), matrices $L$ and $L_s$ are triangular while the $U$ is necessarily rectangular, or possibly squared.

The factorization of the (64) results being essential since it enables the calculation of the vector of weights $w_{opt}(n)$ without making the inversion of the matrix $R_{yy}$ (see equation 50) and, as we shall see in short, without inverting the matrix $R_s^\perp$, being this operation requested by the algorithm of inverse powers for the calculation of the eigenvector ($h_{opt}$) associated to the minimum eigenvalue.

The recursive factorization for the updating of the whole Cholesky factor requires a number of complex multiplication equal to $2(M + L)(M + L - 1)$ and a number of sums equal to $(M + L)(M + L - 1)$.

**Step 2**

The method of inverse powers for the calculation of the eigenvector associated to the minimum eigenvalue requires the iterative solution of the equation:

$$h_n = (R_s^\perp(n))^{-1} h_{opt}(n\text{-}1) \tag{65}$$

$$h_{opt}(n) = \frac{h_n}{h_n^* h_n} \tag{66}$$

where the normalization of the (66) is introduced as the result of the constraint on power of the impulse response of the estimated channel: $|h|^2 = 1$. Due to the above mentioned constraint, it is convenient to select an initial vector $h_{opt}$ (0) with at least one non null element.

The Cholesky factorization enables the calculation of the above mentioned eigenvector without having recourse to the inversion of the matrix, since the (65) can be re-written as:

$$L_s(n)L_s^*(n)h_n = h_{opt}(n\text{-}1) \tag{67}$$

The equation (67) can be factorized in two elementary phases, introducing an intermediate vector $u_n$ defined as:

$$L_s^*(n)h_n = u_n \tag{68}$$

in order to be able to express $u_n$ as solution of:

$$L_s(n)u_n = h_{opt}(n-1) \tag{69}$$

We can solve the equation (69) regarding $\mathbf{u}_n$ and then, having found $\mathbf{u}_n$, we can solve the equation (68) regarding $\mathbf{h}_n$. Both the equations are simple to solve since the concerned matrices are triangular matrices. Should we have to solve equations with generic square matrices $L \times L$, we should expect a number of arithmetical operation in the range of $L^3$. On the contrary, being the matrices triangular it is possible to reach the solution in only $L^2$ operations. To illustrate this approach, known in literature and called back-substitution, we develop equations (69) and (68):

$$\begin{cases} l_{11}u_1 = h_{opt,1}(n-1) \\ l_{21}u_1 + l_{22}u_2 = h_{opt,2}(n-1) \\ \cdots = \cdots \\ l_{L1}u_1 + l_{L2}u_2 + \cdots + l_{LL}u_L = h_{opt,L}(n-1) \end{cases} \tag{70}$$

$$\begin{cases} l_{LL}^* h_{n,L} = u_L \\ l_{LL-1}^* h_{n,L} + l_{L-1,L-1}^* h_{n,L-1} = u_{L-1} \\ \cdots = \cdots \\ l_{L1}^* h_{n,L} + l_{L-11}^* h_{n,L-1} + \cdots + l_{11}^* h_{n,1} = u_1 \end{cases} \tag{71}$$

Starting from the first term of the (70) we can calculate $u_1$:

$$u_1 = \frac{h_{opt,1}(n-1)}{l_{11}}$$

and replace it in the other $L$ - 1 equations. This demonstrates that we can reduce the problem to a triangular system of dimensions $(L - 1)$ x $(L - 1)$ at the cost of $L$ - 1 multiplication-and-sum operations and one division. With this method we can solve the system at the cost of $L$ divisions and $(L - 1) + (L - 2) + ... + 1$ multiplication-and-sum operation, for a total of $\frac{1}{2}L(L - 1)$ multiplication-and-sum operations and $L$ divisions. After having solved the equation (69) regarding $\mathbf{u}_n$ we can solve the equation (68). The number of operations required is fully identical to that required for the solution of the first triangular system of equations.

**Step 3**

Also the calculation of the optimum coefficients of the beamformer can be made for a back-substitution in (56), directly in the space of the signals (without explicit calculation of the covariance matrix), calculating:

$$L^* (n)w_{opt}(n) = U^*(n)h_{opt}(n) \tag{56}$$

In this case the previous step 2 must b extended introducing also the calculation of the second term of the (56), for a total number of ML + $\frac{1}{2}$M2 multiplication-and-sum operations and M divisions.

The following table summarizes data relevant to the calculation complexity in the three steps described, giving also the calculation power of an hypothetical processor (expressed in MIPS) requested for the real time execution. It is considered an updating of coefficients, extended to the sole midamble, for an array of antennas of $M = 8$ receivers and for a matched filter having length $L = 5$.

| Step no. | No. of complex multiplications | No. of complex sums | MIPS |
| --- | --- | --- | --- |
| 1 | 2(M+L)(M+L-1) | (M+L)(M+L-1) | 8,97 |
| 2 | L(L-1)+2L | L(L-1) | 0,86 |

(continued)

| Step no. | No. of complex multiplications | No. of complex sums | MIPS |
|---|---|---|---|
| 3 | $ML + \frac{1}{2}M^2$ | $ML + \frac{1}{2}M^2$ | 0,098 |

The imporovement introduced by a joint estimate can be demonstrated considering the previous scenario proposed in fig. 4, where the time dispersion introduced by the channel is represented by an echo of the signal delayed by 5 $\mu s$.

Fig. 7 shows the radiation diagram on the azimuth plane determined by the beamformer BMF of fig. 6, where it is clear the different behaviour versus the situation of fig. 4 concerning the delayed echo. The radiation diagram of fig. 7 shows in fact a power level in the echo direction, of the same extent of the level in the useful direction. This enables, to the price of a controlled intersymbols interference, to maintain high the power of the useful signal present in the estimate process of the transmitted sequence

$$\left\{ \hat{x}_n \right\}.$$

The robustness of the new functional proposed can be demonstrated in fig. 8, just considering the behaviour of the beamformer BMF in the same critical scenario of fig. 5, where a replica of the co-channel interferer was present in the same direction of the useful signal.

As it can be noticed from the radiation diagram of fig. 8, the power is now mainly transferred in the useful echo direction, so that the diagram shows a zero also in the useful direction, in addition to that of the interferer. This behaviour can be explained since the introduction of the time dimension in the functional enables the combination of echoes, even when these should be time delayed. We can notice the capability of the mixed functional to select in space, among the different delayed echoes that are coherent with the training sequence, the one characterized by the greater ratio between signal and interferer.

This behaviour enables to manage also mobile users with superimposed nominal directions, whenever they have an opportune spatial dispersion of echoes. It can be experimentally demonstrated how, in RCS environment, this enables a considerable reduction of the intercell handover probability.

The joint estimate of the optimum equalization parameters, however requires a higher number of parameters than a time only estimate. In particular, in the case of FDMA-TDMA systems with comparatively short training sequences (just as in the GSM), two potential problems arise:

- a growth in calculation complexity in the joint equalization method, compared to a disjoint equalization of the prior art;
- a higher variance in the estimate of the optimum equalization parameters, and therefore a slower convergence speed of the same.

The length of the training sequence represents a critical parameter in the equalizers used, or that can be used, in the above mentioned systems, since the algorithms for the joint estimate of the optimum equalization parameters must identify the channel impulse response, filtered by the beamformer BMF, availing of a limited number of samples, that is the 26 of the midamble of the GSM burst.

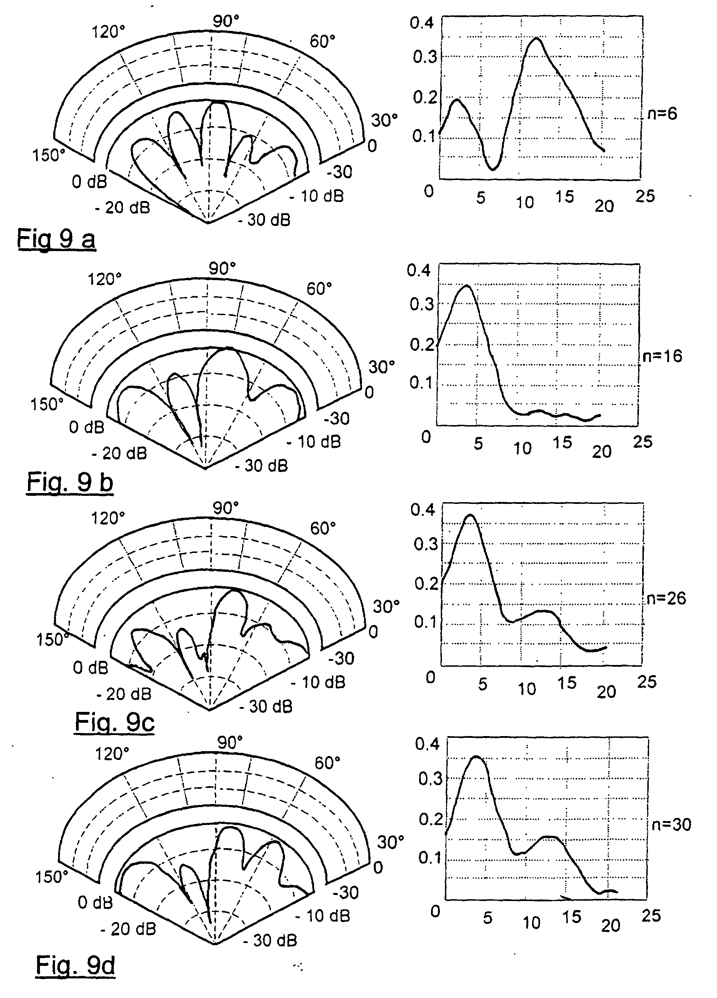

Fig. 9 shows, from top to bottom, a sequence of radiation diagrams on the azimuth plane and of representations of the channel impulse response, "photographed" on completion of n iterations of their joint estimate, made through the algorithms adopted at steps 1, 2 and 3. The scenario shown relates to a useful signal and to a co-channel interferer (denoted with "o" and "×" respectively on the outer arc), both accompanied by their own echo delayed by 10 $\mu s$ (denoted with the same symbols placed just under the outer arc).

Making reference to fig. 9 it is possible to notice how the total convergence is dominated by the convergence speed of the impulse response $\mathbf{h}_{opt}(n)$. At instant $n = 6$, when the statistical basis is not sufficiently extended to make a correct estimate of the impulse response, the beamformer BMF introduces some zeroes also coinciding with the echoes of the useful signal. Also for $n = 16$, that is when the estimate of $\mathbf{h}_{opt}(n)$ leads to recognize the sole main impulse, the beamformer BMF does not behave yet in an optimum way, since it introduces a zero in a position coinciding with the delayed echo of the signal. However, we can already notice that for $n = 26$, as well as for $n = 30$, the channel identification enables the identification of the delayed echo as useful signal, and therefore the radiation diagram shows the zeroes only coinciding with the interferer and the relevant echo.

A more detailed analysis of the convergence speed can be made evaluating the BER at the output of the,

receiver of fig. 6 as the midamble length varies, when it operates in critical conditions, for instance with $C/I$ = - 10 dB.

Figures 10 and 11 show the results of this analysis referred to a scenario that includes a co-channel interferer, in addition to the useful, for three different values of the signal-noise ratio SNR at the input of the receiver 10, 20, and 30 dB. More in particular, the curves have the length of the training sequence on the x-axis, expressed as number of samples, and the BER on the y-axis. Fig. 10 is referred to a situation with $C/I$ = - 10 dB, while fig. 11 to a $C/I$ = 0 dB.

Making reference to figures 10 and 11, the receiver performance can be considered stabilized in both the cases for values of midamble length between 20 and 26 samples. In fact, the almost total slope variation of the curves is in this area, and this indicates that the convergence of the optimum equalization parameters inside the training sequence is reached.

Making reference to fig. 12, we notice that the general block diagram of a receiver whose equalizer is the one shown in fig. 6 with the addition of a portion that considers the adaptive operation out of midamble.

Comparing figures 6 and 12, it can be noticed that the two representations of the equalizer differ due to the fact that in fig. 12:

- and additional RIT block is highlighted, introducing a delay $D$ on the path of the bus of the input vector $\mathbf{y}(n)$ towards the FUNZ block;

- the FUNZ block is reached by a vector $\hat{\mathbf{x}}'(n)$ instead of the training sequence

$$\left\{ x_n \right\};$$

- there is a new DECTEMP block that stored the vector $\hat{\mathbf{x}}'(n)$, coming out from the STIM block.

As we shall see describing the relevant operation, the schematization of fig. 12 is suitable to the operation in presence of channels with time varying characteristics and/or in presence of non-stationary interferers, that is enabling out of the training sequence, which therefore cannot be identified and cancelled considering the sole midamble in the estimate of the optimum parameters of the equalizer. Just for this reason the two schematizations of figures 6 and 12 are complementary between them, meaning that during the processing of the midamble the first one is active, and at the end, and for the whole remaining duration of the burst the second one is active. In practice both the schematizations can be referred to two different operation modes of a unique structure of equalizer.

As it is known the Doppler effect is one of the causes that in a mobile radio context more contributes to render the characteristics of channels time varying. It consists in a small frequency variation of the signal following the movement of the mobile, which involves a slow time variation of the amplitude of echoes received. The channel thus results time-varying, and even if the variations take place very slowly, can be useful to try to follow them updating time by time the optimum values of parameters $\mathbf{h}_{opt}$ and $\mathbf{w}_{opt}$ estimated during the midamble. In this way we can improve the demodulation quality, since the estimator STIM is made adaptive, since it recalculates at each step the branch metrics on the basis of the estimate of $\mathbf{h}_{opt}$, which in its turn is affected by the $\mathbf{w}_{opt}$ one.

From the operational point of view, it may be convenient to update (according to the method described later on) the optimum couple of parameters $\mathbf{h}_{opt}$ and $\mathbf{w}_{opt}$ estimated during the midamble, and simultaneously equalize the signal received, starting from the two ends of the midamble and proceeding in parallel in the two directions towards the burst ends, previously stored and synchronized. The deriving higher circuit parallelism enables to avail of a double time for the execution of the calculations. This is a significant advantage, considering the high number of single calculation elements to perform in a symbol time of 3,69 μs only, which would be doubled using two semibursts in parallel.

The presence of non-stationary interferers inside the transmission bus can be explained by the fact that the BS relevant to different cells are not necessarily synchronized among them. For instance, in the case of an RCS approach to the problem of the increase of the spectral efficiency, we can expect to have co-channel interferers in cells very close to that where is the mobile transmitting the useful signal. Since it is not possible to synchronise all the BS, it is possible that an interferer disturbs the transmission only during a part of the burst and therefore it cannot be "identified" and cancelled during the transmission of the training sequence.

The equalizer of fig. 12, thanks to the possibility to update during the whole burst the couple of optimum parameters $\mathbf{h}_{opt}$ and $\mathbf{w}_{opt}$ estimated during the midamble, is thus enabled to face also the case in which one or more interferers disturb the useful signal starting from an instant outside the time slot where the training sequence is transmitted.

In the operation, we can say just from now that, with the details we shall give below, the algorithm developed by the FUNZ block remains almost unchanged. This can also be understood from the great similarity existing between the pictures in figures 6 and 12, made more evident due to the fact that the RIT block, delaying the vector $\mathbf{y}(n)$ of a discrete time $D$ can be included in the FUNZ block.

The adaptive operation requires the knowledge of the sequence of data transmitted

$$\left\{x_n\right\}.$$

When these are not known, that is when the training sequence is no more available, the same must be replaced by data

$$\left\{\hat{x}_n\right\}$$

decided in the demodulation process. It is thus introduced an inevitable delay between the samples of the signals to the antennas and the corresponding data of the MLSE estimated sequence, both necessary to determine the error. In fact, as it can be noticed in fig. 12, before the data $x_n$ relevant to instant $n$ is available, we must wait both for the delay L introduced by the matched filter FADAT, and the delay due to the latency time of the Viterbi algorithm necessary for the emission of sufficiently reliable decisions. More in particular, if $D$ is the total delay ($L$ + latency of Viterbi), data decided of the sequence

$$\left\{\hat{x}_n\right\}$$

are available only at instant $n + D,$ and therefore the estimate of the best equalization parameters $\mathbf{h}_{opt}(n)$ and $\mathbf{w}_{opt}(n)$ at instant $n$ can avail of the knowledge of inputs on the antenna and of data decided only up to instant $n - D$, that is the vectors $\mathbf{y}(n - D)$ and $\mathbf{x}(n - D)$. The RIT block compensates the delay already existing on the other way.

It is worth to say again that vector $\mathbf{x}(n)$ contains now the decided data $\hat{x}_n$, while during the combined estimate of the optimum equalization parameters, made during the midamble, the same vector contained already known data $x_n$ and therefore without delay. The statement made on vector $\mathbf{y}(n - D)$ means that, concerning the calculation of $\mathbf{h}_{opt}(n)$ and $\mathbf{w}_{opt}(n)$, the mean at the $n$-th instant calculated on the $N$ elements of the columns of matrices $\mathbf{R}_{xx}, \mathbf{R}_{xy}, and \mathbf{R}_{yy}$ concerns elements included between the instant $n - D$ and instant $n - (D + N)$.

What in pratice occurs due to the delay $D$, is that the combined estimate of the optimum equalization parameters at instant $n$ results in delay compared to the channel variations, which have effect without any delay on symbols $\mathbf{y}(n)$ received. Two needs therefore conflict. The first one is to maintain high the latency of the Viterbi algorithm, to assure correct decisions avoiding error propagation in the estimate loop. The second need is to furnish the data decided in the shortest time to the FUNZ block, in order not to introduce an excessive delay in the updating of the best equalization parameters, such to compromise the possibility to follow quick variations in the channel characteristics.

The approach followed in the subject method is to use in the estimate of the optimum equalization parameters, a sequence of low delay estimated data, represented by the $L$ elements of the vector $\mathbf{x'}(n)$. The latter, is obtained forcing the estimator STIM to decide just after few steps ( 4 or 5 approx.), which is the more probable sequence, obtained climbing the trellis the maximum likelihood path. Data finally decided by the sequence $\{x(n)\}$ are on the contrary available at the end of the burst, in order the same are as reliable as possible.

The above mentioned technique, which solves the problem to avail in advance of the data of an almost correctly estimated sequence, is called "Per-Survivor Processing", or PSP technique, and is described in the paper under the title "Persurvivor processing: a general approach to MLSE in uncertain environments", authors: R. Raheli, A. Polydoros and C. K. Tzou, published in IEEE Trans. Commun., vol. 43, p. 354-364, February/March/April 1995. With this technique the Viterbi algorithm can be used in presence of one or more unknown, or not well determined parameters, in this case the samples of the optimized impulse response, which if on the contrary were known could be profitably used in the updating of branch metrics.

Since low delay decisions can result wrong, an error propagation phenomenon can be originated due to a vicious circle establishing in the loop formed by the feedback of $\mathbf{x'}(n)$ toward the block FUNZ. In fact, considering all the elements of vector $\mathbf{x'}(n)$ as the result of single low delay decisions at symbol time, as belonging to a sequence running in a shift register long $L$ (this is what actually occurs in the representation of the states according to Viterbi), a wrong decision would finally produce its negative effects for a number of symbol times equal to that defined for low delay decisions.

The subject equalization method eliminates also this second drawback by replacing, at any symbol time $n$, all the $L$ elements of vector $\mathbf{x'}(n)$ by a same number of temporary data directly copied from the maximum likelihood

**EP 1 084 536 B1**

path in the trellis valid at the time of *n*-th symbol.

Fig. 13 shows in fact an example where at instant *N* a wrong temporary decision is taken in the trellis, which however does not propagate because at the subsequent instant *N* + 1 the decided sequence copied is the correct one. Actually, not always things can proceed like this, but very likely this is verified in presence of interferers not particularly intense.

The operation method just described makes the updating of the optimum parameters out of the midamble more accurate, remaining the approximation introduced by low delay decisions. Furthermore, to improve the adaptive behaviour of the equalizer of fig. 12, it is necessary to introduce a λ coefficient so-called "forgetting factor", in order to less weigh the less recent data. By this, recalling the (58), the matrix **R** at instant *n* can be written as:

$$R(n) = \lambda R(n-1) + g_n g_n^* \tag{72}$$

$$g_n = \begin{bmatrix} y(n) \\ \hat{x}'(n) \end{bmatrix} \tag{73}$$

where λ is an arbitrary real constant for which: 0 < λ ≤ 1, and **g**$_n$ is an updating vector defined as in the (59), with the difference that its elements are here the low delay decisions.

Likewise, recalling the difference matrix (57) and the (58), we can write:

$$R(n) = F(n)R(n-1)F^*(n) + g_n g_n^* \tag{74}$$

being:

$$F(n) = \sqrt{\lambda} I \tag{75}$$

With this position the updating of the Cholesky factor can be directly obtained from equation (74). In fact, let $\bar{\mathbf{L}}$ the Cholesky factor of **R**, we can update the same, likewise we have done in the (61), according to the relation:

$$\begin{bmatrix} \bar{\mathbf{L}}(n) & 0 \end{bmatrix} = \begin{bmatrix} \sqrt{\lambda}\bar{\mathbf{L}}(n-1) & \mathbf{g}_n \end{bmatrix} Q(n) \tag{76}$$

With all the above clarifications, the estimate of parameters **h**$_{opt}$(*n*) and **w**$_{opt}$(*n*), made adaptive, is obtained applying the recursive algorithm already described for the non adaptive estimate made by the FUNZ block of fig. 6.

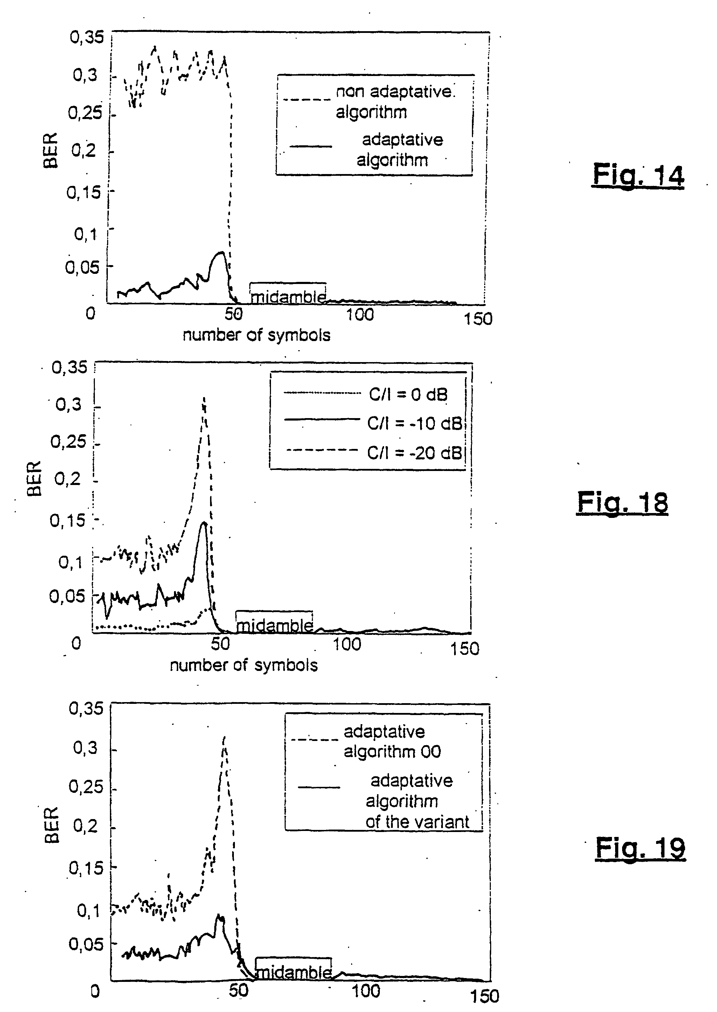

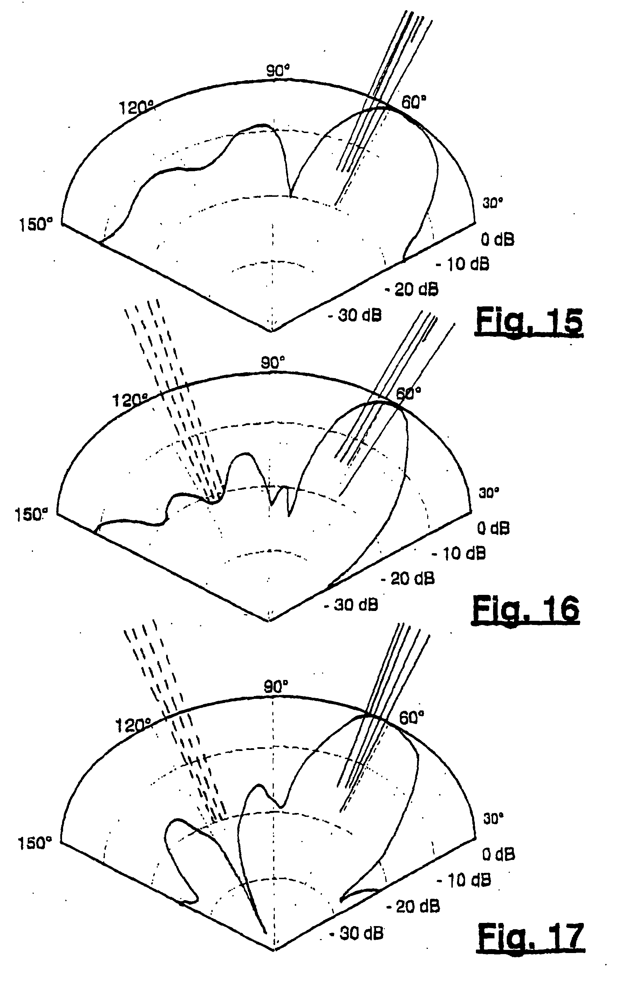

Making reference to figures 14, 15, 16, and 17, the actual adaptive equalization of the subject method are shown.

Fig. 14 shows two BER trends along the burst of a same number of demodulated signals, for an interferer disturbing up to the 50th symbol. A first trend (dashed line) is relevant to the subject equalisation method, assuming to freeze the estimate out of the midamble, while the second trend (solid line) relates to the same method enabling the performance of the adaptive operation. The input signal shows $\frac{E_b}{N_0}$ = 10 *dB* and $\frac{C}{I}$ = 0 *dB*; the trends are averaged on 500 performances. The BER indicates the probability that the generic symbol is demodulated in a wrong way, for instance for bad equalization. As it can be noticed from the first curve, if the burst is demodulated using the equalization parameters estimated with the training sequence, the performance greatly deteriorate for the time the interferer is present.

The second curve shows on the contrary, that the adaptive operation can limit the degradation of the performances. In fact, proceeding from centre to the ends, it can be noticed how the performances deteriorate coinciding with the arrival (in the calculation) of the interferer, to better later on, after equalization. This means that the equalizer could adapt to the new transmission situation and vary the radiation diagram of the antenna array in order to cancel the interferer. The next figures 15, 16, and 17 show radiation diagrams on the azimuth plane relevant to the curve with solid line of fig. 14.

Fig. 15 shows the radiation diagram estimated at the end of the midamble, when the interferer is not still present. The arrival directions of the echoes of the useful signal are represented with solid line with line lengths having

29

length proportional to the power of the relevant echo, expressed in dB.

Fig. 16 shows the evolution of the previous radiation diagram immediately after the identification of the interferer, whose echoes are represented by dashed lines having length proportional to the power of the relevant echo, expressed in dB.

Fig. 17 shows the radiation diagram when the joint estimate of the optimum equalization parameters has reached the convergence. As it can be noticed, the beamformer can cancel the signal coinciding with the arrival directions of the interferers.

The evaluation of figures 14 and 17 shows that applying the equalization method scope of the present invention, the joint estimate of the optimum equalization parameters can converge towards a couple of vectors $\mathbf{h}_{opt}(n)$ and $\mathbf{w}_{opt}(n)$ that can assure a good quality in demodulation, even in presence of non-stationary interferers. What just stated is true until the non-stationary interferer is in the same size range of the useful signal. In the contrary instance, a sudden peak of the demodulated signal can occur in the BER, that can hardly be taken to acceptable values in a reasonably short time compared to the residual duration of the burst.

Fig. 18 shows three trends of BER along the burst of a same number of demodulated signals, for an interferer disturbing up to the 50th symbol. The three curves are referred to an input signals with $\frac{E_b}{N_0}$ = 10 *dB* and three different values of $\frac{C}{I}$, of 0, - 10, - 20 *dB*, respectively; the trends are averaged over 500 performances. The worsening of the convergence as the ratio *C/I* decreases is evident, in particular, we see that the BER does not drop at acceptable values until the ratio *C/I* remains lower than -10 dB.

The cause for this behaviour can be due to the delay, even small, affecting the low delay decisions in the MLSE estimate of data transmitted.

Just due to this delay the equalizer does not immediately detect the arrival of a strong interferer, in such a way that, when the first temporary decisions that consider the interferer are available, therefore suitable to take measure to cancel the same, it will have in the meantime caused a great number of wrong decisions, having an extent such to compromise the convergence of the estimate made by the FUNZ block.

The inconvenient is highly attenuated by the original embodiment of the present invention, which tries to cancel the delayed vision of the interferer in the adaptive equalization, in order to quickly cancel the non-stationary strong interferers.

The embodiment includes a phase for the continuous monitoring of power received on the antennas, and for the detection of possible peaks higher than a set threshold. The detection of a peak at an instant $\bar{n}$ is used to automatically select the operation of the equalizer according to the methods of the embodiment. Since noises to be detected are sufficiently strong ones only, a particularly sophisticated power peak detection method is not necessary. For instance, it is possible to use a non-coherent detection method, known to those skilled in the art. In the receiver of fig. 12, for ease of representation, we have not included an appropriate block performing the above mentioned functions.

The detection phase is profitably made in parallel to normal operation out of the midamble. The embodiment quickly exhausts its effects in a transient time having $\Delta T$ duration (of about twenty samples) necessary, as we shall see later on, to the setting in the computation of some matrices used by the FUNZ block. When $\Delta T$ elapses, it is convenient to automatically reselect the original operation that results more effective at transient exhausted.

The strategy implemented by the embodiment to cope with strong intensity stationary interferers, is to advance at instant $\bar{n}$ the future knowledge about the interferer to cancel. In this way the interferer is "seen" in advance in the calculations, that is before the first relevant decisions are available and the adaptive algorithm of error minimization can start updating the beamformer coefficients to try to eliminate the noise. The above mentioned strategy is implemented in transient $\Delta T$, dividing in two elementary phases (1. and 2.) the updating of matrix $\mathbf{R}(n)$. In practice, we proceed as follows:

1. during this first phase, which elapses within the symbol time $\bar{n}$, it is anticipated the updating of the sole spatial covariance matrix $\mathbf{R}_{yy}$ with vectors $\mathbf{y}(n)$ obtained from the samples of signals on the antennas, present starting from instant $\bar{n}$ up to instant $\bar{n} + \Delta T$ in the stored burst. The statistical basis of the above mentioned matrix is thus extended, that now contains sufficient information of the interferer to cancel. The matrix $\mathbf{R}_{yy}$ is no more modified up to the end of the transient. Then we proceed to phase two.

2. During this second phase, for $\bar{n} < n \leq \bar{n} + \Delta T$, the covariance matrices on $\mathbf{R}_{xx}$ data with vector $\hat{\mathbf{x}}'(n)$, and the cross-covariance matrices $\mathbf{R}_{xy}$ with vectors $\hat{\mathbf{x}}'(n)$ and $\mathbf{y}(n)$ downstream the RIT block are updated. Concerning vector $\hat{\mathbf{x}}'(n)$ it is worthwhile pointing out that starting from $\bar{n}$, once the low delay decisions term is elapsed and in lack of appropriate measures which shall be shortly specified, this vector could express completely wrong decisions due to the performance of phase 1.

When the $\bar{n} + \Delta T$ instant is reached the estimate of the mentioned matrices proceeds in the conventional manner. The updating process of matrix $\mathbf{R}(n)$, in the time interval $[\bar{n}, \bar{n} + \Delta T]$, can therefore be expressed as follows:

$$\mathbf{R}(n) = \begin{bmatrix} \mathbf{R}_{yy}(\bar{n} + \Delta T) & \mathbf{R}^{*}_{xy}(n) \\ \mathbf{R}_{xy}(n) & \mathbf{R}_{xx}(n) \end{bmatrix} \qquad (77)$$

expressing the different time interval used for $\mathbf{R}_{yy}$ calculation with respect to the other terms.

The "anomalous" updating of matrix $\mathbf{R}(n)$ generates a setting transient having duration $\Delta T$ in the computation of matrices $\mathbf{R}_{xx}$ and $\mathbf{R}_{xy}$. Said interval just coincides with the amplitude of the time shifting in the updating of the spatial covariance matrix $\mathbf{R}_{yy}$.

The joint estimate of the optimum equalization parameters will therefore result "vitiated" by this type of approach, which however proves to be necessary to cope with quick variations of the channel characteristics, enabling the beamformer BMF to introduce some zeroes coinciding with the echoes of the new interferer, which otherwise it will not be able to introduce, unless with an excessive delay.

As a consequence of the matrix setting time $\mathbf{R}(n)$ too many errors could propagate in the estimate loop during the transient $[\bar{n}, \bar{n} + \Delta T]$, therefore a further feature of the method embodiment, is to update the vector $\mathbf{w}_{opt}(n)$ of the weights of the beamformer BMF during the transient only, maintaining the vector of the samples of the impulse response constant for the whole transient time at a value $\bar{\mathbf{h}}_{opt}$ it had at instant $\bar{n}$. The choice rewards the coefficients of the beamformer BMF since they result less sensitive to decision errors compared to the samples of the impulse response.

For what said above, we can now estimate even during the transient $[\bar{n}, \bar{n} + \Delta T]$ the optimum equalization parameters. In particular, $\bar{\mathbf{h}}_{opt}$ is constant and the (51), recalling the (77), enables to determine the vector $\mathbf{w}_{opt}$, solution of the equation:

$$R_{yy}(\bar{n} + \Delta T) w_{opt}(n) = R^{*}_{xy}(n) \bar{h}_{opt} \qquad (78)$$

in which $\mathbf{R}_{yy}(\bar{n} + \Delta T)$ is calculated at instant $\bar{n}$ and then kept constant for the whole $\Delta T$, while $\mathbf{R}^{*}_{xy}(n)$ is calculated at each instant $n$-th of the transient. As it can be noticed, due to $\bar{\mathbf{h}}_{opt}$ constant, the (67) and (68) need no more to be solved.

The previous considerations on the updating methods of matrix $\mathbf{R}(n)$ of the (77), in the time interval $[\bar{n}, \bar{n} + \Delta T]$, are verbatim transferred to the updating of the Cholesky factor of the same.

Concerning this last point, at an instant $\bar{n}$ of the detection of the power peak received on the antennas, the following actions are made:

- within the symbol time $\bar{n}$, it is updated the sole triangular matrix $\mathbf{L}$ with vectors $\mathbf{y}(n)$ obtained from the samples of signals on the antennas, present in the stored burst, starting from instant $\bar{n}$ up to instant $\bar{n} + \Delta T$;
- for $\bar{n} < {'}n \leq \bar{n} + \Delta T$, matrices $\mathbf{U}(n)$ and $\mathbf{L}_s(n)$ rectangular and triangular, respectively, are updated with said updating vector $\mathbf{g}_n$ and equation (56) is solved, keeping the vector of samples of the impulse response $\bar{\mathbf{h}}_{opt}$ constant at the value assumed at said instant $\bar{n}$;
- the calculation methods before said instant $\bar{n}$ are restored when time $\bar{n} + \Delta T$, elapses.

For what said above, the Cholesky factor can be submitted to triangular factorization in this time interval, as follows:

$$\bar{\mathbf{L}}(n) = \begin{bmatrix} \mathbf{L}(\bar{n} + \Delta T) & \mathbf{0} \\ \mathbf{U}(n) & \mathbf{L}_s(n) \end{bmatrix} \qquad (79)$$

With all the above considerations relevant to the possibility to use in the calculations either directly the matrix $\mathbf{R}(n)$, or preferably the Cholesky factor $\bar{\mathbf{L}}(n)$ of the same, the different steps of the adaptive estimate of the sole vector $\mathbf{w}_{opt}(n)$ of weights characterizing the method, embodiment, are connected to the corresponding ones of the adaptive algorithm as for the utilization method in the computation of low delay decided data

$$\{\hat{x}'_n\}.$$

Said adaptive algorithm in its turn, referred to the detailed description of the algorithm developed by the FUNZ block included in the receiver sketched in fig. 6, this description continuing to be valid making the modifications relevant to the time progress $\Delta T$ of matrix $\mathbf{R}_{yy}(\bar{n} + \Delta T)$ or of the relevant Cholesky factor $\mathbf{L}(\bar{n} + \Delta T)$.

This assumed, the weight vector $\mathbf{w}_{opt}(n)$ can be calculated either solving the (78) or, preferably, through Cholesky factorization and subsequent solution of the (56) which in this new context becomes:

$$L^*(\bar{n} + \Delta T)\mathbf{w}_{opt}(n) = U^*(n)\bar{\mathbf{h}}_{opt} \qquad (56')$$

Concerning this second opportunity however, it is necessary to analyze how to update the Cholesky factor, when it assumes the expression of the (79), applying the unitary transformation $\mathbf{Q}(n)$ defined in the (76). In the case of use of the embodiment, contrarily to the conditions that applied to the (61) and (76), it is necessary to update, at instant $\bar{n}$, only the $\mathbf{L}$ factor of the spatial covariance matrix $\mathbf{R}_{yy}$. Analyzing the mechanism according to which the unitary transformations are applied, we can realize how it is possible to update matrix $\mathbf{L}$ only "delaying" the updating of the other factors. It was previously said, making reference to (61) that a unitary rotation is generally implemented as a sequence of elementary transformations, $\mathbf{Q}_0$, $\mathbf{Q}_1$,$\cdots$, usually Givens rotations. The updating delay can be introduced remembering what expressed in the (62) and (63), where the single elementary transformation $\mathbf{Q}_i$ acts on the single column $l_i(n - 1)$ of factor $\mathbf{L}$ and on the column of generator $\mathbf{g}_n$. If we apply the transformation $\mathbf{Q}_i$ to the first $M$ elements of the $i$-th column, where $M$ is the order of matrix $\mathbf{L}$, it is possible to delay the updating of factors $\mathbf{U}$ and $\mathbf{L}_s$, storing the transformations occurred in $\mathbf{L}$ and restarting the updating of $\mathbf{U}$ and $\mathbf{L}_s$, once low delay decisions are newly reliable, that is at the end of the setting period $\Delta T$ of these matrices.

Fig. 19 shows two trends of BER along the burst of a same number of demodulated signals, for a strong interferer disturbing up to the 50th symbol. A first trend (dashed line) is relevant to the out-of-midamble adaptive method of the subject equalization method without the characteristic embodiment for rejecting strong interferers, while the second trend (solid line) relates to presence of this embodiment. The input signal shows $\frac{E_b}{N_0} = 10\ dB$ and $\frac{C}{I} = -20\ dB$ ; the trends are averaged over 500 bursts. It can be clearly noticed that the new method starts the adaptation first, thus succeeding in containing the peak in the trend of the error probability, and assuring a significant improvement in the quality of the demodulated signal.

Further bibliographic references useful to the comprehension of the "Displacement Theory" applied to the time-variant channel are reported in the following papers:

- "Time-Variant Displacement Structure and Triangular Arrays", by: A. H. Sayed, H. Lev-Ari and T. Kailath, published on IEEE Trans. on Signal Processing, vol. 42, No. 5, May 1994.
- "Fast Computation of Channel-Estimate Based Equalizers in Packet Data Transmission", authors: N. Al-Dhahir, J. M. Cioffi, published on IEEE Trans. on Signal Processing, vol. 43, No. 11, November 1995.
- "A Computationally Efficient FIR MMSE-DFE for CCI-Impaired Dispersive Channels", by N. Al-Dhahir, published in IEEE Trans. on Signal Processing, vol. 45, No. 1, January 1997.

The teachings of the equalization method scope of the present invention, find the relevant application in the equalizers included in the functional blocks of figures 6 and 12. The implementation of the above mentioned blocks is known to those skilled in the art, as well as the implementation of the functions indicated in the text which do not find corresponding blocks in the figures, except for the FUNZ block and the relevant internal blocks PESI and CAMP. Moreover, as a consequence of the different interrelation among the blocks that a joint estimate of parameters $\mathbf{w}_{opt}$, $\mathbf{h}_{opt}$ imposes versus a separate estimate, also the equalizer architecture does not result known.

In the detailed description of the FUNZ block below, reference shall be made to the sole representation of fig. 12, which enables to implement a sole equalizer capable to operate both during the midamble, and out of it, in this last case according to the adaptive method, or according to that of the alternative embodiment, after appropriate hardware/software selections controlled by events such as the end of the midamble, or the sudden arrival of a strong interferer.

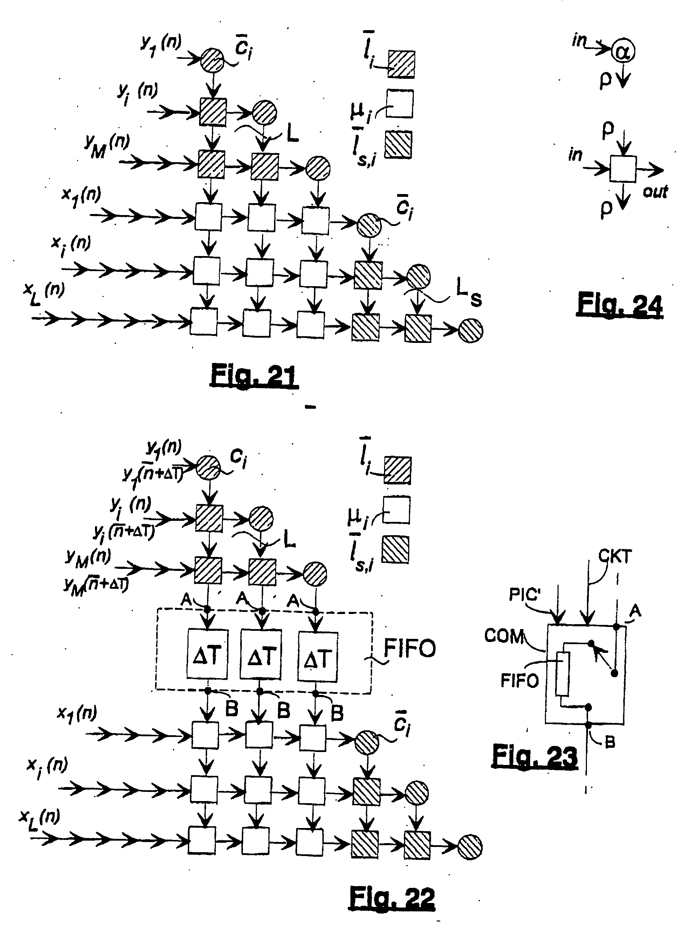

As far as the circuit realization of the FUNZ block is concerned, it is preferred to have recourse to circuit structures known as "systolic arrays", represented in figures 21, and 22. These structures have a high parallelism degree, that makes them suitable in themselves to operate on the matrices, but mainly to make almost simultaneously a number of calculations which should otherwise be made in sequence. A microprocessor based implementation would be well less effective, just because a common DSP is governed by a time sequence of elementary instructions making it more suitable to solve serial problems, contrarily to the systolic array that performs all the calculations in parallel in one symbol time of 3,69 μs (or in a double time in case of joint operation on the semibursts). Even if one wants to have recourse to a DSP of the RISC type, the latter would not have a parallelism comparable with that of the systolic array, which seems to be therefore "problem oriented". In the practice, the FUNZ block, as well as the remaining blocks of the equalizer of fig. 12, are profitably implemented through digital integrated circuits of the ASIC type (Application Specific Integrated Circuit).

Making reference to fig. 20, it can be noticed that the FUNZ estimate block includes five differently configured systolic arrays, indicated with SYSTOL1, SYSTOL2, SYSTOL3, SYSTOL4, and SYSTOL5, respectively. The vector **x**(n) referred to the samples of the training sequence

$$\left\{ x_n \right\}$$

stored in the receiver reaches a first input of the SYSTOL1 block, a second input is reached by vector **y**(n), and the third input by a MID control signal resulting true only coinciding with the midamble. On a first output bus the Cholesky factor $\bar{\mathbf{L}}(n)$ indicated in (61) is present, and reaches a first input of a two-input selector SEL, while a second output bus CONT connects SYSTOL1 to a first input of SYSTOL2.

The second input of the SYSTOL2 block is reached by vector $\hat{\mathbf{x}}'(n)$ referred to the data of the low delay decided sequence

$$\left\{ \hat{x}'_n \right\} ;$$

a third input is reached by vector **y**(n) coming from the RIT delay block; a fourth input BURST is a bus having reading access to a memory in which the receives writes the samples y(n) of the reception burst; a fifth input is reached by the forgetting factor λ, a sixth input is reached by a PIC' signal, we shall describe below, and finally a seventh input is reached by the MID control signal. The Cholesky factor $\bar{\mathbf{L}}'(n)$ is present on the output bus as indicated in the (76), that reaches the second input of selector SEL, whose selection input is reached by the MID control signal. The bus coming out from selector SEL is connected to one end of the switch block SWT controlled by a PIC' signal having duration $\Delta T$ coming from a PICSEL block. This last block receives the MID signal and two other signals indicated with PIC and TRANS on three relevant inputs, and on this basis generates the PIC' signal. The TRANS signal is active for a time $\Delta T$ equal to the duration of the transient operation foreseen for the method embodiment; it is a configurable parameter of the equalizer, like the forgetting factor λ. The presence of a logic, taking care of the generation and control of all the indicated signals, is obvious.

The PIC signal comes from a PICRIV block receiving the high frequency receipt signal directly from the antenna array ARY. The bus coming out from the other end of the SWT block is connected to an input of SYSTOL3, from which the intermediate vector $\mathbf{u}_n$ comes out, directed to a first input of SYSTOL4, whose other input is connected to the input of SYSTOL3. A vector $\mathbf{h}_{opt}(n-1)$ is present at a first output of SYSTOL4, directed towards an additional input of SYSTOL3. The vector $\mathbf{h}_{opt}(n)$ is present at a second output of SYSTOL4, directed towards a first input of SYSTOL5, whose second input is connected to the output of the SEL block. At the output of SYSTOL5 the vector $\mathbf{w}_{opt}(n)$ is present. The two blocks SYSTOL3 and SYSTOL4 are included in a functional block AUTOVET, whose input coincides with that of SYSTOL3 and whose output coincides with that of SYSTOL4.

The architecture of the FUNZ block of fig. 20 enables a full operation of the equalizer of fig. 12 both during the midamble and out of the same, according to the method scope of the invention and its alternative embodiment.

During the midamble, the MID signal results true, this condition is used to enable the array SYSTOL1 and disable SYSTOL2, to control the selector SEL in the selection of $\bar{\mathbf{L}}(n)$, and determine the closing of the switch SWT. Consequently, the bus of SYSTOL1 is extended towards the AUTOVET block extracting the portion relevant to matrix $\mathbf{L}_s$ and uses it to solve the (68) and (67), determining the vector $\mathbf{h}_{opt}(n)$. More in particular, the array SYSTOL3 calculates the intermediate vector $\mathbf{u}_n$ according to the (68) applying the "back-substitution" method, while the SYSTOL4 array calculates $\mathbf{h}_{opt}(n)$ according to the (67), again through "back-substitution". The array SYSTOL5 extracts from the bus coming from SEL the portion relevant to matrices **L** and **U** and uses it, together with vector $\mathbf{h}_{opt}(n)$, to solve the (56) and determine the vector $\mathbf{w}_{opt}(n)$, always via "back-substitution".

During the adaptive operation, the negate MID signal disables the array SYSTOL1 and enables SYSTOL2, and controls the selector SEL to the choice of $\bar{\mathbf{L}}'(n)$. In lack of a change in the logic condition in the PIC'signal, the switch SWT remains closed and the bus of SYSTOL2 is extended towards the AUTOVET and SYSTOL5 blocks; these last treat the relevant matrix components of the Cholesky factor $\bar{\mathbf{L}}'(n)$ like what said for $\bar{\mathbf{L}}(n)$.

Before the SYSTOL2 array starts operating, the transition from true to negate of the MID signal controls the transfer of the content of array SYSTOL1 on the CONT bus to be copied in the cells of SYSTOL2. The above mentioned operation enables the updating of the already existing Cholesky factor $\bar{\mathbf{L}}(n)$ according to the new calculation method foreseeing the use of the forgetting factor λ. If the above transfer were not foreseen, the array SYSTOL2 would newly estimate the factor $\bar{\mathbf{L}}'(n)$ but with lower possibilities versus the previous situation.

When the PICRIV block detects, at an instant $\bar{n}$, the presence of a power peak on the antennas, higher than the set threshold, the PICSEL block discriminates between two possible operation conditions. A first condition is that of strong interferer in presence of midamble, in this case the PIC' signal results false and the estimate during the midamble is not disturbed. The second condition is the strong interferer one out of the midamble, in this case the true signal PIC' controls the opening of the switch SWT, and controls appropriate switches included in the array SYSTOL2 that make a temporary modification in the structure of the array such to render it suitable to operate as foreseen in the method alternative. With true PIC' the AUTOVET block does not receive anything at input and freezes the value of vector $\bar{\mathbf{h}}_{opt}$ at instant $\bar{n}$ up to elapsing of $\Delta T$. The SYSTOL5 block solves the (56), always through "back-substitution", using the vector $\bar{\mathbf{h}}_{opt}$ and the matrices **L** and **U** of the Cholesky factor $\bar{\mathbf{L}}'(n)$ derived from the above mentioned structural modifications made to the array SYSTOL2, determining in this way the vector $\mathbf{w}_{opt}(n)$.

When time $\bar{n} + \Delta T$ elapses, the new condition of the PIC' signal controls the closing of the switch SWT, but the configuration of the array SYSTOL2 remains as modified up to the end of the burst, and the equalizer operation returns to the adaptive method.

Concerning the circuitry realization of the different blocks of fig. 20, the following must be pointed out:

- blocks PICRIV, PICSEL, RIT, SEL, and SWT, on the basis of the functional description supplied, can be implemented applying the common technical knowledge;
- the systolic arrays SYSTOL1, SYSTOL3, SYSTOL4, and SYSTOLS can be represented by an architecture of cells common to that of all known systolic arrays of triangular form. Their description therefore requires to specify the nature of the cells, to highlight where the array diversify among them and from those of the prior art. A functional description of the cells indicating the type of arithmetical operations made on the entering signal and on the pre-existing content to obtain the new content and the output signal, must be considered sufficient to their realization availing of the common technical knowledge in the field of systolic arrays and gate arrays.
- the systolic array SYSTOL2 avail of the same structure of SYSTOL1, but includes FIFO memories and electronic switches in the descent chain, as we shall see in fig. 22. The ways to obtain the above mentioned FIFOs and relevant switches in chips, are still those that enable to obtain the different arrays, that is the gate array technology of the ASIC type.

Of course, the FUNZ block can be implemented through architectures differing from the indicated one, it is possible for instance to use a unique systolic array grouping the SYSTOLI and SYSTOL2 functions, in this case it should be useless the transfer of the content to the end of the midamble. This new array must however be able to modify at the end of the midamble the arithmetic operations defining the content of the cells, since now it must be considered the forgetting factor $\lambda$.

With reference to fig. 21, in which the systolic array SYSTOL1 is represented in functional blocks, we can notice that there are single blocks having square shape, interconnected among them, denoted with $\bar{l}_i$, $\bar{u}_i$ e $\bar{l}_{s,i}$, and peripheral blocks having circular shape $\bar{c}_i$ connected to the first ones. The structure of the array has triangular shape, as that of the matrix $\bar{\mathbf{L}}(n)$ it reproduces. Actually, each block $\bar{l}_i$, $\bar{u}_i$, $\bar{l}_{s,i}$, and $\bar{c}_i$ represents an element of this matrix. As it can be noticed, blocks $\bar{l}_i, \bar{c}_i$ are grouped in the area of the upper sharp vertex corresponding to the position of the triangular matrix **L**, blocks $\bar{l}_{s,i}, \bar{c}_i$ are grouped in the area of the lower sharp vertex corresponding to the position of the triangular matrix $\mathbf{L}_s$, and finally blocks $\bar{u}_i$ are grouped in the remaining square area (or, more generally, rectangular) corresponding to the position of matrix **U**. Circular blocks $\bar{c}_i$ form the closing diagonal of the array, and the two blocks at the ends indicate the starting and the end of the updating. For ease of representation $3\times3$ matrices are shown.

Fig. 22 indicates the architecture of array SYSTOL2, obtained from that of fig. 21 interrupting the output line deriving from the blocks corresponding to the elements of the last line of the triangular matrix **L**, including identical FIFO memories having length such to introduce a delay equal to the transient $\Delta T$, and connecting the outputs of the FIFOs to relevant blocks corresponding to the elements of the first line of matrix **U**. The array SYSTOL2 can operate according to the adaptive method and to the method embodiment, the means enabling this possibility shall be described.

Fig. 23 shows an electronic switch COM, identical to the other ones included in the array SYSTOL2, inserted between two points A and B in fig. 22, corresponding to the input and output ports of a generic FIFO. The central point of the switch COM is connected to point A of origin of the signal to switch, while the FIFO is connected between the two output terminals of COM, one of which is connected to point B. The active PIC' signal controls the switching in order to insert the FIFO between A and B as shown by the position of fig. 23; the signal propagating on the corresponding column is thus delayed by $\Delta T$. However, at the end of the transient $\Delta T$, the FIFO remains inserted up to the end of the burst, instant at which occurs the opposite switching that shortcircuits points A and B, and the delay is excluded returning to the adaptive operation in presence of a new burst. In the figure it is also highlighted a clock signal CKT at symbol frequency that sets the operation time of the FIFO. There will be as many COM blocks as are the columns over the FIFOs.

Referring to fig. 24, we can notice that circular blocks are affected by an input signal *in* and by an output signal $\rho$. Also square blocks are affected by the same signals, but they have also an additional input signal $\rho$ and an additional

output signal *out.* An exception are the square blocks of the last horizontal row and the last circular block of the same, where the output signal $\rho$ is missing. The content of blocks, similarly for each type of block, is denoted with $\alpha$.

SYSTOL1 and SYSTOL2 arrays are arranged in the figures in such a way that input signals, corresponding to the updating vector:

$$\mathbf{g}_n = \begin{bmatrix} \mathbf{y}(n) \\ \mathbf{x}(n) \end{bmatrix}.$$

enter from the left side. More in particular, numeric signals $y_1(n),...,y_i(n),....,y_M(n)$ are directed towards the blocks of the first vertical line of the array, corresponding to the elements of the first column of the triangular matrix **L,** while numeric signals $x_1(n),...,x_i(n),....,x_L(n)$ are directed towards the blocks corresponding to the elements of the first column of matrix (rectangular) **U.** Concerning the SYSTOL2 array, the vector **x**(n) both during the adaptive operation which during the alternative coincides with vector **x'**(n); vector **y**(n) during the adaptive operation shall be that coming out from the RIT block, that is **y**(n - D); during the variant on the contrary it shall be a vector $\mathbf{y}(\bar{n} + \Delta T)$ consisting of samples $y_1(\bar{n} + \Delta T),...,y_i(\bar{n} + \Delta T),....,y_M(\bar{n} + \Delta T)$ of the stored burst, transferred in SYSTOL2 and there used in the advanced updating of the Cholesky factor $\mathbf{L}(\bar{n} + \Delta T)$ of the spatial covariance matrix $\mathbf{R}_{yy}(\bar{n} + \Delta T)$.

Even if not expressly indicated, provisions are made for a general clock signal of the array of figures 21 and 22, at a frequency much higher than the symbol one, which simultaneously reaches all the blocks $\bar{l}_i$, $\bar{u}_i$, $\bar{l}_{s,i}$, and $\bar{c}_i$ to control the relevant single operation, the bench of FIFO memories of fig. 22 is updated at symbol time.

The geometric arrangement of the blocks shown in figures 21 and 22 is observed on the chip area, where the blocks form a same number of cells; this enables the signal originating in the upper vertex to propagate along the descent chain. It is obvious that the correct content of the cells shall be available only after a time sufficient to the complete propagation of the signal towards the opposite end of the diagonal made of the circular blocks, following the longer path between the cells. The single signals entering the left side of the array are associated to a corresponding number of arrows that indicates the delay according to which their effect develops.

In the operation, systolic arrays SYSTOL1 and SYSTOL2 are respectively referred to the updating of the Cholesky factor $\bar{\mathbf{L}}(n)$ of matrix $\mathbf{R}(n)$ as indicated in the (61) and (76), we repropose for ease of reading:

$$\begin{bmatrix} \bar{\mathbf{L}}(n) & 0 \end{bmatrix} = \begin{bmatrix} \bar{\mathbf{L}}(n-1) & \mathbf{g}_n \end{bmatrix} \mathbf{Q}(n) \tag{61}$$

$$\begin{bmatrix} \bar{\mathbf{L}}(n) & 0 \end{bmatrix} = \begin{bmatrix} \sqrt{\lambda}\bar{\mathbf{L}}(n-1) & \mathbf{g}_n \end{bmatrix} \mathbf{Q}(n) \tag{76}$$

During the strong interferers the updating indicated by the (76) is modified by the introduction of the FIFO as seen in figures 22 and 23, but the relations we shall now indicate will continue to have value on the elements of matrix $\mathbf{L}(\bar{n} + \Delta T)$.

The unitary rotation **Q**(n) is made associating to each cell a relevant operation made on input signals and on the already existing content, to obtain the output signals and the new content. In particular, for instance, of the (76):

- *in* signals propagate in horizontal direction and correspond to the $y_1(n),...,y_i(n),....,y_M(n)$ e $x_1(n),...,x_i(n),....,x_L(n)$ signals at the input of the cells of the first column of the array; for the remaining cells indicated by square blocks the *in* signals correspond to the *out* signals coming out from the previous cells in the horizontal propagation direction of the signal;

- signals $\rho$ propagate in vertical direction and are generated at the output of each cell, both square and circular, calculating the following expression:

$$\rho = \frac{in}{\alpha\sqrt{\lambda}} \tag{80}$$

where $\lambda$ is the forgetting factor, and $\alpha$ is the new content of the cells calculated as follows, concerning the sole circular cells corresponding to the main diagonal of matrix $\bar{\mathbf{L}}$:

$$\alpha \leftarrow \sqrt{\lambda |\alpha|^2 + |\text{in}|^2} \tag{81}$$

the new $\alpha$ being pointed by the arrow;

- for the remaining square cells the new $\alpha$ is determined jointly to the signal *out* that propagates in horizontal direction, in fact, the following matrix relation applies:

$$\begin{bmatrix} \alpha & out \end{bmatrix} \leftarrow \begin{bmatrix} \alpha\sqrt{\lambda} & in \end{bmatrix} \frac{1}{\sqrt{1+|\rho|^2}} \begin{bmatrix} 1 & \rho \\ \rho^{\cdot} & -1 \end{bmatrix} \tag{82}$$

where the vector pointed by the arrow indicates the new values of $\alpha$ e *out.*

Relations similar to the (80), (81), and (82) are valid for the updating according to the (61), giving $\lambda = 1$.

Concerning fig. 22, the introduction of FIFO memories in the descent chain of the systolic array is the simple circuit translation of what said describing the method embodiment concerning the updating of the sole Cholesky factor $\mathbf{L}(\bar{n} + \Delta T)$. In fact, we said that it is possible to delay the updating of $\mathbf{U}$ and $\mathbf{L}_s$ factors storing the results of the elementary transformations $\mathbf{Q}_i$. The delay introduced at instant $\bar{n}$ is then recovered at instant $\bar{n} + \Delta T$, that is when the estimator STIM is able to supply the reliable symbols decided and can therefore restart a normal updating of the Cholesky factor $\bar{\mathbf{L}}(n)$.

As for the functional description of the cells belonging to the systolic arrays SYSTOL3, SYSTOL4 and SYSTOL5, that is the mathematical relations developed in the cells on the basis of the previous content and of new inputs to generate new outputs, the sector technician is enabled to obtain the above mentioned systolic arrays, applying the steps of the back-substitution method described in the text to solve the relevant equations indicated, and availing of the common technical knowledge in the field of systolic arrays.

Profitably, the equalizer belonging to the receiver of fig. 12 (in practice the whole block structure shown in the figure) is duplicated to process in parallel the two semibursts at two sides of the midamble. A burst reconstruction circuit placed downstream the two equalizers puts in the right time order the data of the two estimated subsequences, obtaining a unique sequence

$$\left\{ \hat{x}_n \right\}$$

of data transmitted estimated at maximum likelihood.

**Claims**

1. Equalization method for the cancellation of isofrequential interferers in signals received by array antennas (ARY) of base stations of a cellular mobile system, said signals ($\mathbf{y}(n)$) being received under the form of bursts of data symbols of a transmission burst, including a training sequence

$$\left( \left\{ x_n \right\} \right)$$

known to the receiver and usable to estimate the impulse response of the transmission channel, said bursts received being demodulated, digitized, stored, and synchronized through discrimination of the training sequence, including the following steps:

a) spatial filtering of signals coming from the antennas ($\mathbf{y}(n)$), using a spatial filter (BMF) that combines among them corresponding *n*-th symbols of the bursts on the basis of *n*-th weights of a sequence of weights

$$\left(\mathbf{w}_{opt}(n)\right)$$

obtaining a beamformed received sequence

$$\left(\mathbf{y}_{out}(n)\right);$$

**b)** time filtering (CAMP) data of the training sequence

$$\left(\{x_n\}\right)$$

for estimating a sequence of samples ($\mathbf{h}(n)$) of the impulse response of the transmission channel;
**c)** calculating a square error ($e_n$) originated from the comparison between the corresponding $n$-th samples of the estimate impulse response (h(n)) and the beamformed sequence

$$\left(\mathbf{y}_{out}(n)\right);$$

**d)** joint optimization of said weights and samples

$$\left(\mathbf{w}_{opt}(n), \mathbf{h}_{opt}(n)\right)$$

by minimizing a functional (FUNZ) corresponding to said mean square error ($e_n$);
**e)** time filtering of the signal

$$\left(\dot{y}_{out}(n)\right)$$

generated by said spatial filter (BMF) using a filter (FADAT) matched to the sequence of samples

$$\left(\mathbf{h}_{opt}(n)\right)$$

of the impulse response of the transmission channel;
**f)** providing said sequence of samples of the impulse response of the transmission channel

$$\left(\mathbf{h}_{opt}(n)\right)$$

and a sequence of sample at the output of said matched filter (FADAT) to a Viterbi estimator for the detection of the received data;
**g)** updating the optimized values of said weights and samples

$$\left(\mathbf{w}_{opt}(n), \mathbf{h}_{opt}(n)\right),$$

out of the time slot of the training sequence, through repetition of the previous steps **a)**...**f)**, replacing the symbols of the training sequence

$$\left(\{x_n\}\right)$$

by a low delay estimated sequence

$$\left(\{\hat{x}'_n\}\right),$$

thus rendering said equalization adaptive,

**characterized in that** while the previous steps are executed a parallel continuous monitoring of the power received on the antennas (ARY) for detecting possible peaks exceeding a given threshold in coincidence of the arrival of a strong non-stationary interferer is carried out, in case of detection of a peak over threshold at an instant $\bar{n}$, step **d)** is modified for the all duration starting from the instant $\bar{n}$ up to an instant $\bar{n} + \Delta T$ of a transient devoted to the rejection of strong interferent outside the midamble, by updating the sole weights

$$\left(\mathbf{w}_{opt}(n)\right)$$

of the spatial filter (BMF) maintaining the samples of the impulse response

$$\left(\mathbf{h}_{opt}(n)\right)$$

constant at the values they have at the instant $\bar{n}$, then the execution of unmodified step **d)** is restored at the end of said transient.

2. Equalization method according to claim 1, **characterized in that** in absence of a strong non-stationary interferer the preceding step **d)** is executed in closed form by the following sub-steps:

   - calculation of a spatial covariance matrix $\mathbf{R}_{yy}$ of the signals coming from the antennas ($\mathbf{y}(n)$), a covariance matrix $\mathbf{R}_{xx}$ of the data samples

   $$\left(\{x_n\}, \{\hat{x}'_n\}\right),$$

   a cross-covariance matrix $\mathbf{R}_{xy}$ between data samples and inputs to the antennas

   $$\left(\{x_n\}, \mathbf{y}(n)\right),$$

   and the Schur complement matrix $\mathbf{R}_s^{\perp} = \mathbf{R}_{xx} - \mathbf{R}_{xy}\mathbf{R}_{yy}^{-1}\mathbf{R}_{xy}^*$, being * the complex conjugate, of a matrix

   $$\mathbf{R} = \begin{bmatrix} \mathbf{R}_{yy} & \mathbf{R}_{xy}^* \\ \mathbf{R}_{xy} & \mathbf{R}_{xx} \end{bmatrix};$$

   - estimation of an eigenvector $\mathbf{h}_{opt}(n)$ of matrix $\mathbf{R}_s^{\perp}$ associated to the minimum module eigenvalue $\gamma$ given by $\mathbf{h}^*\mathbf{R}_s^{\perp}\mathbf{h} = -\gamma$, said eigenvector including said optimized samples;
   - estimation of said optimized weights by calculating a vector $\mathbf{w}_{opt}(n)$ solution of the equation: $\mathbf{R}_{yy}\mathbf{w}_{opt}(n) = \mathbf{R}_{xy}^*\mathbf{h}_{opt}(n)$.

3. Equalization method according to claim 1, **characterized in that** in presence of a strong non-stationary interferer the preceding step **d)** is executed in closed form by the following sub-steps:

   - calculation of a spatial covariance matrix $\mathbf{R}_{yy}(\bar{n} + \Delta T)$ of the signals coming from the antennas ($\mathbf{y}(n)$) and a complex conjugate cross-covariance matrix $\mathbf{R}_{xy}^{*}(n)$ between data samples and inputs to the antennas

$$\left(\left\{x_n\right\}, \mathbf{y}(n)\right),$$

matrix $\mathbf{R}_{yy}(\bar{n} + \Delta T)$ being calculated at instant $\bar{n}$, and then kept constant for the whole $\Delta T$, using vectors $\mathbf{y}(n)$ obtained from the samples of signals on the antennas present in the stored bursts, starting from instant $\bar{n}$ up to the instant $\bar{n} + \Delta T$, while $\mathbf{R}_{xy}^{*}(n)$ being calculated at each instant $n$-th of the transient;

-   estimation of said optimized weights by calculating a vector $\mathbf{w}_{opt}(n)$ solution of the equation: $\mathbf{R}_{yy}(\bar{n}+\Delta T)\mathbf{w}_{opt}(n) = \mathbf{R}_{xy}^{*}(n)\mathbf{h}_{opt}$, where $\bar{\mathbf{h}}_{opt}$ is a vector including the samples of the impulse response at the instant $\bar{n}$.

4.  Equalization method according to claim 1, **characterized in that** in absence of a strong non-stationary interferer the preceding step **d)** is executed in iterative form by the following sub-steps:

    d1) assignment of arbitrary values, preferably null, to the elements of a structured triangular matrix $\bar{\mathbf{L}}(n)$, defines as follows:

    $$\bar{\mathbf{L}}(n) = \begin{bmatrix} \mathbf{L}(n) & \mathbf{0} \\ \mathbf{U}(n) & \mathbf{L}_s(n) \end{bmatrix},$$

    wherein $\mathbf{L}(n)$ and $\mathbf{L}_s(n)$ are triangular matrices and $\mathbf{U}(n)$ is a square matrix, or more in general a rectangular one;
    d2) assignment of arbitrary values, one of which non null, to the elements of a vector $\mathbf{h}_{opt}(n)$ storing said optimized samples of the impulse response of the transmission channel;
    d3) assignment of arbitrary values, one of which at least non null, to the elements of a vector $\mathbf{w}_{opt}(n)$ storing said weights of the spatial filter (BMF);
    d4) updating of said structured matrix $\bar{\mathbf{L}}(n)$ applying at instant $n$-th the following iterative relation:

    $$\begin{bmatrix} \bar{\mathbf{L}}(n) & \mathbf{0} \end{bmatrix} = \begin{bmatrix} \bar{\mathbf{L}}(n-1) & \mathbf{g}_n \end{bmatrix} \mathbf{Q}(n),$$

    where $\mathbf{g}_n$ is the following updating vector

    $$\mathbf{g}_n = \begin{bmatrix} \mathbf{y}(n) \\ \mathbf{x}(n) \end{bmatrix}$$

    structured in two component vectors, out of which:

    $$\mathbf{y}(n) = \begin{bmatrix} y_1(n), y_2(n), \ldots, y_M(n) \end{bmatrix}^T$$

    is a first vector whose $M$ elements are symbols coming from $M$ antennas at instant $n$-th, present in a same number of stored bursts, and

    $$\mathbf{x}(n) = \begin{bmatrix} x_n(n), x_{n+1}(n), \ldots, x_{n+L-1}(n) \end{bmatrix}^T$$

    is a second vector whose $L$ elements are stored symbols of the transmitted training or estimated sequence

    $$\left(\left\{x_n\right\}, \left\{\hat{x}'_n\right\}\right)$$

respectively, assuming a duration of the impulse response equal to $L$ symbols; being $\mathbf{Q}(n)$ a matrix transformation of unitary rotation, implemented through a sequence of elementary transformations $\mathbf{Q}_0, \mathbf{Q}_1, \cdots$, that applied to

$$\left[\overline{\mathbf{L}}(n-1) \quad \mathbf{g}_n\right]$$

produces the cancellation of column $\mathbf{g}_n$ introducing a zero for each elementary transformation;

d5) determination of a weight vector $\mathbf{h}_n$ through the following expression: $\mathbf{L}_s(n)\mathbf{L}_s^*(n)\mathbf{h}_n = \mathbf{h}_{opt}(n-1)$, according to which said vector of optimum samples is updated as follows

$$h_{opt}(n) = \frac{h_n}{h_n^* h_n} \; ;$$

d6) updating of said optimum weight vector through the following expression: $\mathbf{L}^*(n)\mathbf{w}_{opt}(n) = \mathbf{U}^*(n)\mathbf{h}_{opt}(n)$.

5. Equalization method according to claim 4, **characterized in that** said expression calculated at step h5) is divided into two calculation phases, introducing an unknown intermediate vector $\mathbf{u}_n$ defined by the following first equation: $\mathbf{L}_s^*(n)\mathbf{h}_n = \mathbf{u}_n$, being $\mathbf{u}_n$ a solution of the following second equation: $\mathbf{L}_s(n)\mathbf{u}_n = \mathbf{h}_{opt}(n-1)$ that replaced in its turn in the starting equation gives $\mathbf{h}_n$, simplifying the relevant calculation.

6. Equalization method according to claim 4, **characterized in that** said matrix $\overline{\mathbf{L}}(n-1)$ is multiplied by $\sqrt{\lambda}$, where $\lambda$ is an arbitrary real constant, lower than one unit, selected in relation to the non stationariness of the channel.

7. Adaptive equalization method according to claim 1, **characterized in that**, in presence of a strong non-stationary interferer the preceding step **d)** is executed in iterative form by the following sub-steps:

h1) advanced updating within the symbol time $\bar{n}$ of a sole triangular matrix $\mathbf{L}$ belonging to a structured triangular matrix $\overline{\mathbf{L}}(n)$, defined as follows:

$$\overline{\mathbf{L}}(n) = \begin{bmatrix} \mathbf{L}(\bar{n}+\Delta T) & \mathbf{0} \\ \mathbf{U}(n) & \mathbf{L}_s(n) \end{bmatrix},$$

wherein $\mathbf{L}(\bar{n}+\Delta T)$ and $\mathbf{L}_s(n)$ are triangular matrices and $\mathbf{U}(n)$ is a square matrix, or more in general a rectangular one; the advanced updating of said matrix $\mathbf{L}$ being executed using vectors $\mathbf{y}(n)$ obtained from the samples of signals on the antennas, present in the stored bursts, starting from instant $\bar{n}$ up to an instant $\bar{n}+\Delta T$; matrix $\mathbf{L}$ being calculated at instant $\bar{n}$ and then kept constant for the whole $\Delta T$;

h2) starting from instant $\bar{n}$ up to an instant $\bar{n}+\Delta T$, updating of matrices $\mathbf{U}(n)$ and $\mathbf{L}_s(n)$ of said triangular matrix $\overline{\mathbf{L}}(n)$ applying at instant $n$-th the following iterative relation:

$$\left[\overline{\mathbf{L}}(n) \quad \mathbf{0}\right] = \left[\overline{\mathbf{L}}(n-1) \quad \mathbf{g}_n\right]\mathbf{Q}(n),$$

where $\mathbf{g}_n$ is the following updating vector

$$\mathbf{g}_n = \begin{bmatrix} \mathbf{y}(n) \\ \mathbf{x}(n) \end{bmatrix}$$

structured in two component vectors, out of which:

$$\mathbf{y}(n) = \left[ y_1(n),\, y_2(n), \ldots, y_M(n) \right]^T$$

is a first vector whose $M$ elements are symbols coming from $M$ antennas at instant $n$-th, present in a same number of stored bursts, and

$$\mathbf{x}(n) = \left[ x_n(n),\, x_{n+1}(n), \ldots, x_{n+L-1}(n) \right]^T$$

is a second vector whose $L$ elements belong to said low delay estimated sequence

$$\left( \left\{ \hat{x}'_n \right\} \right),$$

assuming a duration of the impulse response equal to $L$ symbols; being $\mathbf{Q}(n)$ a matrix transformation of unitary rotation, implemented through a sequence of elementary transformations $\mathbf{Q}_0$, $\mathbf{Q}_1, \cdots$, that applied to

$$\left[ \bar{\mathbf{L}}(n-1) \quad \mathbf{g}_n \right]$$

produces the cancellation of column $\mathbf{g}_n$ introducing a zero for each elementary transformation;

h3) updating of said optimum weight vector through the following expression: $\mathbf{L}^*(\bar{n} + \Delta T)\mathbf{w}_{opt}(n) = \mathbf{U}^*(n)\bar{\mathbf{h}}_{opt}$, where $\bar{\mathbf{h}}_{opt}$ is a vector including the samples of the impulse response at the instant $\bar{n}$.

8. Equalization method according to claim 7, **characterized in that** said advanced updating of the sole triangular matrix $\mathbf{L}$, is made applying the generic said elementary transformation $\mathbf{Q}_i$ to the first $M$ elements of the $i$-th column of said triangular matrix $\bar{\mathbf{L}}(n)$, where $M$ is the order of matrix $\mathbf{L}$, repeating the elementary transformation $\mathbf{Q}_i$ for all the values of index $i$ and storing the transformations occurred.

9. Equalization method according to claim 7 or 8, **characterized in that** said matrix $\bar{\mathbf{L}}(n-1)$ is multiplied by $\sqrt{\lambda}$, where $\lambda$ is an arbitrary real constant, lower than one unit, selected in relation to the non stationariness of the channel.

10. Equalization method according to one of the previous claims, **characterized in that**, coinciding with any new symbol of low delay, estimated sequence

$$\left( \left\{ \hat{x}'_n \right\} \right),$$

the $L$ elements of said vector $\mathbf{x}(n)$ are replaced by a same number of symbols copied as a whole from the path selected in the trellis at the present symbol time, preventing by this the propagation of errors in the joint estimate of said optimum weights and channel impulse response samples

$$\left( \mathbf{w}_{opt}(n),\, \mathbf{h}_{opt}(n) \right).$$

11. Equalization method according to any of the preceding claims, **characterized in that** when said training sequence

$$\left( \left\{ x_n \right\} \right)$$

is included in a midamble of the transmission burst, said equalization of the step **g)** starts from a first end of the midamble and proceeds towards the end of the burst, previously stored and synchronized, and afterwards it restarts from the second end of the midamble towards the other end of the burst, using estimated data of the first semiburst to have a longer group of estimated data for the equalization of the second semiburst.

12. Equalizer for receivers of base stations of a cellular mobile system, in particular for the cancellation of isofrequential interferers in signals received by array antennas (ARY) of base stations of a cellular mobile system, said signals ($\mathbf{y}(n)$) being received under the form of bursts of data symbols of a transmission burst, including a training sequence

$$\left(\{x_n\}\right)$$

known to the receiver and usable to estimate the impulse response of the transmission channel, said bursts received being demodulated, digitized, stored, and synchronized through discrimination of the training sequence, including:

- a spatial filter (BMF) of signals coming from the antennas ($\mathbf{y}(n)$) that combines among them corresponding $n$-th symbols of the bursts on the basis of n-th weights of a sequence of weights

$$\left(\mathbf{w}_{opt}(n)\right)$$

obtaining a beamformed received sequence

$$\left(\mathbf{y}_{out}(n)\right);$$

- a time filter (CAMP) for filtering data of the training sequence

$$\left(\{x_n\}\right)$$

and estimating a sequence of samples ($\mathbf{h}(n)$) of the impulse response of the transmission channel;
- means ($\Sigma$) for calculating a square error ($e_n$) originating from the comparison between the corresponding $n$-th samples of the estimate impulse response ($\mathbf{h}(n)$) and the beamformed sequence

$$\left(\mathbf{y}_{out}(n)\right);$$

- means (FUNZ) for the joint optimization of said weights and samples

$$\left(\mathbf{w}_{opt}(n), \mathbf{h}_{opt}(n)\right)$$

and to minimize a functional (FUNZ) corresponding to said mean square error ($e_n$);
- a time matched filter (FADAT) of the signal

$$\left(y_{out}(n)\right)$$

generated by said spatial filter (BMF), matched to the sequence of samples

$$\left(\mathbf{h}_{opt}(n)\right)$$

of the impulse response of the transmission channel;

- a Viterbi estimator (STIM) for estimating the symbols

$$\left(\{\hat{x}_n\}\right)$$

of the transmission burst corresponding to the sequence coming out from the time matched filter (FADAT);
- means (DECTEMP) for replacing out of the time slot of the training sequence the symbols of the training sequence

$$\left(\{x_n\}\right)$$

with a low delay estimated sequence

$$\left(\{\hat{x}'_n\}\right),$$

thus rendering said equalization adaptive,

**characterized in that** it further includes:

- means (PICRIV) for the continuous monitoring of the power received on the antennas (ARY) and for detecting possible peaks exceeding a given threshold in coincidence of the arrival of a strong non-stationary interferer;
- selection means (PICSEL, SWT) controlled by said continuous monitoring means (PICRIV) suitable for the selection of said means (SYSTOL1, 3, 4, 5) for the joint optimization of weights and samples, in case a detection of a peak over threshold doesn't occur, and for the selection of means (SYSTOL2, SYSTOL5) devoted to the rejection of a strong interferent in case of detection of a peak over threshold occur at an instant $\bar{n}$ outside the midamble; the latter means being operative for the all duration starting from the instant $\bar{n}$ up to an instant $\bar{n}$ + $\Delta T$ of a rejecting transient and being arranged for updating the sole weights

$$\left(\mathbf{w}_{opt}(n)\right)$$

of the spatial filter (BMF) maintaining the samples of the impulse response

$$\left(\mathbf{h}_{opt}(n)\right)$$

constant at the values they have at the instant $\bar{n}$ ; the preceding means for the joint optimization (SYSTOL1, 3, 4, 5) being restored at the end of said rejection transient.

13. Equalizer according to claim 12, **characterized in that** in absence of strong non-stationary interferer said joint optimization means (SYSTOL1, 3, 4, 5) are constitute by the following means:

- first delay means (RIT) for delaying with a fixed delay (D) an algebraic vector $\mathbf{y}(n)$ of $M$ elements, as many as the antennas, whose elements are symbols of the stored bursts of the signal coming from the antennas;
- a first systolic array (SYSTOL1) receiving said vector $\mathbf{y}(n)$ and symbols of said training sequence

$$\left(\{x_n\}\right)$$

or estimated low delay ones, organized as in an algebraic vector $\mathbf{x}(n)$ of $L$ elements, equal to the length of the channel impulse response, and updating, coinciding with each symbol time $n$-th, a triangular matrix

$$\overline{\mathbf{L}}(n) = \begin{bmatrix} \mathbf{L}(n) & \mathbf{0} \\ \mathbf{U}(n) & \mathbf{L}_s(n) \end{bmatrix}$$

image of said first systolic array (SYSTOL1) in which the elements $\mathbf{L}(n)$ and $\mathbf{L}_s(n)$ are also triangular matrices, and $\mathbf{U}(n)$ is rectangular, or square;

- a second systolic array (AUTOVET), said second systolic array receiving said element $\mathbf{L}_s(n)$ and updating a vector $\mathbf{h}_{opt}(n)$ whose elements correspond to the optimized samples of the impulse response,
- a third systolic array (SYSTOL5), placed in cascade to the second, receiving said elements $\mathbf{L}(n)$ and $\mathbf{U}(n)$, the vector $\mathbf{h}_{opt}(n)$, and updating a vector $\mathbf{w}_{opt}(n)$ whose elements correspond to the optimized weights.

14. : Equalizer according to claim 12, **characterized in that** in presence of strong non-stationary interferer said joint optimization means (SYSTOL2, SYSTOL5) are constitute by the following means:

- first delay means (RIT) for delaying with a fixed delay (D) an algebraic vector $\mathbf{y}(n)$ of $M$ elements, as many as the antennas, whose elements are symbols of the stored bursts of the signal coming from the antennas;
- a first systolic array (SYSTOL2) receiving said vector $\mathbf{y}(n)$ and the symbols of said low delay estimated sequence

$$\left(\left\{\hat{x}'_n\right\}\right)$$

organized as in an algebraic vector $\mathbf{x}(n)$ of $L$ elements, equal to the length of the channel impulse response, and updating, coinciding with each symbol time $n$-th, a matrix

$$\overline{\mathbf{L}}(n) = \begin{bmatrix} \mathbf{L}(\overline{n} + \Delta T) & \mathbf{0} \\ \mathbf{U}(n) & \mathbf{L}_s(n) \end{bmatrix}$$

image of said first systolic array (SYSTOL2) in which the elements $\mathbf{L}(n)$ and $\mathbf{L}_s(n)$ are also triangular matrices, and $\mathbf{U}(n)$ is rectangular or square matrix ;

- second delay means (FIFO) suitable for delay element $\mathbf{L}$ calculated at instant $\overline{n}$ for the whole $\Delta T$;
- a second systolic array (SYSTOL5), placed in cascade to the first, receiving said elements $\mathbf{L}(n)$ and $\mathbf{U}(n)$, a vector $\overline{\mathbf{h}}_{opt}$ including the samples of the impulse response at the instant $\overline{n}$, and updating a vector $\mathbf{w}_{opt}(n)$ whose elements correspond to the optimized weights.

15. Equalizer according to claim 13 or 14, **characterized in that** said vectors $\mathbf{y}(n)$ and $\mathbf{x}(n)$ reach in column, in the order indicated, the input of the cells of said first systolic array (SYSTOL1, SYSTOL2) corresponding to the elements of the first column of said matrix $\overline{\mathbf{L}}(n)$, the whole of cells of the triangular matrix including the calculation means of the following matrix relation:

$$\begin{bmatrix} \alpha & out \end{bmatrix} \leftarrow \begin{bmatrix} \alpha\sqrt{\lambda} & in \end{bmatrix} \frac{1}{\sqrt{1+|\rho|^2}} \begin{bmatrix} 1 & \rho \\ \rho^* & -1 \end{bmatrix}$$

where:

- $\alpha$ pointed by the arrow indicates the new content of the cell;
- $\lambda$ is an arbitrary real constant $\leq 1$, selected in relation to the non stationariness of the channel.
- *out* is an output signal;

- *in* is a signal entering each cell; and
- $\rho$ is a both input and output signal, calculated as follows:

$$\rho = \frac{in}{\alpha \sqrt{\lambda}} \ ;$$

the cells corresponding to the elements of the main diagonal of said matrix $\bar{\mathbf{L}}(n)$ containing the alternative calculation means, such for which the signal $\rho$ is only an output one, the signal out is absent, and the content $\alpha$ is updated as follows:

$$\alpha \leftarrow \sqrt{\lambda|\alpha|^2 + |in|^2} \ .$$

**16.** Equalizer according to claim 15, **characterized in that** said second systolic array (AUTOVET), is further divided in the cascade of two systolic arrays (SYSTOL3, SYSTOL4) having identical triangular structure, of which the upstream array (SYSTOL3) receives said element $\mathbf{L}_s(n)$, and the previous vector $\mathbf{h}_{opt}(n\text{-}1)$ of the downstream array, and calculates an intermediate vector $\mathbf{u}_n$ supplying it to the downstream array (SYSTOL4), reached also by element $\mathbf{L}_s^{*}(n)$, for the calculation of said vector $\mathbf{h}_{opt}(n)$.

**Patentansprüche**

**1.** Entzerrungsmethode für die Auslöschung von durch Basisstationsgruppenantennen (ARY) von Zellenmobilsystemen empfangenen gleichfrequenten Störsignalen. Diese Signale ($y(n)$) werden in Form von aus Datensymbolen bestehenden Bursts innerhalb eines Übertragungsbursts empfangen, der eine Trainingssequenz

$$\left(\{x_n\}\right)$$

enthält, die dem Empfänger bekannt ist und zur Schätzung der Impulsantwort des Übertragungskanals dient. Die empfangenen Bursts werden durch die Selektion der Trainingssequenz demoduliert, digitalisiert, gespeichert und synchronisiert. Dabei werden die folgenden Schritte ausgeführt:

**a)** Räumliche Filterung der von den Antennen empfangenen Signale ($\mathbf{y}(n)$) mit Hilfe eines räumlichen Filters (BMF), das die entsprechenden n-ten Symbole der Bursts auf der Grundlage der n-ten Gewichtungen einer Sequenz von Gewichtungen

$$\left(\mathbf{w}_{opt}(n)\right)$$

miteinander kombiniert und eine strahlungskeulengeformte empfangene Sequenz

$$\left(\mathbf{y}_{out}(n)\right)$$

erstellt
**b)** Zeitgefilterte (CAMP)-Daten der Trainingssequenz

$$\left(\{x_n\}\right)$$

für die Schätzung einer Sequenz von Abtastwerten ($\mathbf{h}(n)$) der Impulsantwort des Übertragungskanals
**c)** Berechnung eines quadratischen Fehlers

$$\left(e_n\right),$$

der aus dem Vergleich zwischen den entsprechenden *n*-ten Abtastwerten der geschätzten Impulsantwort (**h** (*n*)) und der strahlungskeulengeformten Sequenz

$$\left(\mathbf{y}_{out}(n)\right)$$

abgeleitet wird
**d)** Gemeinsame Optimierung der Gewichtungen und Abtastwerte

$$\left(\mathbf{w}_{opt}(n), \mathbf{h}_{opt}(n)\right)$$

durch Minimierung einer Funktion (FUNZ) entsprechend dem mittleren quadratischen Fehler

$$\left(e_n\right)$$

**e)** Zeitfilterung des durch das räumliche Filter (BMF) generierten Signals

$$\left(y_{out}(n)\right)$$

mit einem Filter (FADAT), dass an die Abtastwertesequenz

$$\left(\mathbf{h}_{opt}(n)\right)$$

der Impulsanwort des Übertragungskanals angepasst ist
**f)** Eingabe dieser Abtastwertesequenz der Impulsantwort des Übertragungskanals

$$\left(\mathbf{h}_{opt}(n)\right)$$

und einer Abtastwertesequenz am Ausgang dieses angepassten Filters (FADAT) in einen Viterbi-Schätzer für die Erkennung der empfangenen Daten
**g)** Aktualisierung der optimierten Werte der Gewichtungen und Abtastwerte

$$\left(\mathbf{w}_{opt}(n), \mathbf{h}_{opt}(n)\right)$$

aus dem Zeitschlitz der Trainingssequenz heraus durch Wiederholung der vorherigen Schritte **a)...f),** Ersetzen der Symbole der Trainingssequenz

$$\left(\left\{x_n\right\}\right)$$

durch eine geschätzte Sequenz

$$\left(\left\{\hat{x}'_n\right\}\right)$$

mit niedriger Verzögerung, wodurch die adaptive Entzerrung möglich wird

**mit den folgenden Eigenschaften:** Während die vorherigen Schritte ausgeführt werden, erfolgt parallel dazu die kontinuierliche Überwachung der an den Antennen (ARY) empfangenen Leistung, um eventuelle Spitzenwerte erkennen zu können, die bei gleichzeitigem Eintreffen eines starken nichtstationären Störsignals einen bestimmten Schwellewert überschreiten. Falls zum Zeitpunkt $\bar{n}$ ein Spitzenwert oberhalb des Schwellenwerts liegt, wird Schritt d) für die gesamte Dauer vom Zeitpunkt $\bar{n}$ bis zum Zeitpunkt $\bar{n} + \Delta T$ eines Übergangs zur Auslöschung eines starken Störsignals außerhalb der Midamble geändert, indem die Gewichte

$$\left(\mathbf{w}_{opt}(n)\right)$$

des räumlichen Filters (BMF) aktualisiert werden, das die Abtastwerte der Impulsantwort

$$\left(\mathbf{h}_{opt}(n)\right)$$

konstant auf den Werten hält, die sie zum Zeitpunkt $\bar{n}$ haben. Anschließend wird der nicht geänderte Schritt **d)** am Ende dieses Übergangs wiederhergestellt.

2. Entzerrungsmethode gemäß Patentanspruch 1 mit den Eigenschaften, dass bei Nichtvorhandensein eines starken nichtstationären Störsignals der vorherige Schritt d) mit den folgenden Teilschritten in geschlossener Form ausgeführt wird:

   - Berechnung einer räumlichen Kovarianzmatrix $\mathbf{R}_{yy}$ des von den Antennen empfangenen Signals ($\mathbf{y}(n)$), einer Kovarianzmatrix $\mathbf{R}_{xx}$ der Datenabtastwerte

$$\left(\left\{x_n\right\}, \left\{\hat{x}'_n\right\}\right),$$

einer Kreuzkovarianzmatrix $\mathbf{R}_{xy}$ zwischen Datenabtastwerten und Antenneneingängen

$$\left(\left\{x_n\right\}, \mathbf{y}(n)\right)$$

und der Schur-Komplementmatrix $\mathbf{R}_s^{\perp} = \mathbf{R}_{xx} - \mathbf{R}_{xy}\mathbf{R}_{yy}^{-1}\mathbf{R}_{xy}^{*}$, wobei * der konjugiert-komplexe Wert einer Matrix

$$\mathbf{R} = \begin{bmatrix} \mathbf{R}_{yy} & \mathbf{R}_{xy}^{*} \\ \mathbf{R}_{xy} & \mathbf{R}_{xx} \end{bmatrix}$$

ist.
   - Schätzung eines Eigenvektors $\mathbf{h}_{opt}(n)$ von Matrix $\mathbf{R}_s^{\perp}$, die mit dem minimalen Moduleigenwert $\gamma$ verknüpft ist, der durch $\mathbf{h}^{*}\mathbf{R}_s^{\perp} = -\gamma$ definiert ist. Der Eigenvektor enthält die optimierten Abtastwerte.
   - Schätzung der optimierten Gewichtungen durch Berechnung eines Vektors $\mathbf{w}_{opt}(n)$ als Lösung der Gleichung: $\mathbf{R}_{yy}\mathbf{w}_{opt}(n) = \mathbf{R}_{xy}^{*}\mathbf{h}_{opt}(n)$.

3. Entzerrungsmethode gemäß Patentanspruch 1 mit den Eigenschaften, dass bei Vorhandensein eines starken, nichtstationären Störsignals der vorherige Schritt **d)** in geschlossener Form mit den folgenden Unterschritten ausgeführt wird:

- Berechnung einer räumlichen Kovarianzmatrix $\mathbf{R}_{yy}(\bar{n} + \Delta T)$ des an den Antennen empfangenen Signals ($\mathbf{y}(n)$) und einer konjugiert-komplexen Kreuzkovarianzmatrix $\mathbf{R}_{xy}^{*}(n)$ zwischen Datenabtastwerten und Antenneneingängen

$$\left(\left\{x_{n}\right\}, \mathbf{y}(n)\right),$$

Matrix $\mathbf{R}_{yy}(\bar{n} + \Delta T)$ wird zum Zeitpunkt $\bar{n}$ berechnet und anschließend für die gesamte Dauer $\Delta T$ konstant gehalten, es werden aus den Abtastwerten des an den Antennen anliegenden und im gespeicherten Burst vorhandenen Signals Vektoren $\mathbf{y}(n)$ gebildet, beginnend zum Zeitpunkt $\bar{n}$ bis zum Zeitpunkt $\bar{n} + \Delta T$, während $\mathbf{R}_{xy}^{*}(n)$ zu jedem n-ten Zeitpunkt des Übergangs berechnet wird

- Schätzung der optimierten Gewichtungen durch Berechnung eines Vektors $\mathbf{w}_{opt}(n)$ und Lösung der Gleichung $\mathbf{R}_{yy}(\bar{n} + \Delta T)\, \mathbf{w}_{opt}(n) = \mathbf{R}_{xy}^{*}(n)\, \bar{\mathbf{h}}_{opt}$, wobei $\bar{\mathbf{h}}_{opt}$ ein Vektor mit Abtastwerten der Impulsantwort zum Zeitpunkt $\bar{n}$ ist.

4. Entzerrungsmethode gemäß Patentanspruch 1 mit den Eigenschaften, dass bei Nichtvorhandensein eines starken nichtstationären Störsignals der vorhergehende Schritt **d)** in iterativer Form in folgenden Teilschritten ausgeführt wird:

d1) Zuweisung von willkürlichen Werten, vorzugsweise Null, zu den Elementen einer strukturierten dreieckigen Matrix $\bar{\mathbf{L}}(n)$, die wie folgt definiert ist:

$$\overline{\mathbf{L}}(n) = \begin{bmatrix} \mathbf{L}(n) & \mathbf{0} \\ \mathbf{U}(n) & \mathbf{L}_{s}(n) \end{bmatrix},$$

wobei $\mathbf{L}(n)$ und $\mathbf{L}_{s}(n)$ dreieckige Matrizen sind und $\mathbf{U}(n)$ eine quadratische Matrix bzw. allgemeiner ausgedrückt eine rechteckige Matrix ist

d2) Zuweisung von willkürlichen Werten, von denen einer Null ist, zu den Elementen eines Vektors $\mathbf{h}_{opt}(n)$, der optimierte Abtastwerte der Impulsantwort des Übertragungskanals speichert

d3) Zuweisung von willkürlichen Werten, von denen mindestens einer nicht Null ist, zu den Elementen eines Vektors $\mathbf{w}_{opt}(n)$, der die Gewichtungen des räumlichen Filters (BMF) speichert

d4) Aktualisierung der strukturierten Matrix $\bar{\mathbf{L}}(n)$ mit Anwendung der folgenden iterativen Relation zum Zeitpunkt

$$n: \begin{bmatrix} \overline{\mathbf{L}}(n) & \mathbf{0} \end{bmatrix} = \begin{bmatrix} \overline{\mathbf{L}}(n-1) & \mathbf{g}_{n} \end{bmatrix} \mathbf{Q}(n),$$

wobei $\mathbf{g}_{n}$ der folgende Aktualisierungsvektor

$$\mathbf{g}_{n} = \begin{bmatrix} \mathbf{y}(n) \\ \mathbf{x}(n) \end{bmatrix}$$

ist, der in zwei Komponentenvektoren strukturiert ist, von denen

$$\mathbf{y}(n) = \begin{bmatrix} y_{1}(n), y_{2}(n), \ldots, y_{M}(n) \end{bmatrix}^{T}$$

der erste Vektor ist, dessen $M$ Elemente Symbole sind, die zum Zeitpunkt $n$ von $M$ Antennen empfangen werden und in der gleichen Anzahl gespeicherter Bursts enthalten sind.

$$\mathbf{x}(n) = \left[ x_n(n), x_{n+1}(n), \ldots, x_{n+L-1}(n) \right]^T$$

ist der zweite Vektor, dessen *L* Elemente gespeicherte Symbole der übertragenen Trainings- oder geschätzten Sequenz

$$\left( \{x_n\}, \{\hat{x}'_n\} \right)$$

sind, wobei eine Dauer der Impulsantwort von *L* Symbolen angenommen wird. $\mathbf{Q}(n)$ ist eine Matrixtransformation durch unitäre Rotation, die über eine Sequenz von elementaren Transformationen $\mathbf{Q}_0, \mathbf{Q}_1, \cdots$, implementiert ist, die nach Anwendung auf

$$\left[ \overline{\mathbf{L}}(n-1) \quad \mathbf{g}_n \right]$$

die Auslöschung der Spalte $\mathbf{g}_n$ mit einer Null für jede elementare Transformation bewirkt.

d5) Bestimmung eines Gewichtungsvektors $\mathbf{h}_n$ über den folgenden Ausdruck: $\mathbf{L}_s(n)\mathbf{L}^*_s(n)\mathbf{h}_n = \mathbf{h}_{opt}(n-1)$, nach dem der Vektor der optimalen Abtastwerte folgendermaßen aktualisiert wird:

$$h_{opt}(n) = \frac{h_n}{h^*_n h_n}$$

d6) Aktualisierung des optimalen Gewichtungsvektors über den folgenden Ausdruck: $\mathbf{L}^*(n)\mathbf{w}_{opt}(n) = \mathbf{U}^*(n)\mathbf{h}_{opt}(n)$.

**5.** Entzerrungsmethode gemäß Patentanspruch 4 mit den Eigenschaften, dass der in Schritt h5) berechnete Ausdruck in zwei Berechnungsphasen eingeteilt wird, wobei ein unbekannter Zwischenvektor $\mathbf{u}_n$ verwendet wird, der nach der folgenden ersten Gleichung definiert ist: $\mathbf{L}^*_s(n)\mathbf{h}_n = \mathbf{u}_n$, wobei $\mathbf{u}_n$ eine Lösung der folgenden zweiten Gleichung ist: $\mathbf{L}_s(n)\mathbf{u}_n = \mathbf{h}_{opt}(n-1)$. Durch Einsetzen in die erste Gleichung ergibt sich $\mathbf{h}_n$, wodurch die relevante Berechnung vereinfacht wird.

**6.** Entzerrungsmethode gemäß Patentanspruch 4 mit den Eigenschaften, dass die Matrix $\overline{\mathbf{L}}(n-1)$ mit $\sqrt{\lambda}$ multipliziert wird, wobei $\lambda$ eine willkürliche reale Konstante ist (< 1), die bezüglich der Nichtstationärität des Kanals ausgewählt wird.

**7.** Adaptive Entzerrungsmethode gemäß Patentanspruch 1 mit den Eigenschaften, dass bei Vorhandensein eines starken nichtstationären Störsignals der vorhergehende Schritt **d)** mit den folgenden Teilschritten in iterativer Form ausgeführt wird:

h1) Erweiterte Aktualisierung einer dreieckigen Matrix **L,** die zu einer strukturierten dreieckigen Matrix $\overline{\mathbf{L}}(n)$ gehört, die folgendermaßen definiert ist:

$$\overline{\mathbf{L}}(n) = \begin{bmatrix} \mathbf{L}(\overline{n} + \Delta T) & \mathbf{0} \\ \mathbf{U}(n) & \mathbf{L}_s(n) \end{bmatrix},$$

wobei $\mathbf{L}(\overline{n} + \Delta T)$ und $\mathbf{L}_s(n)$ dreieckige Matrizen sind und $\mathbf{U}(n)$ eine quadratische Matrix bzw. allgemein ausgedrückt eine rechteckige Matrix ist. Die erweiterte Aktualisierung der Matrix **L** erfolgt über Vektoren ($\mathbf{y}(n)$), die aus den Abtastwerten des an den Antennen anliegenden und im gespeicherten Burst vorhandenen Signals gebildet werden, beginnend zum Zeitpunkt $\overline{n}$ bis zum Zeitpunkt $\overline{n} + \Delta T$, die Matrix **L** wird zum Zeitpunkt $\overline{n}$ berechnet und für die gesamte Dauer $\Delta T$ konstant gehalten

h2) Aktualisierung der Matrizen $\mathbf{U}(n)$ und $\mathbf{L}_s(n)$ der dreieckigen Matrix $\overline{\mathbf{L}}(n)$ beginnend vom Zeitpunkt $\overline{n}$ bis zu

einem Zeitpunkt $\bar{n} + \Delta T$ unter Anwendung der folgenden iterativen Relation zum Zeitpunkt $n$:

$$\begin{bmatrix} \overline{\mathbf{L}}(n) & \mathbf{0} \end{bmatrix} = \begin{bmatrix} \overline{\mathbf{L}}(n-1) & \mathbf{g}_n \end{bmatrix} \mathbf{Q}(n),$$

wobei $\mathbf{g}_n$ der Aktualisierungsvektor

$$\mathbf{g}_n = \begin{bmatrix} \mathbf{y}(n) \\ \mathbf{x}(n) \end{bmatrix}$$

ist. Er ist in zwei Komponentenvektoren strukturiert, von denen

$$\mathbf{y}(n) = \begin{bmatrix} y_1(n), y_2(n), \ldots, y_M(n) \end{bmatrix}^T$$

der erste Vektor ist, dessen $M$ Elemente Symbole sind, die zum Zeitpunkt $n$ von $M$ Antennen empfangen werden und in der gleichen Anzahl gespeicherter Bursts enthalten sind.

$$\mathbf{x}(n) = \begin{bmatrix} x_n(n), x_{n+1}(n), \ldots, x_{n+L-1}(n) \end{bmatrix}^T$$

ist der zweite Vektor, dessen $L$ Elemente gespeicherte Symbole der übertragenen Trainings- oder geschätzten Sequenz

$$\left( \{ x_n \}, \{ \hat{x}'_n \} \right)$$

sind, wobei eine Dauer der Impulsantwort von $L$ Symbolen angenommen wird. $\mathbf{Q}(n)$ ist eine Matrixtransformation durch unitäre Rotation, die über eine Sequenz von elementaren Transformationen $\mathbf{Q}_0, \mathbf{Q}_1, \cdots$, implementiert ist, die nach Anwendung auf

$$\begin{bmatrix} \overline{\mathbf{L}}(n-1) & \mathbf{g}_n \end{bmatrix}$$

die Auslöschung der Spalte $\mathbf{g}_n$ mit einer Null für jede elementare Transformation bewirkt
h3) Aktualisierung eines Vektors mit den optimalen Gewichtungen mittels des folgenden Ausdrucks: $\mathbf{L}^*(\bar{n} + \Delta T)\mathbf{w}_{opt}(n) = \mathbf{U}^*(n)\bar{\mathbf{h}}_{opt}$, wobei $\bar{\mathbf{h}}_{opt}$ ein Vektor ist, der die Abtastwerte der Impulsantwort zum Zeitpunkt $\bar{n}$ enthält.

8. Entzerrungsmethode gemäß Patentanspruch 7 mit den Eigenschaften, dass die erweiterte Aktualisierung der dreieckigen Matrix **L** durch die Anwendung der allgemeinen elementaren Transformation $\mathbf{Q}_i$ auf die ersten $M$ Elemente der i-ten Spalte der dreieckigen Matrix $\overline{\mathbf{L}}(n)$ erfolgt, wobei $M$ die Ordnung von Matrix **L** ist und die elementare Transformation $\mathbf{Q}_i$ für alle Werte des Index $i$ wiederholt wird und die durchgeführten Transformationen gespeichert werden.

9. Entzerrungsmethode gemäß den Patentansprüchen 7 oder 8 mit den Eigenschaften, dass die Matrix $\overline{\mathbf{L}}(n-1)$ mit $\sqrt{\lambda}$ multipliziert wird, wobei $\lambda$ eine willkürliche reale Konstante ($< 1$) ist und bezüglich der Nichtstationärität des Kanals gewählt wird.

10. Entzerrungsmethode gemäß einem der vorhergehenden Patentansprüche mit den Eigenschaften, dass die mit einem neuen Symbol der geschätzten Sequenz mit geringer Verzögerung

$$\left(\left\{\hat{x}'_n\right\}\right)$$

zusammenfallenden *L* Elemente von Vektor $\mathbf{x}(n)$ durch dieselbe Anzahl von Symbolen ersetzt werden, die zur aktuellen Symbolzeit als Ganzes aus dem im Trellis gewählten Pfad kopiert werden, wodurch die Fehlerfortpflanzung in der gemeinsamen Schätzung der optimalen Gewichtungen und Kanalimpulsantwortabtastwerte

$$\left(\mathbf{w}_{opt}(n), \mathbf{h}_{opt}(n)\right)$$

verhindert wird.

11. Entzerrungsmethode gemäß einem der vorherigen Patentansprüche mit den Eigenschaften, dass wenn die Trainingssequenz

$$\left(\left\{x_n\right\}\right)$$

in einer Midamble des Übertragungsbursts enthalten ist, die Entzerrung von Schritt **g)** an einem Ende der Midamble beginnt und zum anderen Ende des vorher gespeicherten und synchronisierten Bursts weitergeführt wird und anschließend am anderen Ende der Midamble neu beginnt und zum entgegengesetzten Ende des Bursts weitergeführt wird sowie geschätzte Daten des ersten Halbbursts verwendet werden, um eine längere Gruppe geschätzter Daten für die Entzerrung des zweiten Halbbursts zur Verfügung zu haben.

12. Entzerrer für Empfängern von Basisstationen eines Zellenmobilsystems insbesondere für die Auslöschung gleichfrequenter Störsignale in Verbindung mit von Gruppenantennen (ARY) von Basisstationen eines Zellenmobilsystems empfangenen Signalen, wobei die Signale ($\mathbf{y}(n)$) in Form von Bursts von Datensymbolen eines Übertragungsbursts empfangen werden. Dazu gehört auch eine Trainingssequenz

$$\left(\left\{x_n\right\}\right),$$

die dem Empfänger bekannt ist und zur Schätzung der Impulsantwort des Übertragungskanals geeignet ist. Der empfangene Burst wird durch die Selektion der Trainingssequenz demoduliert, digitalisiert, gespeichert und synchronisiert. Dabei werden die folgenden Schritte ausgeführt:

- Räumliche Filterung der von den Antennen empfangenen Signale ($\mathbf{y}(n)$) mit Hilfe eines räumlichen Filters (BMF), das die entsprechenden n-ten Symbole der Bursts auf der Grundlage der n-ten Gewichtungen einer Sequenz von Gewichtungen

$$\left(\mathbf{w}_{opt}(n)\right)$$

miteinander kombiniert und eine strahlungskeulengeformte empfangene Sequenz ($\mathbf{y}_{out}(n)$) erstellt
- Zeitgefilterte (CAMP)-Daten der Trainingssequenz

$$\left(\left\{x_n\right\}\right)$$

für die Schätzung einer Sequenz von Abtastwerten ($\mathbf{h}(n)$) der Impulsantwort des Übertragungskanals
- Mittel ($\Sigma$) zur Berechnung eines quadratischen Fehlers ($e_n$), der aus dem Vergleich zwischen den entsprechenden *n*-ten Abtastwerten der geschätzten Impulsantwort ($\mathbf{h}(n)$) und der strahlungskeulengeformten Se-

quenz

$$\left(\mathbf{y}_{out}(n)\right)$$

abgeleitet wird
- Mittel (FUNZ) zur gemeinsamen Optimierung der Gewichtungen und Abtastwerte

$$\left(\mathbf{w}_{opt}(n), \mathbf{h}_{opt}(n)\right)$$

und zur Minimierung einer Funktion (FUNZ) entsprechend dem mittleren quadratischen Fehler ($e_n$)
- Zeitfilterung des durch das räumliche Filter (BMF) generierten Signals

$$\left(y_{out}(n)\right)$$

mit einem zeitangepassten Filter (FADAT), dass an die Abtastwertesequenz

$$\left(\mathbf{h}_{opt}(n)\right)$$

der Impulsantwort des Übertragungskanals angepasst ist
- Ein Viterbi-Schätzer (STIM) für die Schätzung der Symbole

$$\left(\{\hat{x}_n\}\right)$$

des Übertragungsbursts entsprechend der durch das zeitangepasste Filter (FADAT) gelieferten Sequenz
- Mittel (DECTEMP) für den Austausch der Symbole der Trainingssequenz

$$\left(\{x_n\}\right)$$

gegen eine geschätzte Sequenz

$$\left(\{\hat{x}'_n\}\right)$$

mit geringer Verzögerung im Zeitschlitz der Trainingssequenz, wodurch eine adaptive Entzerrung möglich ist

**mit den Eigenschaften, dass** weiterhin enthalten sind:

- Mittel (PICRIV) für die kontinuierliche Überwachung der Empfangsleistung an den Antennen (ARY) und für die Erkennung möglicher Spitzenwerte, die über den Schwellenwert hinausgehen und gleichzeitig mit dem Empfang eines starken nichtstationären Störsignals zusammenfallen
- Selektionsmittel (PICSEL, SWT), gesteuert durch Mittel zur kontinuierlichen Überwachung (PICRIV), das für die Auswahl dieses Mittels geeignet ist (SYSTOL1, 3, 4, 5), für die gemeinsame Optimierung von Gewichtungen und Abtastwerten, falls ein über den Schwellenwert hinausgehender Spitzenwerte nicht erkannt wird und zur Auswahl von Mitteln (SYSTOL2, SYSTOL5) für die Blockierung eines starken Störsignals, falls ein über den Schwellenwert hinausgehender Spitzenwert zum Zeitpunkt $\bar{n}$ außerhalb der Midamble erkannt wird, d. h. die Blockierung von Spitzenwerten muss für die gesamte Dauer vom Zeitpunkt $\bar{n}$ bis zum Zeitpunkt gewährleistet sein. Die Aktualisierung der Gewichtungen

$$\left(\mathbf{w}_{opt}(n)\right)$$

des räumlichen Filters (BMF) bei Konstanthaltung der Abtastwerte der impulsantwort

$$\left(\mathbf{h}_{opt}(n)\right)$$

zum Zeitpunkt $\bar{n}$, das vorstehende Mittel für die gemeinsame Optimierung (SYSTOL1, 3, 4, 5) muss am Ende des Sperrspitzenwerts wiederhergestelit werden

**13.** Entzerrer gemäß Patentanspruch 12 mit den Eigenschaften, dass bei Abwesenheit eines starken nichtstationären Störsignals das gemeinsame Optimierungsmittel (SYSTOL1, 3, 4, 5) die folgenden Möglichkeiten bietet:

- Ein erstes Verzögerungsglied (RIT) für eine fest vorgegebene Verzögerung (D) eines algebraischen Vektors $\mathbf{y}(n)$ mit $M$ Elementen entsprechend der Anzahl der Antennen, wobei die Elemente Symbole der gespeicherten Bursts des von den Antennen gelieferten Signals sind
- Eine erste systolische Matrix (SYSTOL1), die den Vektor $\mathbf{y}(n)$ and die Symbole der Trainingssequenz

$$\left(\{x_n\}\right)$$

oder geschätzte Werte mit geringer Verzögerung aufnimmt, die in einem algebraischen Vektor $\mathbf{x}(n)$ von $L$ Elementen organisiert sind, der der Länge der Kanalimpulsantwort entspricht und mit jeder n-ten Symbolzeit eine dreieckige Matrix

$$\overline{\mathbf{L}}(n) \ = \ \begin{bmatrix} \mathbf{L}(n) & \mathbf{0} \\ \mathbf{U}(n) & \mathbf{L}_s(n) \end{bmatrix}$$

aktualisiert, dem Abbild der ersten systolischen Matrix (SYSTOL1) entsprechend, in dem die Elemente $\mathbf{L}(n)$ und $\mathbf{L}_s(n)$ ebenfalls dreieckige Matrizen sind und $\mathbf{U}(n)$ rechteckig oder quadratisch ist
- Eine zweite systolische Matrix (AUTOVET), die das Element $\mathbf{L}_s(n)$ aufnimmt und einen Vektor $\mathbf{h}_{opt}(n)$ aktualisiert, dessen Elemente den optimierten Abtastwerten der Impulsantwort entsprechen
- Eine dritte systolische Matrix (SYSTOL5), die hinter die zweite systolische Matrix geschaltet ist und die Elemente $\mathbf{L}(n)$ und $\mathbf{U}(n)$ sowie den Vektor $\mathbf{h}_{opt}(n)$ aufnimmt und einen Vektor $\mathbf{w}_{opt}(n)$ aktualisiert, dessen Elemente den optimierten Gewichtungen entsprechen

**14.** Entzerrer gemäß Patentanspruch 12 mit den Eigenschaften, dass bei Vorhandensein eines starken nichtstationären Störsignals die angeführten Optimierungsmittel (SYSTOL2, SYSTOL5) folgende Möglichkeiten bieten:

- Ein erstes Verzögerungsglied (RIT) für eine fest vorgegebene Verzögerung (D) eines algebraischen Vektors $\mathbf{y}(n)$ mit $M$ Elementen entsprechend der Anzahl der Antennen, wobei die Elemente Symbole der gespeicherten Bursts des von den Antennen gelieferten Signals sind
- Eine erste systolische Matrix (SYSTOL2), die den Vektor $\mathbf{y}(n)$ und die Symbole der geschätzten Sequenz

$$\left(\{\hat{x}'_n\}\right)$$

mit niedriger Verzögerung aufnimmt, die als algebraischer Vektor **x**($n$) von $L$ Elementen organisiert ist und der Länge der Kanalimpulsantwort entspricht. Mit jeder n-ten Symbolzeit wird eine dreieckige Matrix

$$\overline{\mathbf{L}}(n) = \begin{bmatrix} \mathbf{L}(n) & \mathbf{0} \\ \mathbf{U}(n) & \mathbf{L}_s(n) \end{bmatrix}$$

aktualisiert, dem Abbild der ersten systolischen Matrix (SYSTOL2) entsprechend, in dem die Elemente **L**($n$) und **L**$_s$($n$) ebenfalls dreieckige Matrizen sind und **U**($n$) rechteckig oder quadratisch ist

- Ein zweites Verzögerungsglied (FIFO), das für das Verzögerungselement **L** geeignet ist, Berechnung zum Zeitpunkt $\tilde{n}$ für die gesamte Zeitdauer $\Delta T$
- Eine zweite systolische Matrix (SYSTOL5), die hinter die erste systolische Matrix geschaltet ist und die Elemente **L**($n$) und **U**($n$) sowie den Vektor **h**$_{opt}$($n$) aufnimmt und einen Vektor **w**$_{opt}$($n$) aktualisiert, dessen Elemente den optimierten Gewichtungen entsprechen

15. Entzerrer gemäß den Patentansprüchen 13 oder 14 mit den Eigenschaften, dass die Vektoren **y**($n$) und **x**($n$) als Spalten in der angegebenen Reihenfolge an die Eingänge der Zellen der ersten systolischen Matrix (SYSTOL1, SYSTOL2) gelegt werden, was den Elementen der ersten Spalte der Matrix $\overline{\mathbf{L}}$($n$) entspricht, für sämtliche Zellen der dreieckigen Matrix einschließlich der Berechnung gilt die folgende Matrixrelation:

$$\begin{bmatrix} \alpha & out \end{bmatrix} \leftarrow \begin{bmatrix} \alpha\sqrt{\lambda} & in \end{bmatrix} \frac{1}{\sqrt{1+|\rho|^2}} \begin{bmatrix} 1 & \rho \\ \rho^* & -1 \end{bmatrix}$$

wobei:

- $\alpha$ mit darauf zeigendem Pfeil zeigt den neuen Inhalt der Zelle an
- $\lambda$ ist eine willkürliche reale Konstante $\leq 1$, ausgewählt in Bezug auf die Nichtstationarität des Kanals
- *out* ist ein Ausgangssignal
- *in* ist ein in jeder Zelle vorhandenes Eingangssignal und
- $\rho$ ist sowohl Eingangs- als auch Ausgangssignal, das folgendermaßen berechnet wird:

$$\rho = \frac{in}{\alpha\sqrt{\lambda}} \; ;$$

Die zu den Elementen der Hauptdiagonale der Matrix $\overline{\mathbf{L}}$($n$) gehörenden Zellen enthalten die alternative Berechnungsmöglichkeit, bei der das Signal $\rho$ nur ein Ausgangssignal sein kann, das Signal *out* nicht vorhanden ist und der Inhalt $\alpha$ folgendermaßen aktualisiert wird:

$$\alpha \leftarrow \sqrt{\lambda|\alpha|^2 + |in|^2} \; .$$

16. Entzerrer gemäß Patentanspruch 15 mit den Eigenschaften, dass die zweite systolische Matrix (AUTOVET) weiter in die Hintereinanderschaltung zweier systolischer Arrays unterteilt wird (SYSTOL3, SYSTOL4), die eine identische Dreieckstruktur aufweisen. Die vorgeschaltete Matrix (SYSTOL3) nimmt das Element **L**$_s$($n$) und den vorherigen Vektor **h**$_{opt}$($n$-1) der nachgeschalteten Matrix auf und berechnet einen Zwischenvektor **u**$_n$, der die nachgeschaltete Matrix (SYSTOL4) versorgt, die auch das Element **L**$_s^*$($n$) für die Berechnung des Vektors **h**$_{opt}$($n$) aufnimmt.

## Revendications

1. Procédé d'égalisation pour la suppression de signaux brouilleurs isofréquences dans des signaux reçus par des antennes-réseaux (ARY) de stations de base d'un système de radiotéléphonie mobile cellulaire, lesdits signaux (**y**($n$)) étant reçus sous la forme de salves de symboles de données d'une salve d'émission, comprenant une séquence d'apprentissage

$$\left(\left\{x_n\right\}\right)$$

connue du récepteur et utilisable pour estimer la réponse impulsionnelle du canal d'émission, lesdites salves reçues étant démodulées, numérisées, mises en mémoire et synchronisées par discrimination de la séquence d'apprentissage, comprenant les étapes suivantes :

**a)** filtrage spatial des signaux provenant des antennes (**y**($n$)), en utilisant un filtre spatial (BMF) qui combine entre eux des $n$ièmes symboles correspondants des salves sur la base de $n$ièmes coefficients de pondération d'une séquence de coefficients de pondération

$$\left(\mathbf{w}_{opt}(n)\right)$$

pour obtenir une séquence reçue conformée en faisceau

$$\left(\mathbf{y}_{out}(n)\right) ;$$

**b**) filtrage temporel (CAMP) des données de la séquence d'apprentissage

$$\left(\left\{x_n\right\}\right)$$

pour estimer une séquence d'échantillons (**h**($n$)) de la réponse impulsionnelle du canal d'émission ;
**c)** calcul d'une erreur quadratique

$$\left(e_n\right)$$

découlant de la comparaison entre les $n$ièmes échantillons correspondants de la réponse impulsionnelle estimée (h(n)) et la séquence conformée en faisceau

$$\left(\mathbf{y}_{out}(n)\right) ;$$

**d)** optimisation conjointe desdits coefficients de pondération et échantillons

$$\left(\mathbf{w}_{opt}(n), \mathbf{h}_{opt}(n)\right)$$

par minimalisation d'une fonctionnelle (FUNZ) correspondant à ladite erreur quadratique moyenne

$$\left(e_n\right) ;$$

**e)** filtrage temporel du signal

$$\left(y_{out}(n)\right)$$

produit par ledit filtre spatial (BMF) en utilisant un filtre (FADAT) adapté à la séquence d'échantillons

$$\left(\mathbf{h}_{opt}(n)\right)$$

de la réponse impulsionnelle du canal d'émission ;
**f)** fourniture de ladite séquence d'échantillons de la réponse impulsionnelle du canal d'émission

$$\left(\mathbf{h}_{opt}(n)\right)$$

et d'une séquence d'échantillons à la sortie dudit filtre adapté (FADAT) à un estimateur de Viterbi pour la détection des données reçues ;
**g)** actualisation des valeurs optimisées desdits coefficients de pondération et échantillons

$$\left(\mathbf{w}_{opt}(n),\,\mathbf{h}_{opt}(n)\right),$$

hors de la tranche de temps de la séquence d'apprentissage, par répétition des étapes précédentes **a)...f),** en remplaçant les symboles de la séquence d'apprentissage

$$\left(\{x_n\}\right)$$

par une séquence estimée à faible retard

$$\left(\{\hat{x}'_n\}\right),$$

donc en rendant ladite égalisation adaptative,

**caractérisé en ce que**, tandis que les étapes précédentes sont exécutées, une surveillance continue en parallèle de la puissance reçue sur les antennes (ARY) en vue de détecter de possibles crêtes dépassant un seuil donné coïncidant avec l'arrivée d'un fort signal brouilleur non stationnaire est effectuée, en cas de détection d'une crête supérieure au seuil à un instant $\bar{n}$, l'étape **d)** est modifiée pour toute la durée allant de l'instant $\bar{n}$ à un instant $\bar{n}$ + $\Delta T$ d'un transitoire dévolu au rejet d'un fort signal brouilleur apparu hors du « préambule central », par actualisation des seuls coefficients de pondération

$$\left(\mathbf{w}_{opt}(n)\right)$$

du filtre spatial (BMF) en gardant les échantillons de la réponse impulsionnelle

$$\left(\mathbf{h}_{opt}(n)\right)$$

constants aux valeurs qu'ils ont à l'instant $\bar{n}$, puis l'exécution de l'étape **d)** non modifiée est rétablie à la fin dudit transitoire.

2. Procédé d'égalisation selon la revendication 1, **caractérisé en ce que**, en l'absence d'un fort signal brouilleur non stationnaire, l'étape précédente **d)** est exécutée sous forme analytique complète par les sous-étapes suivantes :

- calcul d'une matrice de covariance spatiale $\mathbf{R}_{yy}$ des signaux provenant des antennes ($\mathbf{y}(n)$), d'une matrice de covariance $\mathbf{R}_{xx}$ des échantillons de données

$$\left(\{x_n\}, \{\hat{x}'_n\}\right),$$

d'une matrice d'intercovariance $\mathbf{R}_{xy}$ entre les échantillons de données et les entrées des antennes

$$\left(\{x_n\}, \mathbf{y}(n)\right),$$

et de la matrice du complément de Schur $\mathbf{R}_s^{\perp} = \mathbf{R}_{xx} - \mathbf{R}_{yy}\mathbf{R}_{yy}^{-1}\mathbf{R}_{xy}^{*}$, * étant le nombre complexe conjugué d'une matrice

$$\mathbf{R} = \begin{bmatrix} \mathbf{R}_{yy} & \mathbf{R}_{xy}^{*} \\ \mathbf{R}_{xy} & \mathbf{R}_{xx} \end{bmatrix};$$

- estimation d'un vecteur propre $\mathbf{h}_{opt}(n)$ de matrice $\mathbf{R}_s^{\perp}$ associé à la valeur propre de plus petit module $\gamma$ donnée par $\mathbf{h}^{*}\mathbf{R}_s^{\perp}\mathbf{h} = -\gamma$, ledit vecteur propre comprenant lesdits échantillons optimisés ;
- estimation desdits coefficients de pondération optimisés par calcul d'un vecteur $\mathbf{w}_{opt}(n)$ solution de l'équation : $\mathbf{R}_{yy}\mathbf{w}_{opt}(n) = \mathbf{R}_{xy}^{*}\mathbf{h}_{opt}(n)$.

3. Procédé d'égalisation selon la revendication 1, **caractérisé en ce que**, en présence d'un fort signal brouilleur non stationnaire, l'étape précédente **d)** est exécutée sous forme analytique complète par les sous-étapes suivantes :

- calcul d'une matrice de covariance spatiale $\mathbf{R}_{yy}(\bar{n} + \Delta T)$ des signaux provenant des antennes ($\mathbf{y}(n)$) et d'une matrice d'intercovariance de nombres complexes conjugués $\mathbf{R}_{xy}^{*}(n)$ entre les échantillons de données et les entrées des antennes

$$\left(\{x_n\}, \mathbf{y}(n)\right),$$

la matrice $\mathbf{R}_{yy}(\bar{n} + \Delta T)$ étant calculée à l'instant $\bar{n}$ et ensuite, gardée constante pendant toute la durée $\Delta T$, en utilisant les vecteurs $\mathbf{y}(n)$ obtenus à partir des échantillons de signaux présents sur les antennes dans les salves mémorisées, à partir de l'instant $\bar{n}$ jusqu'à l'instant $\bar{n} + \Delta T$, tandis que $\mathbf{R}_{xy}^{*}(n)$ est calculée à chaque instant $n^{\text{ième}}$ du transitoire ;
- estimation desdits coefficients de pondération optimisés par calcul d'un vecteur $\mathbf{w}_{opt}(n)$ solution de l'équation : $\mathbf{R}_{yy}(\bar{n} + \Delta T)\mathbf{w}_{opt}(n) = \mathbf{R}_{xy}^{*}(n)\bar{\mathbf{h}}_{opt}$, où $\bar{\mathbf{h}}_{opt}$ est un vecteur comprenant les échantillons de la réponse impulsionnelle à l'instant $\bar{n}$.

4. Procédé d'égalisation selon la revendication 1, **caractérisé en ce que**, en l'absence d'un fort signal brouilleur non stationnaire, l'étape précédente **d)** est exécutée sous forme itérative par les sous-étapes suivantes :

d1) attribution de valeurs arbitraires, de préférence nulles, aux éléments d'une matrice triangulaire structurée $\bar{\mathbf{L}}(n)$, définie comme suit :

$$\overline{\mathbf{L}}(n) = \begin{bmatrix} \mathbf{L}(n) & \mathbf{0} \\ \mathbf{U}(n) & \mathbf{L}_s(n) \end{bmatrix},$$

où $\mathbf{L}(n)$ et $\mathbf{L}_s(n)$ sont des matrices triangulaires et $\mathbf{U}(n)$ est une matrice carrée ou, plus généralement, rectangulaire ;

d2) attribution de valeurs arbitraires, dont une non nulle, aux éléments d'un vecteur $\mathbf{h}_{opt}(n)$ pour mémoriser lesdits échantillons optimisés de la réponse impulsionnelle du canal d'émission ;

d3) attribution de valeurs arbitraires, dont une au moins non nulle, aux éléments d'un vecteur $\mathbf{w}_{opt}(n)$ pour mémoriser lesdits coefficients de pondération du filtre spatial (BMF) ;

d4) actualisation de ladite matrice structurée $\overline{\mathbf{L}}(n)$ appliquant à l'instant $n^{\text{ième}}$ la relation itérative suivante :

$$\begin{bmatrix} \overline{\mathbf{L}}(n) & \mathbf{0} \end{bmatrix} = \begin{bmatrix} \overline{\mathbf{L}}(n-1) & \mathbf{g}_n \end{bmatrix} \mathbf{Q}(n),$$

où $\mathbf{g}_n$ est le vecteur d'actualisation suivant

$$\mathbf{g}_n = \begin{bmatrix} \mathbf{y}(n) \\ \mathbf{x}(n) \end{bmatrix}$$

structuré en deux vecteurs composantes, dont:

$$\mathbf{y}(n) = \begin{bmatrix} y_1(n), y_2(n), \ldots, y_M(n) \end{bmatrix}^T$$

est un premier vecteur dont $M$ éléments sont des symboles provenant de $M$ antennes à l'instant $n^{\text{ième}}$, présents dans un nombre identique de salves mémorisées, et

$$\mathbf{x}(n) = \begin{bmatrix} x_n(n), x_{n+1}(n), \ldots, x_{n+L-1}(n) \end{bmatrix}^T$$

est un second vecteur dont $L$ éléments sont des symboles mémorisés de la séquence respectivement d'apprentissage ou estimée émise

$$\left( \{ x_n \}, \{ \hat{x}'_n \} \right),$$

en supposant une durée de la réponse impulsionnelle égale à $L$ symboles ; $\mathbf{Q}(n)$ étant une transformation matricielle à rotation unitaire, mise en oeuvre au moyen d'une séquence de transformations élémentaires $\mathbf{Q}_0$, $\mathbf{Q}_1, \cdots$, qui, appliquée à

$$\begin{bmatrix} \overline{\mathbf{L}}(n-1) & \mathbf{g}_n \end{bmatrix},$$

produit la suppression de la colonne $\mathbf{g}_n$ en introduisant un zéro pour chaque transformation élémentaire ;

d5) détermination d'un vecteur de pondération $\mathbf{h}_n$ au moyen de l'expression suivante: $\mathbf{L}_s(n)\mathbf{L}_s^*(n)\mathbf{h}_n = \mathbf{h}_{opt}(n-1)$, selon laquelle ledit vecteur des échantillons optimaux est actualisé comme suit :

$$h_{opt}(n) = \frac{h_n}{h_n^* h_n} \; ;$$

d6) actualisation dudit vecteur des coefficients de pondération optimaux au moyen de l'expression suivante : $\mathbf{L}^*(n)\mathbf{w}_{opt}(n) = \mathbf{U}^*(n)\mathbf{h}_{opt}(n)$.

5. Procédé d'égalisation selon la revendication 4, **caractérisé en ce que** ladite expression calculée à l'étape h5) est divisée en deux phases de calcul, en introduisant un vecteur intermédiaire inconnu $\mathbf{u}_n$ défini par la première équation suivante: $\mathbf{L}_s^*(n)\mathbf{h}_n = \mathbf{u}_n$, $\mathbf{u}_n$ étant une solution de la seconde équation suivante: $\mathbf{L}_s(n)\mathbf{u}_n = \mathbf{h}_{opt}(n\text{-}1)$ qui, replacée à son tour dans l'équation de départ, donne $\mathbf{h}_n$, ce qui simplifie le calcul associé.

6. Procédé d'égalisation selon la revendication 4, **caractérisé en ce que** ladite matrice $\bar{\mathbf{L}}(n\text{-}1)$ est multipliée par $\sqrt{\lambda}$, où $\lambda$ est une constante réelle arbitraire, plus petite qu'une unité, choisie en relation avec la non-stationnarité du canal.

7. Procédé d'égalisation adaptative selon la revendication 1, **caractérisé en ce que**, en présence d'un fort signal brouilleur non stationnaire, l'étape précédente **d)** est exécutée sous forme itérative par les sous-étapes suivantes :

h1) actualisation avancée pendant le temps de symbole $\bar{n}$ d'une seule matrice triangulaire $\mathbf{L}$ appartenant à une matrice triangulaire structurée $\bar{\mathbf{L}}(n)$, définie comme suit:

$$\overline{\mathbf{L}}(n) = \begin{bmatrix} \mathbf{L}(\bar{n} + \Delta T) & \mathbf{0} \\ \mathbf{U}(n) & \mathbf{L}_s(n) \end{bmatrix},$$

où $\mathbf{L}(\bar{n} + \Delta T)$ et $\mathbf{L}_s(n)$ sont des matrices triangulaires et $\mathbf{U}(n)$ est une matrice carrée ou, plus généralement, rectangulaire; l'actualisation avancée de ladite matrice $\mathbf{L}$ étant exécutée en utilisant les vecteurs $\mathbf{y}(n)$ obtenus à partir des échantillons de signaux présents sur les antennes, dans les salves mémorisées, à partir de l'instant $\bar{n}$ jusqu'à un instant $\bar{n} + \Delta T$ ; la matrice $\mathbf{L}$ étant calculée à l'instant $\bar{n}$ et étant ensuite gardée constante pour toute la durée de $\Delta T$ ;

h2) de l'instant $\bar{n}$ à un instant $\bar{n} + \Delta T$, actualisation des matrices $\mathbf{U}(n)$ et $\mathbf{L}_s(n)$ de ladite matrice triangulaire $\bar{\mathbf{L}}(n)$ en appliquant à l'instant $n$ième la relation itérative suivante:

$$\begin{bmatrix} \overline{\mathbf{L}}(n) & \mathbf{0} \end{bmatrix} = \begin{bmatrix} \overline{\mathbf{L}}(n-1) & \mathbf{g}_n \end{bmatrix} \mathbf{Q}(n),$$

où $\mathbf{g}_n$ est le vecteur d'actualisation suivant

$$\mathbf{g}_n = \begin{bmatrix} \mathbf{y}(n) \\ \mathbf{x}(n) \end{bmatrix}$$

structuré en deux vecteurs composantes, dont

$$\mathbf{y}(n) = \begin{bmatrix} y_1(n), y_2(n), \ldots, y_M(n) \end{bmatrix}^T$$

est un premier vecteur dont $M$ éléments sont des symboles provenant de $M$ antennes à l'instant $n$-ième, présents dans un nombre identique de salves mémorisées, et

$$\mathbf{x}(n) = \begin{bmatrix} x_n(n), x_{n+1}(n), \ldots, x_{n+L-1}(n) \end{bmatrix}^T$$

est un second vecteur dont *L* éléments font partie de ladite séquence estimée à faible retard

$$\left(\left\{\hat{x}'_n\right\}\right),$$

en supposant une durée de la réponse impulsionnelle égale à *L* symboles ; **Q**(*n*) étant une transformation matricielle à rotation unitaire, mise en oeuvre au moyen d'une séquence de transformations élémentaires **Q**$_0$, **Q**$_1$,···, qui, appliquée à

$$\left[\overline{\mathbf{L}}(n-1) \quad \mathbf{g}_n\right],$$

produit la suppression de la colonne **g**$_n$ en introduisant un zéro pour chaque transformation élémentaire ;

h3) actualisation dudit vecteur des coefficients de pondération optimaux au moyen de l'expression suivante:
$\mathbf{L}^*(\bar{n}+\Delta T)\mathbf{w}_{opt}(n) = \mathbf{U}^*(n)\bar{\mathbf{h}}_{opt}$, où $\bar{\mathbf{h}}_{opt}$ est un vecteur comprenant les échantillons de la réponse impulsionnelle à l'instant $\bar{n}$.

8. Procédé d'égalisation selon la revendication 7, **caractérisé en ce que** ladite actualisation avancée de la seule matrice triangulaire **L** est faite en appliquant ladite transformation élémentaire générique **Q**$_i$ aux premiers *M* éléments de la *i*$^{ième}$ colonne de ladite matrice triangulaire $\bar{\mathbf{L}}$(*n*), où *M* est l'ordre de la matrice **L,** en répétant la transformation élémentaire **Q**$_i$ pour toutes les valeurs d'indice *i* et en mettant en mémoire les transformations survenues.

9. Procédé d'égalisation selon la revendication 7 ou 8, **caractérisé en ce que** ladite matrice $\bar{\mathbf{L}}$(*n*-1) est multipliée par $\sqrt{\lambda}$, où $\lambda$ est une constante réelle arbitraire, plus petite que l'unité, choisie en relation avec la non-stationnarité du canal.

10. Procédé d'égalisation selon l'une quelconque des revendications précédentes, **caractérisé en ce que**, simultanément à tout nouveau symbole de la séquence estimée à faible retard

$$\left(\left\{\hat{x}'_n\right\}\right),$$

les *L* éléments dudit vecteur **x**(*n*) sont remplacés par un nombre identique de symboles copiés comme un tout à partir du trajet sélectionné dans le treillis au temps de symbole courant, empêchant en cela la propagation d'erreurs dans l'estimation conjointe desdits coefficients de pondération optimaux et échantillons de la réponse impulsionnelle du canal

$$\left(\mathbf{w}_{opt}(n), \mathbf{h}_{opt}(n)\right).$$

11. Procédé d'égalisation selon l'une quelconque des revendications précédentes, **caractérisé en ce que**, lorsque ladite séquence d'apprentissage

$$\left(\left\{x_n\right\}\right)$$

est incluse dans une partie médiane de la salve d'émission, ladite égalisation de l'étape **g)** débute à une première extrémité de la partie médiane et se poursuit vers l'extrémité de la salve, précédemment mémorisée et synchronisée, et **en ce qu'**elle recommence à la seconde extrémité de la partie médiane vers l'autre extrémité de la salve, en utilisant les données estimées de la première demi-salve pour avoir un groupe plus long de données estimées pour l'égalisation de la seconde demi-salve.

12. Egaliseur pour récepteurs de stations de base d'un système de radiotéléphonie mobile cellulaire, en particulier

**EP 1 084 536 B1**

pour la suppression de signaux brouilleurs isofréquences dans des signaux reçus par des antennes-réseaux (ARY) de stations de base d'un système de radiotéléphonie mobile cellulaire, lesdits signaux ($\mathbf{y}(n)$) étant reçus sous la forme de salves de symboles de données d'une salve d'émission, comprenant une séquence d'apprentissage

$$\left(\{x_n\}\right)$$

connue du récepteur et utilisable pour estimer la réponse impulsionnelle du canal d'émission, lesdites salves reçues étant démodulées, numérisées, mémorisées et synchronisées par discrimination de la séquence d'apprentissage, comprenant :

- un filtre spatial (BMF) de signaux ($\mathbf{y}(n)$) provenant des antennes qui combine entre eux des $n^{\text{ièmes}}$ symboles correspondants des salves sur la base de $n^{\text{ièmes}}$ coefficients de pondération d'une séquence de coefficients de pondération

$$\left(\mathbf{w}_{opt}(n)\right)$$

pour obtenir une séquence reçue conformée en faisceau

$$\left(\mathbf{y}_{out}(n)\right) ;$$

- un filtre temporel (CAMP) pour filtrer les données d'une séquence d'apprentissage

$$\left(\{x_n\}\right)$$

et estimer une séquence d'échantillons ($\mathbf{h}(n)$) de la réponse impulsionnelle du canal d'émission ;
- des moyens ($\Sigma$) pour calculer une erreur quadratique

$$\left(e_n\right)$$

découlant de la comparaison entre les $n^{\text{ièmes}}$ échantillons correspondants de la réponse impulsionnelle estimée ($\mathbf{h}(n)$) et la séquence conformée en faisceau

$$\left(\mathbf{y}_{out}(n)\right) ;$$

- des moyens (FUNZ) pour réaliser l'optimisation conjointe desdits coefficients de pondération et échantillons

$$\left(\mathbf{w}_{opt}(n), \mathbf{h}_{opt}(n)\right)$$

et pour minimaliser une fonctionnelle (FUNZ) correspondant à ladite erreur quadratique moyenne ($e_n$) ;
- un filtre adapté temporellement (FADAT) du signal

$$\left(y_{out}(n)\right)$$

produit par ledit filtre spatial (BMF), adapté à la séquence d'échantillons

**61**

$$\left(\mathbf{h}_{opt}(n)\right)$$

de la réponse impulsionnelle du canal d'émission ;
- un estimateur de Viterbi (STIM) pour estimer les symboles

$$\left(\{\hat{x}_n\}\right)$$

de la salve d'émission correspondant à la séquence provenant du filtre adapté temporellement (FADAT) ;
- des moyens (DECTEMP) pour remplacer hors de la tranche de temps de la séquence d'apprentissage les symboles de la séquence d'apprentissage

$$\left(\{x_n\}\right)$$

par une séquence estimée à faible retard

$$\left(\{\hat{x}'_n\}\right),$$

en rendant donc ladite égalisation adaptative,

**caractérisé en ce qu'**il comprend par ailleurs :

- des moyens (PICRIV) pour surveiller en continu la puissance reçue sur les antennes (ARY) et pour détecter de possibles crêtes dépassant un seuil donné coïncidant avec l'arrivée d'un fort signal brouilleur non stationnaire ;
- des moyens de sélection (PICSEL, SWT) commandés par lesdits moyens de surveillance continue (PICRIV) adaptés pour sélectionner lesdits moyens (SYSTOL1, 3, 4, 5) pour réaliser l'estimation conjointe des coefficients de pondération et des échantillons, dans le cas où il n'y a pas de détection d'une crête supérieure au seuil, et pour sélectionner des moyens (SYSTOL2, SYSTOL5) dévolus au rejet d'un fort signal brouilleur dans le cas où il y a détection d'une crête supérieure au seuil à un instant $\bar{n}$ hors du « préambule central » ; ces derniers moyens opérant pendant toute la durée allant de l'instant $\bar{n}$ jusqu'à un instant $\bar{n} + \Delta T$ d'un transitoire de rejet et étant agencés pour actualises les seuls coefficients de pondération

$$\left(\mathbf{w}_{opt}(n)\right)$$

du filtre spatial (BMF) en gardant constants les échantillons de la réponse impulsionnelle

$$\left(\mathbf{h}_{opt}(n)\right)$$

aux valeurs qu'ils ont à l'instant $\bar{n}$ ; les moyens précédents d'optimisation conjointe (SYSTOL1, 3, 4, 5) étant restaurés à la fin dudit transitoire de rejet.

13. Egaliseur selon la revendication 12, **caractérisé en ce que**, en l'absence d'un fort signal brouilleur non stationnaire, lesdits moyens d'optimisation conjointe (SYSTOL1, 3, 4, 5) sont constitués des moyens suivants :

- des premiers moyens à retard (RIT) pour retarder d'un retard fixe (D) un vecteur algébrique $\mathbf{y}(n)$ de $M$ éléments, en même nombre que les antennes, dont les éléments sont des symboles des salves mémorisées du signal provenant des antennes ;
- un premier réseau systolique (SYSTOL1 ) recevant ledit vecteur **y**($n$) et des symboles de ladite séquence d'apprentissage

$$\left(\{x_n\}\right)$$

ou des symboles estimés à faible retard, organisés comme dans un vecteur algébrique **x**($n$) de $L$ éléments, égal à la longueur de la réponse impulsionnelle du canal, et actualisant, en concordance avec chaque temps de symbole $n^{\text{ième}}$, une matrice triangulaire

$$\overline{\mathbf{L}}(n) = \begin{bmatrix} \mathbf{L}(n) & \mathbf{0} \\ \mathbf{U}(n) & \mathbf{L}_s(n) \end{bmatrix}$$

image dudit premier réseau systolique (SYSTOL1) dans laquelle les éléments **L**($n$) et **L**$_s$($n$) sont aussi des matrices triangulaires, et **U**($n$) est rectangulaire ou carrée ;
- un deuxième réseau systolique (AUTOVET), ledit deuxième réseau systolique recevant ledit élément **L**$_s$($n$) et actualisant un vecteur **h**$_{opt}$($n$) dont les éléments correspondent aux échantillons optimisés de la réponse impulsionnelle,
- un troisième réseau systolique (SYSTOL5), placé en cascade par rapport au deuxième, recevant lesdits éléments **L**($n$) et **U**($n$), le vecteur **h**$_{opt}$($n$), et actualisant un vecteur **w**$_{opt}$($n$) dont les éléments correspondent aux coefficients de pondération optimisés.

**14.** Egaliseur selon la revendication 12, **caractérisé en ce que**, en présence d'un fort signal brouilleur non stationnaire, lesdits moyens d'optimisation conjointes (SYSTOL2, SYSTOL5) sont constitués des moyens suivants :

- des premiers moyens à retard (RIT) pour retarder d'un retard fixe (D) un vecteur algébrique **y**($n$) de $M$ éléments, en même nombre que les antennes, dont les éléments sont des symboles des salves mémorisées du signal provenant des antennes ;
- un premier réseau systolique (SYSTOL2) recevant ledit vecteur **y**($n$) et les symboles de ladite séquence estimée à faible retard

$$\left(\{\hat{x}'_n\}\right)$$

organisée comme dans un vecteur algébrique **x**($n$) de $L$ éléments, égal à la longueur de la réponse impulsionnelle du canal, et actualisant, en concordance avec chaque temps de symbole $n^{\text{ième}}$, une matrice

$$\overline{\mathbf{L}}(n) = \begin{bmatrix} \mathbf{L}(\overline{n} + \Delta T) & \mathbf{0} \\ \mathbf{U}(n) & \mathbf{L}_s(n) \end{bmatrix}$$

image dudit premier réseau systolique (SYSTOL2) dans laquelle les éléments **L**($n$) et **L**$_s$($n$) sont aussi des matrices triangulaires, et **U**($n$) est une matrice rectangulaire ou carrée ;
- des seconds moyens à retard (FIFO) adaptés pour retarder l'élément **L** calculé à l'instant $\overline{n}$ pour toute la durée de $\Delta T$ ;
- un second réseau systolique (SYSTOL5), placé en cascade par rapport au premier, recevant lesdits éléments **L**($n$) et **U**($n$), un vecteur $\overline{\mathbf{h}}_{opt}$ comprenant les échantillons de la réponse impulsionnelle à l'instant $\overline{n}$, et actualisant un vecteur **w**$_{opt}$($n$) dont les éléments correspondent aux coefficients de pondération optimisés.

**15.** Egaliseur selon la revendication 13 ou 14, **caractérisé en ce que** lesdits vecteurs **y**($n$) et **x**($n$) atteignent en colonne, dans l'ordre indiqué, l'entrée des cellules dudit premier réseau systolique (SYSTOL1, SYSTOL2) correspondant aux éléments de la première colonne de ladite matrice $\bar{\mathbf{L}}(n)$, l'ensemble des cellules de la matrice triangulaire comprenant les moyens pour calculer la relation matricielle suivante :

$$[\alpha \quad out] \leftarrow [\alpha\sqrt{\lambda} \quad in] \frac{1}{\sqrt{1+|\rho|^2}} \begin{bmatrix} 1 & \dot{\rho} \\ \rho^* & -1 \end{bmatrix},$$

où :

- $\alpha$ pointé par la flèche indique le nouveau contenu de la cellule ;
- $\lambda$ est une constante réelle arbitraire $\leq 1$, choisie en relation avec la non-stationnarité du canal ;
- *out* est un signal de sortie ;
- *in* est un signal entrant dans chaque cellule, et
- $\rho$ est un signal à la fois d'entrée et de sortie, calculé comme suit :

$$\rho = \frac{in}{\alpha\sqrt{\lambda}} \; ;$$

les cellules correspondant aux éléments de la principale diagonale de ladite matrice $\bar{\mathbf{L}}(n)$ contenant les autres moyens de calcul, tels que pour le signal $\rho$ est seulement un signal de sortie, le signal *out* est absent et le contenu $\alpha$ est actualisé comme suit:

$$\alpha \leftarrow \sqrt{\lambda|\alpha|^2 + |in|^2} \;.$$

16. Egaliseur selon la revendication 15, **caractérisé en ce que** ledit second réseau systolique (AUTOVET) est par ailleurs divisé en une cascade de deux réseaux systoliques(SYSTOL3, SYSTOL4) de structure triangulaire identique, le réseau d'amont (SYSTOL3) recevant ledit élément $\mathbf{L}_s(n)$ et le précédent vecteur $\mathbf{h}_{opt}(n\text{-}1)$ du réseau d'aval, et calculant un vecteur intermédiaire $\mathbf{u}_n$ pour le fournir au réseau d'aval (SYSTOL4), auquel parvient également l'élément $\mathbf{L}_s^*(n)$, pour le calcul dudit vecteur $\mathbf{h}_{opt}(n)$.

## Fig.1

## Fig. 2

## Fig. 3

**Fig. 4**

**Fig. 5**

**Fig. 6**

**Fig. 7**

**Fig. 8**

Fig 9 a

Fig. 9 b

Fig. 9c

Fig. 9d

**Fig. 10**

**Fig. 11**

**Fig. 12**

input 1 ————
input -1 ·················

state

**Fig. 13**

$-1 -1$

$1 -1$

$-1 \quad 1$

$1 \quad 1$

sequence decided at the instant N+1  | 1 | −1 | −1 | 1 | delay |

sequence decided at the instant N  | 1 | −1 | ① | delay |

decision error

Fig. 14

Fig. 18

Fig. 19

**Fig. 15**

**Fig. 16**

**Fig. 17**

FIG. 20

EP 1 084 536 B1

**Fig. 21**

**Fig. 22**

**Fig. 23**

**Fig. 24**